(19) Europäisches Patentamt / European Patent Office / Office européen des brevets

(11) **EP 4 740 735 A1**

(12) **EUROPEAN PATENT APPLICATION**
published in accordance with Art. 153(4) EPC


(43) Date of publication:
**13.05.2026 Bulletin 2026/20**

(21) Application number: **24835977.0**

(22) Date of filing: **27.06.2024**

(51) International Patent Classification (IPC):
***A01N 53/10** (2006.01)* ***A01M 1/20** (2006.01)*
***A01N 25/18** (2006.01)* ***A01N 25/22** (2006.01)*
***A01P 7/04** (2006.01)* ***C07C 69/747** (2006.01)*

(52) Cooperative Patent Classification (CPC):
**A01M 1/20; A01N 25/18; A01N 25/22; A01N 53/00; A01P 7/04; C07C 69/747**

(86) International application number:
**PCT/JP2024/023373**

(87) International publication number:
**WO 2025/009464 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.07.2023 JP 2023109574**
**04.09.2023 JP 2023143206**



(71) Applicant: **Sumitomo Chemical Company, Limited**
**Tokyo 103-6020 (JP)**

(72) Inventors:
- **TOKUNAGA Takashi**
  **Osaka-shi, Osaka 554-8558 (JP)**
- **YAMADA Noriko**
  **Takarazuka-shi, Hyogo 665-8555 (JP)**
- **SONOBE Fuhito**
  **Takarazuka-shi, Hyogo 665-8555 (JP)**

(74) Representative: **Vossius & Partner**
**Patentanwälte Rechtsanwälte mbB**
**Siebertstraße 3**
**81675 München (DE)**


(54) **COMPOSITION CONTAINING NATURAL PYRETHRIN AND ANTIOXIDANT**


(57) The present invention relates to a composition containing natural pyrethrin and an antioxidant selected from Group P or Group S:
Group P is a group consisting of a compound represented by Formula (1)

[Chemical 1]

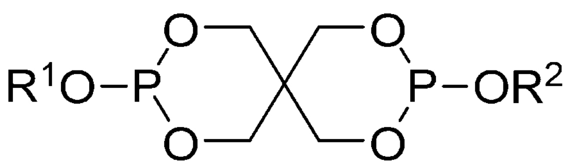

(1)

[In the formula, $R^1$ and $R^2$ are identical to or different from each other, and each represents a C9-C14 alkyl group.], 3,9-bis(2,4-di-tert-butylphenoxy)-2,4,8,10-tetraoxa-3,9-diphosphaspiro[5.5]undecane, tris(nonylphenyl) phosphite, triphenyl phosphite, tetrakis(2,4-di-tert-butylphenyl) 4,4'-biphenylenediphosphinate, tridodecyl trithiophosphite, and the like;
Group S is a group consisting of pentaerythritol tetrakis[3-(dodecylthio)propionate], 2-mercaptobenzimidazole, 2, 4-bis(dodecylthio)methyl]-6-methylphenol, and didodecyl 3,3'-thiodipropionate.


EP 4 740 735 A1

## Description

[Technical Field]

The present invention relates to a composition containing natural pyrethrin and an antioxidant.
This application claims priority to and benefit of Japanese Patent Application No. 2023-109574 filed on July 3, 2023, and Japanese Patent Application No. 2023-143206 filed on September 4, 2023, the entire contents of which are incorporated by reference into this description.

[Background Art]

Due to the increasing consumer preference for natural products, natural pyrethrin has been attracting attention (for example, Patent Literature 1). Although natural pyrethrin is suitably used for insect pest control and the like, it is known that its insect pest controlling effect or storage stability tends to decrease over time due to the instability of its chemical structure.

[Citation List]

[Patent Literature]

[Patent Literature 1] WO2022/220294

[Summary of the Invention]

[Problems to be Solved by the Invention]

An object of the present invention is to provide a novel composition containing natural pyrethrin, which has excellent maintenance of insect pest controlling effects or storage stability.

[Means for Solving the Problems]

The inventors conducted studies to provide a novel composition containing natural pyrethrin. As a result, they found that a composition containing natural pyrethrin and a specific antioxidant has excellent effects, thereby completing the present invention.
The present invention includes, but is not limited to, the following embodiments.

[1] A composition containing natural pyrethrin and one or more phosphorus-based antioxidants selected from Group P or one or more sulfur-based antioxidants selected from Group S (hereinafter referred to as the composition of the present invention) :

Group P is a group consisting of a compound represented by Formula (2)

[Chemical 1]

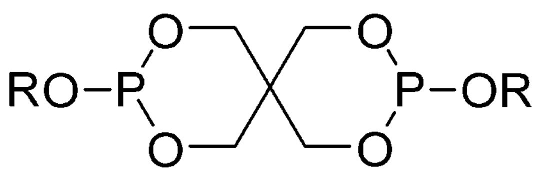

(2)

[In the formula, R represents a C9-C14 alkyl group.], 3,9-bis(2,4-di-tert-butylphenoxy)-2,4,8,10-tetraoxa-3,9-diphosphaspiro[5.5]undecane, tris(nonylphenyl) phosphite, triphenyl phosphite, tetrakis(2,4-di-tert-butylphenyl) 4,4'-biphenylenediphosphinate, tridodecyl trithiophosphite, triisodecyl phosphite, diphenyl isodecyl phosphite, 4,4'-butylidenebis(3-methyl-6-tert-butylphenyl ditridecyl phosphite), and tetra(C12-15 alkyl)-4,4'-isopropylidenediphenyldiphosphite;
Group S is a group consisting of pentaerythritol tetrakis[3-(dodecylthio)propionate], 2-mercaptobenzimidazole, 2,4-bis[(dodecylthio)methyl]-6-methylphenol, and didodecyl 3,3'-thiodipropionate.

[2] The composition according to [1], wherein Group P is a group consisting of 3,9-bis(isodecyloxy)-2,4,8,10-tetraoxa-3,9-diphosphaspiro[5.5]undecane, 3,9-bis(isotridecyloxy)-2,4,8,10-tetraoxa-3,9-diphosphaspiro[5.5]undecane, 3,9-bis(2,4-di-tert-butylphenoxy)-2,4,8,10-tetraoxa-3,9-diphosphaspiro[5.5]undecane, tris(nonylphenyl) phosphite, triphenyl phosphite, tetrakis(2,4-di-tert-butylphenyl) 4,4'-biphenylenediphosphinate, tridodecyl trithiophosphite, triisodecyl phosphite, diphenyl isodecyl phosphite, 4,4'-butylidenebis(3-methyl-6-tert-butylphenyl ditridecyl phosphite), and tetra(C12-15 alkyl)-4,4'-isopropylidenediphenyldiphosphite.
[3] The composition according to [1] or [2], containing a phenolic antioxidant.
[4] The composition according to [1], wherein the one or more phosphorus-based antioxidants selected from Group P or the one or more sulfur-based antioxidants selected from Group S are one or more phosphorus-based antioxidants selected from Group $P^L$ :
Group $P^L$ is a group consisting of triisodecyl phosphite, diphenyl isodecyl phosphite, and 4,4'-butylidenebis(3-methyl-6-tert-butylphenyl ditridecyl phosphite).
[5] The composition according to [4], containing a phenolic antioxidant.
[6] An insect pest controlling formulation for heat-transpiration, containing the composition according to [4] or [5] and a paraffinic solvent.
[7] A method for controlling mosquitoes, using the composition according to any one of [4] or [5] or the insect pest controlling formulation for heat-transpiration according to [6].
[8] The composition according to [1], wherein the one or more phosphorus-based antioxidants selected from Group P or the one or more sulfur-based antioxidants selected from Group S are tetra(C12-15 alkyl)-4,4'-isopropylidenediphenyldiphosphite.
[9] The composition according to [8], containing a phenolic antioxidant.

The present invention further includes, but is not limited to, the following embodiments.

<1> A composition containing natural pyrethrin and one or more phosphorus-based antioxidants selected from Group P or one or more sulfur-based antioxidant selected from Group S:

Group P is a group consisting of a compound represented by Formula (1)

[Chemical 2]

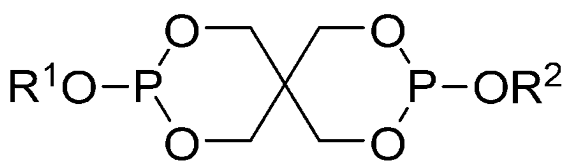

(1)

[In the formula, $R^1$ and $R^2$ are identical to or different from each other, and each represents a C9-C14 alkyl group.], 3,9-bis(2,4-di-tert-butylphenoxy)-2,4,8,10-tetraoxa-3,9-diphosphaspiro[5.5]undecane, tris(nonylphenyl) phosphite, triphenyl phosphite, tetrakis(2,4-di-tert-butylphenyl) 4,4'-biphenylenediphosphinate, tridodecyl trithiophosphite, triisodecyl phosphite, diphenyl isodecyl phosphite, 4,4'-butylidenebis(3-methyl-6-tert-butylphenyl ditridecyl phosphite), and tetra(C12-15 alkyl)-4,4'-isopropylidenediphenyldiphosphite;
Group S is a group consisting of pentaerythritol tetrakis[3-(dodecylthio)propionate], 2-mercaptobenzimidazole, 2,4-bis[(dodecylthio)methyl]-6-methylphenol, and didodecyl 3,3'-thiodipropionate.

<2> The composition according to <1>, wherein Group P is a group consisting of 3,9-bis(isodecyloxy)-2,4,8,10-tetraoxa-3,9-diphosphaspiro[5.5]undecane, 3,9-bis(isotridecyloxy)-2,4,8,10-tetraoxa-3,9-diphosphaspiro[5.5]undecane, 3,9-bis(2,4-di-tert-butylphenoxy)-2,4,8,10-tetraoxa-3,9-diphosphaspiro[5.5]undecane, tris(nonylphenyl) phosphite, triphenyl phosphite, tetrakis(2,4-di-tert-butylphenyl) 4,4'-biphenylenediphosphinate, tridodecyl trithiophosphite, triisodecyl phosphite, diphenyl isodecyl phosphite, 4,4'-butylidenebis(3-methyl-6-tert-butylphenyl ditridecyl phosphite), and tetra(C12-15 alkyl)-4,4'-isopropylidenediphenyldiphosphite.
<3> The composition according to <1> or <2>, containing a phenolic antioxidant.
<4> The composition according to <1>, wherein the one or more phosphorus-based antioxidants selected from Group P or the one or more sulfur-based antioxidants selected from Group S are one or more phosphorus-based antioxidants selected from Group $P^L$ :
Group $P^L$ is a group consisting of triisodecyl phosphite, diphenyl isodecyl phosphite, and 4,4'-butylidenebis(3-methyl-6-tert-butylphenyl ditridecyl phosphite).

<5> The composition according to <4>, containing a phenolic antioxidant.

<6> An insect pest controlling formulation for heat-transpiration, containing the composition according to <4> or <5> and a paraffinic solvent.

<7> A method for controlling mosquitoes, using the composition according to <4> or <5> or the insect pest controlling formulation for heat-transpiration according to <6>.

<8> The composition according to <1>, wherein the one or more phosphorus-based antioxidants selected from Group P or the one or more sulfur-based antioxidants selected from Group S are one or more phosphorus-based antioxidants selected from Group $P^M$ :

Group $P^M$ is a group consisting of triisodecyl phosphite, diphenyl isodecyl phosphite, 4,4'-butylidenebis(3-methyl-6-tert-butylphenyl ditridecyl phosphite), and tetra(C12-15 alkyl)-4,4'-isopropylidenediphenyldiphosphite.

<9> The composition according to <8>, containing a phenolic antioxidant.

<10> The composition according to <1>, wherein the one or more phosphorus-based antioxidants selected from Group P or the one or more sulfur-based antioxidants selected from Group S are the compound represented by Formula (1).

<11> The composition according to <1>, wherein the one or more phosphorus-based antioxidants selected from Group P or the one or more sulfur-based antioxidants selected from Group S are 3,9-bis(isodecyloxy)-2,4,8,10-tetraoxa-3,9-diphosphaspiro[5.5]undecane or 3,9-bis(isotridecyloxy)-2,4,8,10-tetraoxa-3,9-diphosphaspiro[5.5]undecane.

<12> The composition according to <1>, wherein the one or more phosphorus-based antioxidants selected from Group P or the one or more sulfur-based antioxidants selected from Group S are one or more phosphorus-based antioxidants selected from Group $P^U$ or one or more sulfur-based antioxidants selected from Group S :

Group $P^U$ is a group consisting of 3,9-bis(isodecyloxy)-2,4,8,10-tetraoxa-3,9-diphosphaspiro[5.5]undecane, 3,9-bis(2,4-di-tert-butylphenoxy)-2,4,8,10-tetraoxa-3,9-diphosphaspiro[5.5]undecane, tris(nonylphenyl) phosphite, triphenyl phosphite, tetrakis(2,4-di-tert-butylphenyl) 4,4'-biphenylenediphosphinate, and tridodecyl trithiophosphite.

<13> The composition according to <12>, wherein the one or more phosphorus-based antioxidants selected from Group P or the one or more sulfur-based antioxidants selected from Group S are one or more phosphorus-based antioxidants selected from Group $P^U$.

<14> The composition according to <12>, wherein the one or more phosphorus-based antioxidants selected from Group P or the one or more sulfur-based antioxidants selected from Group S are one or more sulfur-based antioxidants selected from Group S.

<15> The composition according to <14>, wherein the one or more sulfur-based antioxidants selected from Group S are pentaerythritol tetrakis[3-(dodecylthio)propionate], 2-mercaptobenzimidazole, or 2,4-bis[(dodecylthio)methyl]-6-methylphenol.

<16> The composition according to any one of <12> to <15>, containing a phenolic antioxidant.

<17> The composition according to any one of <12> to <15>, containing citric acid.

<18> The composition according to <16>, containing citric acid.

[Effects of the Invention]

According to the present invention, it is possible to provide a novel composition containing natural pyrethrin, which has excellent maintenance of insect pest controlling effects or storage stability.

[Brief Description of Drawings]

[Figure 1] Figure 1 is a cross-sectional view of a heat-transpiring insecticidal device using a chemical liquid bottle.

[Figure 2] Figure 2 is a perspective view of a heat-transpiring insecticidal device using an insect pest control mat.

[Figure 3] Figure 3 is a perspective view of an insect-repelling device equipped with a resin formulation.

[Mode for Carrying Out the Invention]

Natural pyrethrin used in the invention contains six types of compounds as active ingredients: Pyrethrin I, Pyrethrin II, Cinerin I, Cinerin II, Jasmoline I, and Jasmoline II.

Natural pyrethrin is typically obtained as an extracted essence or dried pyrethrum powder which can be obtained by picking only flower calyx part of pyrethrum (Dalmatian chrysanthemum, scientific name: Tanacetum cinerariifolium or Chrysanthemum cinerariaefolium), followed by drying and grinding to obtain powder, and then extracting with solvents suitable for dissolving active ingredients, for example, organic solvent such as methanol. In addition to the six compounds

mentioned above, natural pyrethrin may also contain plant-derived impurities (such as fatty acids and flavonoids). As the plants from which the natural pyrethrin can be obtained, besides the aforementioned Dalmatian chrysanthemum, Pot Marigold (Calendula officinalis), pyrethum daisy (Chrysanthemum coccinum), Aztec marigold (Tagetes erecta), Southern Cone Marigold (Tagetes minuta), Common zinnia (Zinnia elegans), creeping zinnia (Zinia linnearis) and the like are also known (Reference literature 1: Adnane. H. Alain, C. & Chantal, B. 2000. The Production of Pyrethrins by Plant Cell and Tissue Cultures of Chrysanthemum cinerariaefolium and Tagetes Species. Critical Reviews in Plant Sciences, 19(1):69-89, Reference literature 2: Kudakasseril, G. J. and Staba, E. J. 1988. Insecticidal phytochemicals. In: Cell Culture and Somatic Cell Genetics of Plants. pp. 537-552. Constabel, F. and Vasil, I. K., Eds., Academic Press, New York., Reference literature 3: John E. Casida, Gary B. Quistad. 1995. PYRETHRUM FLOWERS, Production, Chemistry, Toxicology, and Uses. pp.123-125, Oxford University Press.).

As natural pyrethrin used for the present invention, plant species and varieties which are its sources are not limited to those mentioned above. The cultivation method, cultivation conditions (weather, production area, soil properties, etc.), harvest season, harvest site, harvest method, washing method, extraction method and purification method of said plants are not particularly limited. Examples of natural pyrethrins used for the present invention include natural pyrethrins obtained using vectors to which genes encoding pyrethrin biosynthetic enzymes has been incorporated.

The weight ratio of the six compounds of pyrethrin I, pyrethrin II, cinerin I, cinerin II, jasmolin I, and jasmolin II in natural pyrethrin is not particularly limited, and each compound can be within the range of 0.001 to 99% by weight relative to the total amount of the natural pyrethrin to set any weight ratios, however typically, they are contained at the weight ratio of 10 to 70% by weight of pyrethrin I, 10 to 70% by weight of pyrethrin II, 1 to 20% by weight of cinerin I, 1 to 20% by weight of cinerin II, 1 to 20% by weight of jasmolin I, and 1 to 20% by weight of jasmolin II, relative to the total amount of the natural pyrethrin.

Specifically, the following mixing ratios (weight ratios) can be exemplified, for example, [pyrethrin I: cinerin I: jasmolin I: pyrethrin II: cinerin II: jasmolin II]=38.0:7.3:4.0:35.0:11.7:4.0 (Reference literature 3) can be given.

As natural pyrethrin, in terms of pyrethrins I (total amount of pyrethrin I, cinerin I and jasmolin I) and pyrethrins II (total amount of pyrethrin II, cinerin II, jasmolin II), that contains 20 to 40% by weight of pyrethrins I and 12 to 31% by weight of pyrethrins II relative to the total amount of natural pyrethrin can be exemplified, and the total content of pyrethrins I and pyrethrins II is typically 10 to 99% by weight, preferably 15 to 90% by weight, more preferably 20 to 85% by weight. Examples of such natural pyrethrin include usually those having pyrethrins I content (% by weight) of 20 to 40% and pyrethrins II content (% by weight) of 12 to 31%.

Phosphorus-based antioxidants will be explained below.

Examples of compounds represented by Formula (1) include 3,9-bis(isodecyloxy)-2,4,8,10-tetraoxa-3,9-diphosphaspiro[5.5]undecane and 3,9-bis(isotridecyloxy)-2,4,8,10-tetraoxa-3,9-diphosphaspiro[5.5]undecane. 3,9-bis(isodecyloxy)-2,4,8,10-tetraoxa-3,9-diphosphaspiro[5.5]undecane is commercially available as, for example, JPE-10 (manufactured by Johoku Chemical Co., Ltd.). 3,9-bis(isotridecyloxy)-2,4,8,10-tetraoxa-3,9-diphosphaspiro[5.5]undecane is commercially available as, for example, JPE-13R (manufactured by Johoku Chemical Co., Ltd.).

3, 9-bis (2, 4-di-tert-butylphenoxy) -2, 4, 8, 10-tetraoxa-3,9-diphosphaspiro[5.5]undecane is commercially available as, for example, a product from Tokyo Chemical Industry Co., Ltd., or ADEKASTAB PEP24 (manufactured by ADEKA Corporation).

Tris(nonylphenyl) phosphite is commercially available as, for example, JP-351 (manufactured by Johoku Chemical Co., Ltd.).

Triphenyl phosphite is commercially available as, for example, triphenyl phosphite (manufactured by Tokyo Chemical Industry Co., Ltd.), or ADEKASTAB TPP (manufactured by ADEKA Corporation).

Tetrakis(2,4-di-tert-butylphenyl) 4,4'-biphenylenediphosphinate is commercially available as, for example, HOSTANOX (trademark) P-EPQ (trademark) (manufactured by Clariant Plastics & Coatings (JAPAN) K.K.).

Tridodecyl trithiophosphite is commercially available as, for example, JPS-312 (manufactured by Johoku Chemical Co., Ltd.).

Triisodecyl phosphite is commercially available as, for example, ADEKASTAB 3010 (manufactured by ADEKA Corporation).

Diphenyl isodecyl phosphite is commercially available as, for example, ADEKASTAB 135A (manufactured by ADEKA Corporation).

4,4'-butylidenebis(3-methyl-6-tert-butylphenyl ditridecyl phosphite) is commercially available as, for example, JPH-1200 (manufactured by Johoku Chemical Co., Ltd.).

Tetra (C12-15 alkyl)-4,4'-isopropylidenediphenyldiphosphite is commercially available as, for example, ADEKASTAB 1500 (manufactured by ADEKA Corporation).

Sulfur-based antioxidants will be explained below.

Pentaerythritol tetrakis[3-(dodecylthio)propionate] is commercially available as, for example, Sumilizer (trademark) TP-D (manufactured by Sumitomo Chemical Co., Ltd.) and ADEKASTAB AO-412S (manufactured by ADEKA Corporation).

2-Mercaptobenzimidazole is commercially available as a product from Tokyo Chemical Industry Co., Ltd.

2,4-bis[(dodecylthio)methyl]-6-methylphenol is commercially available as, for example, Irganox (trademark) 1726 (manufactured by BASF Japan Ltd.).

Didodecyl 3,3'-thiodipropionate is commercially available as a product from Tokyo Chemical Industry Co., Ltd.

The composition of the present invention may contain a phenolic antioxidant. Examples of such phenolic antioxidants include 2,6-di-tert-butyl-4-methylphenol (hereinafter sometimes abbreviated as BHT), butylated hydroxyanisole (hereinafter sometimes abbreviated as BHA), and 2,2'-methylene-bis(6-tert-butyl-4-methylphenol), 2,2'-methylene-bis(6-tert-butyl-4-methylphenol) or BHT is preferable, and BHT is especially preferable. BHT and BHA are commercially available, for example, from Kanto Chemical Co., Inc. 2,2'-methylene-bis(6-tert-butyl-4-methylphenol) is commercially available as Sumilizer (trademark) MDP-S.

The composition of the present invention can be applied to below-mentioned insect pest controlling formulations for heat-transpiration, formulations for insect pest control mat, resin formulations, or manufacturing use products (Manufacturing use product is also referred to as 'MUP'), and the like.

<Insect Pest Controlling Formulation for Heat-transpiration>

One embodiment of the present invention is a insect pest controlling formulation for heat-transpiration containing natural pyrethrin and an antioxidant.

The insect pest controlling formulation for heat-transpiration according to one embodiment of the present invention is a formulation that can be used in a heat-transpiring insecticidal device 100 as shown in, for example, Figure 1. A solution 1 containing a composition for heat-transpiration is filled in a chemical liquid bottle 4. In this description, a composition suitably used for an insect pest controlling formulation for heat-transpiration applied to a heat-transpiring insecticidal device using a chemical liquid bottle may be referred to as a composition for heat-transpiration. A part of a liquid-absorbing wick 3 is immersed in the solution 1 to make the liquid-absorbing wick absorb the solution containing the composition for heat-transpiration, and the upper part of the liquid-absorbing wick is arranged so that it can be heated by a heating element 2. By indirectly heating the upper part of the liquid-absorbing wick to a temperature of about 60°C to about 150°C with the heating element 2, the composition for heat-transpiration absorbed by the liquid-absorbing wick can be transpired into the atmosphere, thereby controlling insect pests. The insect pest controlling formulation for heat-transpiration according to one embodiment of the present invention is not limited to the device shown in Figure 1, but can also be applied to conventionally known heat-transpiring insecticidal devices, all of which can exhibit excellent effects. Heat-transpiring insecticidal devices to which the insect pest controlling formulation for heat-transpiration of the present invention can be applied are also described, for example, in Japanese Examined Patent Application Publication No. Sho52-12106, Japanese Unexamined Utility Model (Registration) Application Publication No. Sho58-45670, and Japanese Unexamined Patent Application Publication No. 2012-176947.

In the insect pest controlling formulation for heat-transpiration of the present invention, a composition containing natural pyrethrin and an antioxidant (also referred to as a composition for heat-transpiration) is prepared and used in the form of a solution containing the composition (solution 1).

As a solvent (also referred to as a solvating medium) for preparing the insect pest controlling formulation for heat-transpiration, a lipid solvent or an aqueous solvent is used. Dissolving a composition for heat-transpiration in these solvents can make an insect pest controlling formulation for heat-transpiration.

When using a lipid solvent, typically a lipid solvent with a boiling point of 350°C or lower is used. As such lipid solvents, various organic solvents, typically hydrocarbon solvents, can be used, but aliphatic hydrocarbon solvents having a boiling point range of 150-350°C (paraffinic solvents, unsaturated aliphatic hydrocarbon solvents, or mixtures thereof) is particularly preferable. Examples of such solvents include paraffinic solvents such as n-paraffin and isoparaffin; deodorized kerosene; and sewing machine oil (for example, SEWINGLUBE (manufactured by ENEOS Corporation)), and among them, paraffinic solvents are especially preferable. Specific examples of paraffinic solvents include 0-Solvent H (manufactured by ENEOS Corporation), 0-Solvent M (manufactured by ENEOS Corporation), 0-Solvent L (manufactured by ENEOS Corporation), IP Solvent 2028 (manufactured by Idemitsu Kosan Co., Ltd.), Norpar 12 (manufactured by Exxon Mobil Corporation), Norpar 13 (manufactured by Exxon Mobil Chemical Corporation), Norpar 15 (manufactured by Exxon Mobil Corporation), Isopar M (manufactured by Exxon Mobil Corporation), Isopar L (manufactured by Exxon Mobil Corporation), Isopar V (manufactured by Exxon Mobil Corporation), and Isopar G (manufactured by Exxon Mobil Corporation).

Examples of organic solvents other than hydrocarbon solvents include glycerin, propylene glycol, methanol, acetone, xylene, chlorothene, isopropanol, and chloroform.

When using an aqueous solvent, typically glycol ethers and water are used. Examples of such glycol ethers include ethylene glycol-based ethers, propylene glycol-based ethers, and dialkyl glycol-based ethers, and ethylene glycol-based ethers are preferably used. Among ethylene glycol-based ethers, ethylene glycol monobutyl ether, diethylene glycol monobutyl ether, propylene glycol monomethyl ether, propylene glycol monoethyl ether, and propylene glycol

monopropyl ether are preferred. Glycol ethers may be used singly or as mixtures of two or more. The mass ratio of glycol ether to water is usually in the range of 1:0.4 to 1:8.5, preferably in the range of 1:1 to 1:8.5, and more preferably in the range of 1:1.4 to 1:3.6.

The above-mentioned solvent may further contain an auxiliary solvent (also referred to as an auxiliary solvating medium). Examples of auxiliary solvents include diisopropyl adipate, diisodecyl adipate, diisobutyl adipate, isopropyl myristate, isopropanol, benzyl acetate, cellulose nanofiber, ethanol, sucrose fatty acid ester, sorbitan fatty acid ester, propylene carbonate, 1,3-butylene glycol, and polyoxyethylene hydrogenated castor oil. As auxiliary solvents, solvents different from the aforementioned solvents to be used may be selected. For example, when a paraffinic solvent is used as the aforementioned solvent, diisopropyl adipate or isopropyl myristate is preferable as an auxiliary solvent.

The content of the solvent in the insect pest controlling formulation for heat-transpiration is usually 65 to 99.96% by mass, and preferably 80 to 98.5% by mass, relative to the total amount of the insect pest controlling formulation for heat-transpiration. If the insect pest controlling formulation for heat-transpiration further contains auxiliary solvent(s), the content of the auxiliary solvent(s) is usually 5 to 30% by mass, and may be preferably 10 to 25% by mass, relative to the total amount of the insect pest controlling formulation for heat-transpiration.

The insect pest controlling formulation for heat-transpiration is prepared so that the concentration of the composition containing natural pyrethrin and an antioxidant (also referred to as the composition for heat-transpiration) in the formulation is usually about 1 to 50% by mass, preferably about 1 to 40% by mass, and more preferably about 4 to 15% mass, relative to the total amount of the insect pest controlling formulation for heat-transpiration. Here, the sum of the content (content percentage) of the solvent and the concentration of the composition for heat-transpiration does not exceed 100% by mass. If an auxiliary solvent is further contained, the sum of the content (content percentage) of the solvent, the content of the auxiliary solvent, and the concentration of the composition for heat-transpiration does not exceed 100% by mass.

In the insect pest controlling formulation for heat-transpiration of the present invention, thickeners, surfactants, stabilizers, preservatives, or synergists may also be contained as other components.

In the insect pest controlling formulation for heat-transpiration of the present invention, one embodiment of a composition containing natural pyrethrin and a phosphorus-based antioxidant (also referred to as a composition for heat-transpiration) is a composition containing natural pyrethrin and one or more phosphorus-based antioxidants selected from the group consisting of triisodecyl phosphite, diphenyl isodecyl phosphite, and 4,4'-butylidenebis(3-methyl-6-tert-butylphenyl ditridecyl phosphite).

Another embodiment of the composition containing natural pyrethrin and a phosphorus-based antioxidant (also referred to as the composition for heat-transpiration) is a composition containing natural pyrethrin and one or more phosphorus-based antioxidants selected from the group consisting of 3,9-bis(isotridecyloxy)-2,4,8,10-tetraoxa-3,9-diphosphaspiro[5.5]undecane, 3,9-bis(isodecyloxy)-2,4,8,10-tetraoxa-3,9-diphosphaspiro[5.5]undecane, 3,9-bis(2,4-di-tert-butylphenoxy)-2,4,8,10-tetraoxa-3,9-diphosphaspiro[5.5]undecane, tris(nonylphenyl) phosphite, triphenyl phosphite, tetrakis(2,4-di-tert-butylphenyl) 4,4'-biphenylenediphosphinate, tridodecyl trithiophosphite, and tetra(C12-15 alkyl)-4,4'-isopropylidenediphenyldiphosphite.

Yet another embodiment of the composition containing natural pyrethrin and a phosphorus-based antioxidant (also referred to as the composition for heat-transpiration) is a composition further containing a phenolic antioxidant such as BHT.

One embodiment of the composition for heat-transpiration of the present invention is a composition containing, per 0.6 parts by mass of natural pyrethrin, 0.01 to 10 parts by mass, preferably 0.01 to 5 parts by mass, more preferably 0.1 to 4 parts by mass of phosphorus-based antioxidant(s), and 0 to 10 parts by mass, 0.01 to 10 parts by mass, preferably 0 to 8 parts by mass, 0.5 to 8 parts by mass, more preferably 0 to 7 parts by mass, 1 to 7 parts by mass of phenolic antioxidant(s) such as BHT.

Another embodiment of the composition for heat-transpiration of the present invention is a composition containing, per 0.6 parts by mass of natural pyrethrin, 0.01 ot 10 parts by mass, preferably 0.01 to 5 parts by mass, more preferably 0.01 to 4 parts by mass of triisodecyl phosphite, and 0 to 10 parts by mass, 0.01 to 10 parts by mass, preferably 0 to 8 parts by mass, 0.5 to 8 parts by mass, more preferably 0 to 7 parts by mass, 1 to 7 parts by mass of BHT.

Yet another embodiment of the composition for heat-transpiration of the present invention is a composition containing, per 0.6 parts by mass of natural pyrethrin, 0.01 to 4 parts by mass of triisodecyl phosphite and 0 to 7 parts by mass of BHT.

Yet another embodiment of the composition for heat-transpiration of the present invention is a composition containing, per 0.6 parts by mass of natural pyrethrin, 0.01 to 4 parts by mass of triisodecyl phosphite and 1 to 7 parts by mass of BHT.

Yet another embodiment of the composition for heat-transpiration of the present invention is a composition containing, per 0.6 parts by mass of natural pyrethrin, 0.01 to 10 parts by mass of diphenyl isodecyl phosphite and 0 to 10 parts by mass of BHT.

Yet another embodiment of the composition for heat-transpiration of the present invention is a composition

containing, per 0.6 parts by mass of natural pyrethrin, 0.01 to 10 parts by mass, preferably 0.01 to 3 parts by mass, more preferably 0.1 to 2 parts by mass of 4,4'-butylidenebis(3-methyl-6-tert-butylphenyl ditridecyl phosphite), and 0 to 10 parts by mass, 0.01 to 10 parts by mass, preferably 0 to 8 parts by mass, 0.5 to 8 parts by mass, more preferably 0 to 7 parts by mass, 1 to 7 parts by mass of BHT.

Yet another embodiment of the composition for heat-transpiration of the present invention is a composition containing, per 0.6 parts by mass of natural pyrethrin, 0.1 to 2 parts by mass of 4,4'-butylidenebis(3-methyl-6-tert-butylphenyl ditridecyl phosphite), and 0 to 7 parts by mass of BHT.

Yet another embodiment of the composition for heat-transpiration of the present invention is a composition containing, per 0.6 parts by mass of natural pyrethrin, 0.1 to 2 parts by mass of 4,4'-butylidenebis(3-methyl-6-tert-butylphenyl ditridecyl phosphite), and 1 to 7 parts by mass of BHT.

Yet another embodiment of the composition for heat-transpiration of the present invention is a composition containing, per 0.6 parts by mass of natural pyrethrin, 0.01 to 10 parts by mass of 3,9-bis(isotridecyloxy)-2,4,8,10-tetraoxa-3,9-diphosphaspiro[5.5]undecane, and 0 to 10 parts by mass of BHT.

Yet another embodiment of the composition for heat-transpiration of the present invention is a composition containing, per 0.6 parts by mass of natural pyrethrin, 0.01 to 10 parts by mass of 3,9-bis(isodecyloxy)-2,4,8,10-tetraoxa-3,9-diphosphaspiro[5.5]undecane, and 0 to 10 parts by mass of BHT.

Yet another embodiment of the composition for heat-transpiration of the present invention is a composition containing, per 0.6 parts by mass of natural pyrethrin, 0.01 to 10 parts by mass of 3,9-bis(2,4-di-tert-butylphenoxy)-2,4,8,10-tetraoxa-3,9-diphosphaspiro[5.5]undecane, and 0 to 10 parts by mass of BHT.

Yet another embodiment of the composition for heat-transpiration of the present invention is a composition containing, per 0.6 parts by mass of natural pyrethrin, 0.01 to 10 parts by mass of tris(nonylphenyl) phosphite, and 0 to 10 parts by mass of BHT.

Yet another embodiment of the composition for heat-transpiration of the present invention is a composition containing, per 0.6 parts by mass of natural pyrethrin, 0.01 to 10 parts by mass of triphenyl phosphite, and 0 to 10 parts by mass of BHT.

Yet another embodiment of the composition for heat-transpiration of the present invention is a composition containing, per 0.6 parts by mass of natural pyrethrin, 0.01 to 10 parts by mass of tetrakis(2,4-di-tert-butylphenyl) 4,4'-biphenylenediphosphinate, and 0 to 10 parts by mass of BHT.

Yet another embodiment of the composition for heat-transpiration of the present invention is a composition containing, per 0.6 parts by mass of natural pyrethrin, 0.01 to 10 parts by mass of tridodecyl trithiophosphite, and 0 to 10 parts by mass of BHT.

Yet another embodiment of the composition for heat-transpiration of the present invention is a composition containing, per 0.6 parts by mass of natural pyrethrin, 0.01 to 10 parts by mass of tetra(C12-15 alkyl)-4,4'-isopropylidenediphenyldiphosphite, and 0 to 10 parts by mass of BHT.

In the insect pest controlling formulation for heat-transpiration of the present invention, examples of aspects of compositions containing natural pyrethrin and a phosphorus-based antioxidant (also referred to as compositions for heat-transpiration) include the following: [Aspect L1] A composition containing natural pyrethrin and triisodecyl phosphite.

In the insect pest controlling formulation for heat-transpiration of the present invention, examples of compositions containing natural pyrethrin, a phenolic antioxidant, and a phosphorus-based antioxidant (also referred to as compositions for heat-transpiration) include the following:

[Aspect LB1] A composition containing natural pyrethrin, a phenolic antioxidant, and triisodecyl phosphite.
[Aspect LB2] A composition containing natural pyrethrin, BHT, and triisodecyl phosphite.
[Aspect LB3] A composition containing 0.6 parts by mass of natural pyrethrin, 5 parts by mass of BHT, and 2 parts by mass of triisodecyl phosphite.
[Aspect LB4] A composition containing 0.6 parts by mass of natural pyrethrin, 0.5 parts by mass of BHT, and 0.5 parts by mass of triisodecyl phosphite.

One embodiment of the insect pest controlling formulation for heat-transpiration of the present invention is such that, relative to the total amount of the insect pest controlling formulation for heat-transpiration, the content of natural pyrethrin is 0.01 to 45% by mass, preferably 0.05 to 10% by mass, more preferably 0.1 to 1% by mass; the content of phosphorus-based antioxidant(s) is 0.01 to 10% by mass, preferably 0.01 to 5% by mass, more preferably 0.01 to 4% by mass; the content of phenolic antioxidant(s) such as BHT is 0 to 10% by mass, 0.01 to 10% by mass, preferably 0 to 8% by mass, 0.5 to 8% by mass, more preferably 0 to 7% by mass, 1 to 7% by mass; and the content of solvent (s) such as paraffinic solvents is 55 to 99.98% by mass, preferably 79 to 99.9% by mass, more preferably 85 to 99.9% by mass. Here, the sum of the content of natural pyrethrin, phosphorus-based antioxidant(s), phenolic antioxidant(s) such as BHT, and solvent (s) such as paraffinic solvents does not exceed 100% by mass.

Another embodiment of the insect pest controlling formulation for heat-transpiration of the present invention is

such that, relative to the total amount of the insect pest controlling formulation for heat-transpiration, the content of natural pyrethrin is 0.01 to 45% by mass, preferably 0.05 to 10% by mass, more preferably 0.1 to 1% by mass; the content of triisodecyl phosphite is 0.01 to 10% by mass, preferably 0.01 to 5% by mass, more preferably 0.01 to 4% by mass; the content of BHT is 0 to 10% by mass, 0.01 to 10% by mass, preferably 0 to 8% by mass, 0.5 to 8% by mass, more preferably 0 to 7% by mass, 1 to 7% by mass; and the content of paraffinic solvent(s) (for example, Isopar G, Isopar M, Isopar L, or mixtures thereof) is 55 to 99.98% by mass, preferably 79 to 99.9% by mass, more preferably 88 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 1% by mass; the content of triisodecyl phosphite is 0.01 to 4% by mass; the content of BHT is 0 to 7% by mass; and the content of paraffinic solvent(s) (for example, Isopar G, Isopar M, Isopar L, or mixtures thereof) is 88 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 1% by mass; the content of triisodecyl phosphite is 0.01 to 4% by mass; the content of BHT is 1 to 7% by mass; and the content of paraffinic solvent (s) (for example, Isopar G, Isopar M, Isopar L, or mixtures thereof) is 88 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 45% by mass, preferably 0.05 to 10% by mass, more preferably 0.1 to 1% by mass; the content of diphenyl isodecyl phosphite is 0.01 to 10% by mass; the content of BHT is 0 to 10% by mass; and the content of paraffinic solvent(s) (for example, Isopar G, Isopar M, Isopar L, or mixtures thereof) is 55 to 99.98% by mass, preferably 79 to 99.9% by mass, more preferably 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 1% by mass; the content of diphenyl isodecyl phosphite is 0.01 to 10% by mass; the content of BHT is 0 to 10% by mass; and the content of paraffinic solvent(s) (for example, Isopar G, Isopar M, Isopar L, or mixtures thereof) is 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.01 to 45% by mass, preferably 0.05 to 10% by mass, more preferably 0.1 to 1% by mass; the content of 4,4'-butylidenebis(3-methyl-6-tert-butylphenyl ditridecyl phosphite) is 0.01 to 10% by mass, preferably 0.01 to 3% by mass, more preferably 0.1 to 2% by mass; the content of BHT is 0 to 10% by mass, 0.01 to 10% by mass, preferably 0 to 8% by mass, 0.5 to 8% by mass, more preferably 0 to 7% by mass, 1 to 7% by mass; and the content of paraffinic solvent(s) (for example, Isopar G, Isopar M, Isopar L, or mixtures thereof) is 55 to 99.98% by mass, preferably 79 to 99.9% by mass, more preferably 90 to 99.8% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 1% by mass; the content of 4,4'-butylidenebis(3-methyl-6-tert-butylphenyl ditridecyl phosphite) is 0.1 to 2% by mass; the content of BHT is 0 to 7% by mass; and the content of paraffinic solvent(s) (for example, Isopar G, Isopar M, Isopar L, or mixtures thereof) is 90 to 99.8% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 1% by mass; the content of 4,4'-butylidenebis(3-methyl-6-tert-butylphenyl ditridecyl phosphite) is 0.1 to 2% by mass; the content of BHT is 1 to 7% by mass; and the content of paraffinic solvent(s) (for example, Isopar G, Isopar M, Isopar L, or mixtures thereof) is 90 to 99.8% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 45% by mass, preferably 0.05 to 10% by mass, more preferably 0.1 to 1% by mass; the content of 3,9-bis(isotridecyloxy)-2,4,8,10-tetraoxa-3,9-diphosphaspiro[5.5]undecane is 0.01 to 10% by mass; the content of BHT is 0 to 10% by mass; and the content of paraffinic solvent(s) (for example, Isopar G, Isopar M, Isopar L, or mixtures thereof) is 55 to 99.98% by mass, preferably 79 to 99.9% by mass, more preferably 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 1% by mass; the content of 3,9-bis(isotridecyloxy)-2,4,8,10-tetraoxa-3,9-diphosphaspiro[5.5]undecane is 0.01 to 10% by mass; the content of BHT is 0 to 10% by mass; and the content of paraffinic solvent(s) (for example, Isopar G, Isopar M, Isopar L, or mixtures thereof) is 79 to 99.9% by mass.

Yet another embodiment of the insect pest controlling formulation for heat-transpiration of the present invention is such that, relative to the total amount of the insect pest controlling formulation for heat-transpiration, the content of natural

pyrethrin is 0.1 to 45% by mass, preferably 0.05 to 10% by mass, more preferably 0.1 to 1% by mass; the content of 3,9-bis(isodecyloxy)-2,4,8,10-tetraoxa-3,9-diphosphaspiro[5.5]undecane is 0.01 to 10% by mass; the content of BHT is 0 to 10% by mass; and the content of paraffinic solvent(s) (for example, Isopar G, Isopar M, Isopar L, or mixtures thereof) is 55 to 99.98% by mass, preferably 79 to 99.9% by mass, more preferably 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 1% by mass; the content of 3,9-bis(isodecyloxy)-2,4,8,10-tetraoxa-3,9-diphosphaspiro[5.5]undecane is 0.01 to 10% by mass; the content of BHT is 0 to 10% by mass; and the content of paraffinic solvent(s) (for example, Isopar G, Isopar M, Isopar L, or mixtures thereof) is 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 45% by mass, preferably 0.05 to 10% by mass, more preferably 0.1 to 1% by mass; the content of 3,9-bis(2,4-di-tert-butylphenoxy)-2,4,8,10-tetraoxa-3,9-diphosphaspiro[5.5]undecane is 0.01 to 10% by mass; the content of BHT is 0 to 10% by mass; and the content of paraffinic solvent(s) (for example, Isopar G, Isopar M, Isopar L, or mixtures thereof) is 55 to 99.98% by mass, preferably 79 to 99.9% by mass, more preferably 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 1% by mass; the content of 3,9-bis(2,4-di-tert-butylphenoxy)-2,4,8,10-tetraoxa-3,9-diphosphaspiro[5.5]undecane is 0.01 to 10% by mass; the content of BHT is 0 to 10% by mass; and the content of paraffinic solvent(s) (for example, Isopar G, Isopar M, Isopar L, or mixtures thereof) is 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 45% by mass, preferably 0.05 to 10% by mass, more preferably 0.1 to 1% by mass; the content of tris(nonylphenyl) phosphite is 0.01 to 10% by mass; the content of BHT is 0 to 10% by mass; and the content of paraffinic solvent(s) (for example, Isopar G, Isopar M, Isopar L, or mixtures thereof) is 55 to 99.98% by mass, preferably 79 to 99.9% by mass, more preferably 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 1% by mass; the content of tris (nonylphenyl) phosphite is 0.01 to 10% by mass; the content of BHT is 0 to 10% by mass; and the content of paraffinic solvent (s) (for example, Isopar G, Isopar M, Isopar L, or mixtures thereof) is 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 45% by mass, preferably 0.05 to 10% by mass, more preferably 0.1 to 1% by mass; the content of triphenyl phosphite is 0.01 to 10% by mass; the content of BHT is 0 to 10% by mass; and the content of paraffinic solvent (s) (for example, Isopar G, Isopar M, Isopar L, or mixtures thereof) is 55 to 99.98% by mass, preferably 79 to 99.9% by mass, more preferably 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 1% by mass; the content of triphenyl phosphite is 0.01 to 10% by mass; the content of BHT is 0 to 10% by mass; and the content of paraffinic solvent(s) (for example, Isopar G, Isopar M, Isopar L, or mixtures thereof) is 79-99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 45% by mass, preferably 0.05 to 10% by mass, more preferably 0.1 to 1% by mass; the content of tetrakis(2,4-di-tert-butylphenyl) 4,4'-biphenylenediphosphinate is 0.01 to 10% by mass; the content of BHT is 0 to 10% by mass; and the content of paraffinic solvent(s) (for example, Isopar G, Isopar M, Isopar L, or mixtures thereof) is 55 to 99.98% by mass, preferably 79 to 99.9% by mass, more preferably 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 1% by mass; the content of tetrakis(2,4-di-tert-butylphenyl) 4,4'-biphenylenediphosphinate is 0.01 to 10% by mass; the content of BHT is 0 to 10% by mass; and the content of paraffinic solvent(s) (for example, Isopar G, Isopar M, Isopar L, or mixtures thereof) is 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 45% by mass, preferably 0.05 to 10% by mass, more preferably 0.1 to 1% by mass; the content of tridodecyl trithiophosphite is 0.01 to 10% by mass; the content of BHT is 0 to 10% by mass; and the content of paraffinic solvent(s) (for example, Isopar G, Isopar M, Isopar L, or mixtures thereof) is 55 to 99.98% by mass, preferably 79 to 99.9%

by mass, more preferably 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 1% by mass; the content of tridodecyl trithiophosphite is 0.01 to 10% by mass; the content of BHT is 0 to 10% by mass; and the content of paraffinic solvent(s) (for example, Isopar G, Isopar M, Isopar L, or mixtures thereof) is 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 45% by mass, preferably 0.05 to 10% by mass, more preferably 0.1 to 1% by mass; the content of tetra(C12-15 alkyl)-4,4'-isopropylidenediphenyldiphosphite is 0.01 to 10% by mass; the content of BHT is 0 to 10% by mass; and the content of paraffinic solvent(s) (for example, Isopar G, Isopar M, Isopar L, or mixtures thereof) is 55 to 99.98% by mass, preferably 79 to 99.9% by mass, more preferably 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 1% by mass; the content of tetra(C12-15 alkyl)-4,4'-isopropylidenediphenyldiphosphite is 0.01 to 10% by mass; the content of BHT is 0 to 10% by mass; and the content of paraffinic solvent(s) (for example, Isopar G, Isopar M, Isopar L, or mixtures thereof) is 79 to 99.9% by mass.

In the insect pest controlling formulation for heat-transpiration of the present invention, examples of aspects of insect pest controlling formulations for heat-transpiration containing natural pyrethrin and a phosphorus-based antioxidant include the following compositions:

[Aspect LF1] An insect pest controlling formulation for heat-transpiration containing natural pyrethrin, triisodecyl phosphite, and a paraffinic solvent.

In the insect pest controlling formulation for heat-transpiration of the present invention, examples of aspects of insect pest controlling formulations for heat-transpiration containing natural pyrethrin, a phenolic antioxidant, and a phosphorus-based antioxidant include the following compositions:

[Aspect LBF1] An insect pest controlling formulation for heat-transpiration containing natural pyrethrin, a phenolic antioxidant, triisodecyl phosphite, and a paraffinic solvent.

[Aspect LBF2] An insect pest controlling formulation for heat-transpiration containing natural pyrethrin, BHT, triisodecyl phosphite, and a paraffinic solvent.

[Aspect LBF3] An insect pest controlling formulation for heat-transpiration containing, relative to the total amount of the insect pest controlling formulation for heat-transpiration, 1.26% by mass of natural pyrethrin (content: 47.5%; 0.6% by mass as natural pyrethrin active ingredient), 5% by mass of BHT, 2% by mass of triisodecyl phosphite, and 91.74% by mass of paraffinic solvent(s).

[Aspect LBF4] An insect pest controlling formulation for heat-transpiration containing 1.26 parts by mass of natural pyrethrin (content: 47.5%; 0.6 parts by mass as natural pyrethrin active ingredient), 5 parts by mass of BHT, 2 parts by mass of triisodecyl phosphite, and 91.74 parts by mass of paraffinic solvent(s).

[Aspect LBF5] An insect pest controlling formulation for heat-transpiration containing, relative to the total amount of the insect pest controlling formulation for heat-transpiration, 0.6% by mass of natural pyrethrin, 5% by mass of BHT, 2% by mass of triisodecyl phosphite, and 92% by mass of paraffinic solvent (s).

[Aspect LBF6] An insect pest controlling formulation for heat-transpiration containing 0.6 parts by mass of natural pyrethrin, 5 parts by mass of BHT, 2 parts by mass of triisodecyl phosphite, and 92 parts by mass of paraffinic solvent (s).

[Aspect LBF7] An insect pest controlling formulation for heat-transpiration containing, relative to the total amount of the insect pest controlling formulation for heat-transpiration, 1.26% by mass of natural pyrethrin (content: 47.5%; 0.6% by mass as natural pyrethrin active ingredient), 5% by mass of BHT, 2% by mass of triisodecyl phosphite, and 91.74% by mass of Isopar G.

[Aspect LBF8] An insect pest controlling formulation for heat-transpiration containing 1.26 parts by mass of natural pyrethrin (content: 47.5%; 0.6 parts by mass as natural pyrethrin active ingredient), 5 parts by mass of BHT, 2 parts by mass of triisodecyl phosphite, and 91.74 parts by mass of Isopar G.

[Aspect LBF9] An insect pest controlling formulation for heat-transpiration containing, relative to the total amount of the insect pest controlling formulation for heat-transpiration, 0.6% by mass of natural pyrethrin, 5% by mass of BHT, 2% by mass of triisodecyl phosphite, and 92% by mass of Isopar G.

[Aspect LBF10] An insect pest controlling formulation for heat-transpiration containing 0.6 parts by mass of natural pyrethrin, 5 parts by mass of BHT, 2 parts by mass of triisodecyl phosphite, and 92 parts by mass of Isopar G.

In the insect pest controlling formulation for heat-transpiration of the present invention, one embodiment of a composition containing natural pyrethrin and a sulfur-based antioxidant (also referred to as a composition for heat-transpiration) is a composition containing natural pyrethrin and one or more phosphorus-based antioxidants selected from the group consisting of didodecyl 3,3'-thiodipropionate, pentaerythritol tetrakis[3-(dodecylthio)propionate], 2-mercaptobenzimidazole, and 2,4-bis[(dodecylthio)methyl]-6-methylphenol.

Another embodiment of the composition containing natural pyrethrin and a sulfur-based antioxidant (also referred to as a composition for heat-transpiration) is a composition further containing a phenolic antioxidant such as BHT.

Yet another embodiment of the composition for heat-transpiration of the present invention is a composition containing, per 0.6 parts by mass of natural pyrethrin, 0.01 to 10 parts by mass of didodecyl 3,3'-thiodipropionate, and 0 to 10 parts by mass of BHT.

Yet another embodiment of the composition for heat-transpiration of the present invention is a composition containing, per 0.6 parts by mass of natural pyrethrin, 0.01 to 10 parts by mass of pentaerythritol tetrakis[3-(dodecylthio) propionate], and 0 to 10 parts by mass of BHT.

Yet another embodiment of the composition for heat-transpiration of the present invention is a composition containing, per 0.6 parts by mass of natural pyrethrin, 0.01 to 10 parts by mass of 2-mercaptobenzimidazole, and 0 to 10 parts by mass of BHT.

Yet another embodiment of the composition for heat-transpiration of the present invention is a composition containing, per 0.6 parts by mass of natural pyrethrin, 0.01 to 10 parts by mass of 2,4-bis[(dodecylthio)methyl]-6-methylphenol, and 0 to 10 parts by mass of BHT.

Yet another embodiment of the insect pest controlling formulation for heat-transpiration of the present invention is such that, relative to the total amount of the insect pest controlling formulation for heat-transpiration, the content of natural pyrethrin is 0.1 to 45% by mass, preferably 0.05 to 10% by mass, more preferably 0.1 to 1% by mass; the content of didodecyl 3,3'-thiodipropionate is 0.01 to 10% by mass; the content of BHT is 0 to 10% by mass; and the content of paraffinic solvent(s) (for example, Isopar G, Isopar M, Isopar L, or mixtures thereof) is 55 to 99.98% by mass, preferably 79 to 99.9% by mass, more preferably 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 1% by mass; the content of didodecyl 3,3'-thiodipropionate is 0.01 to 10% by mass; the content of BHT is 0 to 10% by mass; and the content of paraffinic solvent(s) (for example, Isopar G, Isopar M, Isopar L, or mixtures thereof) is 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 45% by mass, preferably 0.05 to 10% by mass, more preferably 0.1 to 1% by mass; the content of pentaerythritol tetrakis[3-(dodecylthio)propionate] is 0.01 to 10% by mass; the content of BHT is 0 to 10% by mass; and the content of paraffinic solvent(s) (for example, Isopar G, Isopar M, Isopar L, or mixtures thereof) is 55 to 99.98% by mass, preferably 79 to 99.9% by mass, more preferably 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 1% by mass; the content of pentaerythritol tetrakis[3-(dodecylthio)propionate] is 0.01 to 10% by mass; the content of BHT is 0 to 10% by mass; and the content of paraffinic solvent(s) (for example, Isopar G, Isopar M, Isopar L, or mixtures thereof) is 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 45% by mass, preferably 0.05 to 10% by mass, more preferably 0.1 to 1% by mass; the content of 2-mercaptobenzimidazole is 0.01 to 10% by mass; the content of BHT is 0 to 10% by mass; and the content of paraffinic solvent(s) (for example, Isopar G, Isopar M, Isopar L, or mixtures thereof) is 55 to 99.98% by mass, preferably 79 to 99.9% by mass, more preferably 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 1% by mass; the content of 2-mercaptobenzimidazole is 0.01 to 10% by mass; the content of BHT is 0 to 10% by mass; and the content of paraffinic solvent(s) (for example, Isopar G, Isopar M, Isopar L, or mixtures thereof) is 79 to 99.9% by mass.

Yet another embodiment of the insect pest controlling formulation for heat-transpiration of the present invention is such that, relative to the total amount of the insect pest controlling formulation for heat-transpiration, the content of natural pyrethrin is 0.1 to 45% by mass, preferably 0.05 to 10% by mass, more preferably 0.1 to 1% by mass; the content of 2,4-bis [(dodecylthio)methyl]-6-methylphenol is 0.01 to 10% by mass; the content of BHT is 0 to 10% by mass; and the content of paraffinic solvent(s) (for example, Isopar G, Isopar M, Isopar L, or mixtures thereof) is 55 to 99.98% by mass, preferably 79 to 99.9% by mass, more preferably 79 to 99.9% by mass.

Yet another embodiment of the insect pest controlling formulation for heat-transpiration of the present invention is such that, relative to the total amount of the insect pest controlling formulation for heat-transpiration, the content of natural

pyrethrin is 0.1 to 1% by mass; the content of 2,4-bis[(dodecylthio)methyl]-6-methylphenol is 0.01 to 10% by mass; the content of BHT is 0 to 10% by mass; and the content of paraffinic solvent(s) (for example, Isopar G, Isopar M, Isopar L, or mixtures thereof) is 79 to 99.9% by mass.

As for the heating element (heating element 2) used in the heat-transpiring insecticidal device, generally, a heating element that generates heat upon electrification is commonly used, but it is not limited thereto; for example, any known heating element such as an air oxidation heat-generating material or a heat-generating material using a platinum catalyst can be used.

The liquid-absorbing wick 3 generally consists of a porous material. As the porous materials, those obtained by binding and forming inorganic powders such as clay, talc, kaolin, silica, calcite, diatomaceous earth, gypsum, perlite, bentonite, acid clay, glass fiber, or asbestos with a binder such as carboxymethyl cellulose, starch, gum arabic, gelatin, or polyvinyl alcohol; those obtained by compacting inorganic substances such as clay, talc, bentonite, alumina, silica, or calcite into a wick shape, followed by sintering; those obtained by processing a resin into a wick shape; or bundles of glass fibers, etc. are generally used. The liquid-absorbing wick may also appropriately contain a dye, a preservative, or an antioxidant, which can be contained, for example, by mixing them during the binding of the inorganic powder and the binder.

The target insect pests to be controlled by the insect pest controlling formulation for heat-transpiration of the present invention include arthropods such as various insect pests and mites, and specific examples thereof include harmful flying insect pests, for example, Diptera pests including Culex such as Culex pipiens pallens, Culex tritaeniorhynchus, Culex quinquefasciatus, and Culex pipiens f. molestus; Aedes such as Aedes aegypti and Aedes albopictus; anopheles such as Anopheles sinensis; Chironomidae; Muscidae such as Musca domestica, Muscina stabulans, and Fannia canicularis; Calliphoridae, Sarcophagidae, Drosophilidae, Psychodidae, Phoridae, Tabanidae, Simuliidae, Stomoxys, and Ceratopogonidae, etc. Among these, Culicidae such as Culex, Aedes, and Anopheles are particularly cited as target insect pests to be controlled.

One embodiment of the present invention is a method for controlling target insect pests, including heating a insect pest controlling formulation for heat-transpiration to transpire an effective amount of a composition for heat-transpiration into the atmosphere.

Another embodiment of the present invention is a method for controlling target insect pests, wherein the heating of the insect pest controlling formulation for heat-transpiration is achieved by absorbing a solution containing the composition for heat-transpiration into a liquid-absorbing wick and heating the upper part of the liquid-absorbing wick with a heating element.

Yet another embodiment of the present invention is a method for controlling target insect pests, wherein the heating of the upper part of the liquid-absorbing wick by the heating element is achieved by indirect heating of the upper part of the liquid-absorbing wick with a heating member to a temperature of about 60 °C to about 150 °C.

Yet another embodiment of the present invention is, such that the method for controlling target insect pests is a method for controlling mosquitoes.

In this description, "control" is a concept that includes extermination, repellency, and prevention. "Extermination" refers to a concept that includes killing, knocking down, driving away, or repelling the target insect pests, and it is preferably killing or knocking down the target insect pests.

<Formulation for Insect Pest Control Mat>

One embodiment of the present invention is a formulation for insect pest control mat containing natural pyrethrin and an antioxidant. The insect pest control mat may also be referred to as an electric mosquito repellent mat.

The formulation for insect pest control mat according to one embodiment of the present invention is, for example, a formulation that can be applied to an insect pest control mat 11 used in a heat-transpiring insecticidal device 200 as shown in Figure 2. In the heat-transpiring insecticidal device 100 of Figure 2, the insect pest control mat 11, which retains the formulation for insect pest control mat, is placed on a hot plate 10, followed by heating the hot plate to about 140 to 200 °C to transpire the composition for insect pest control mat retained in the insect pest control mat into the atmosphere, thereby making it possible to control insect pests.

Further, the formulation for insect pest control mat according to one embodiment of the present invention is a formulation that can be applied to an insect pest control mat used in a heat-transpiring insecticidal device described in Japanese Unexamined Patent Application Publication (Translation of PCT Application) No. Hei 11-510055. In the heat-transpiring insecticidal device described in Japanese Unexamined Patent Application Publication (Translation of PCT Application) No. Hei 11-510055, fuel such as butane gas is burned to heat the insect pest control mat to about 120 to 200 °C, thereby transpiring the composition for insect pest control mat retained in the insect pest control mat into the atmosphere to make it possible to control insect pests. That is, while the heat-transpiring insecticidal device 200 shown in Figure 2 heats the hot plate 10 by electric heating, the heat-transpiring insecticidal device described in Japanese Unexamined Patent Application Publication (Translation of PCT Application) No. Hei 11-510055 heats the hot plate in the

device by burning fuel such as butane gas. Although there are differences in heat sources and heating temperatures, both share the same principle of transpiring the composition for insect pest control mat retained in the insect pest control mat into the atmosphere by heating.

In this description, a composition suitably used for an insect pest control mat used in a heat-transpiring insecticidal device using a insect pest control mat may be referred to as an "composition for insect pest control mat." The formulation for insect pest control mat according to one embodiment of the present invention is applied to conventionally known insect pest control mats and is not limited to devices such as those shown in Figure 2, but can be applied to conventionally known heat-transpiring insecticidal devices using insect pest control mats, all of which can exhibit excellent effects.

Another embodiment of the present invention is an insect pest control mat in which a formulation for insect pest control mat is retained.

The insect pest control mat is one in which a formulation for insect pest control mat containing natural pyrethrin and an antioxidant is retained in a fibrous carrier or a porous carrier.

In one embodiment of the present invention, the formulation for insect pest control mat usually contains, relative to the total amount of the formulation for insect pest control mat, 5 to 40% by mass of the composition for insect pest control mat, and may further appropriately contain a solvent (also referred to as a solvating medium), a coloring matter, a stabilizer, a fragrance, etc.

Examples of such solvents include ester solvents and hydrocarbon solvents. Specific examples of ester solvents include diisodecyl phthalate, di-2-ethylhexyl phthalate, diisopropyl adipate, diisodecyl adipate, di-n-octyl sebacate, diisononyl adipate, di-2-ethylhexyl sebacate, di-2-ethylhexyl azelate, di-n-hexyl azelate, di-2-ethylhexyl dodecanoate, dibutoxyethoxyethyl adipate, isopropyl palmitate, dioctyl adipate, di-n-butyl sebacate, acetyl tributyl citrate, di-2-ethylhexyl maleate, and isopropyl myristate. Examples of hydrocarbon solvents include n-paraffin solvents, isoparaffin solvents, and naphthene solvents. Specific examples of n-paraffin solvents include dodecane, tridecane, tetradecane, pentadecane, Norpar 13 (trade name, manufactured by Exxon Mobil Chemical Corporation), Norpar 15 (trade name, manufactured by Exxon Mobil Chemical Corporation), n-paraffin grade M (trade name, manufactured by Nippon Oil Corporation), n-paraffin grade H (trade name, manufactured by Nippon Oil Corporation), and Neothiozole (trade name, manufactured by Chuo Kasei Co., Ltd.); specific examples of isoparaffin solvents include Isopar M (trade name, manufactured by Exxon Mobil Corporation), Isopar V (trade name, manufactured by Exxon Mobil Corporation), IP Solvent 2028 (trade name, manufactured by Idemitsu Kosan Co., Ltd.), IP Solvent 2835 (trade name, manufactured by Idemitsu Kosan Co., Ltd.), and Shellsol TM (trade name, manufactured by Shell Chemicals Japan Ltd.); and specific examples of naphthene solvents include Exxsol D80 (trade name, manufactured by Exxon Mobil Corporation), Exxsol D110 (trade name, manufactured by Exxon Mobil Corporation), and Exxsol D130 (trade name, manufactured by Exxon Mobil Corporation). Kerosene can also be used.

The above solvents may further contain an auxiliary solvent (also referred to as an auxiliary solvating medium), and examples of auxiliary solvents include diisopropyl adipate, diisodecyl adipate, diisobutyl adipate, isopropyl myristate, isopropanol, benzyl acetate, cellulose nanofiber, ethanol, sucrose fatty acid ester, sorbitan fatty acid ester, propylene carbonate, 1,3-butylene glycol, and polyoxyethylene hydrogenated castor oil. As the auxiliary solvent, a solvent different from the above-mentioned solvents to be used may be selected. For example, when as the above-mentioned solvent, an n-paraffin solvent, isoparaffin solvent, or naphthene solvent, is used, diisopropyl adipate, isopropyl myristate, or the like is preferable as the auxiliary solvent.

The formulation for insect pest control mat usually contains one or two or more of these solvents. The content is usually about 50 to 95% by mass of the total amount of the formulation for insect pest control mat. When the formulation for insect pest control mat further contains auxiliary solvent(s), the content of the auxiliary solvent (s) may be usually 5 to 30% by mass, preferably 10 to 25% by mass, relative to the total amount of the formulation for insect pest control mat.

The concentration of the composition containing natural pyrethrin and an antioxidant (also referred to as the composition for insect pest control mat) in the formulation for insect pest control mat is adjusted to be usually about 1 to 50% by mass, preferably about 1 to 40% by mass, more preferably about 4 to 40% by mass, relative to the total amount of the formulation for insect pest control mat. Here, the sum of the content (content percentage) of the solvent(s) and the concentration of the composition for insect pest control mat does not exceed 100% by mass. When auxiliary solvent(s) is further contained, the sum of the content (content percentage) of the solvent(s), the content of the auxiliary solvent (s), and the concentration of the composition for insect pest control mat does not exceed 100% by mass.

Examples of antioxidants include phosphorus-based antioxidants such as triisodecyl phosphite, diphenyl isodecyl phosphite, 4,4'-butylidenebis(3-methyl-6-tert-butylphenyl ditridecyl phosphite), and tetra(C12-15 alkyl)-4,4'-isopropylidenediphenyldiphosphite, as well as phenolic antioxidants such as BHA, BHT, and 2,2'-methylene-bis(6-tert-butyl-4-methylphenol).

Examples of coloring matters include anthraquinone-based blue dyes such as 1,4-dibutylaminoanthraquinone, 1,4-diisopropylaminoanthraquinone, 1,4-bis(2,6-diethyl-4-methylphenylamino)anthraquinone, 1-methylamino-4-orthotolylaminoanthraquinone, 1-methylamino-4-metatolylaminoanthraquinone, and 1-methylamino-4-paratolylaminoanthraquinone. These coloring matters may be used alone or as a mixture of two or more, and may also be used in combination with other coloring matters having different hues.

Examples of stabilizers include ultraviolet absorbers such as benzotriazole-based ultraviolet absorbers and benzophenone-based ultraviolet absorbers.

In one embodiment of the formulation for insect pest control mat of the present invention, one embodiment of the composition containing natural pyrethrin and an antioxidant (also referred to as the composition for insect pest control mat) is a composition containing natural pyrethrin, one or more phosphorus-based antioxidants selected from the group consisting of diphenyl isodecyl phosphite, 4,4'-butylidenebis(3-methyl-6-tert-butylphenyl ditridecyl phosphite), and tetra(C12-15 alkyl)-4,4'-isopropylidenediphenyldiphosphite, and a phenolic antioxidant such as BHT.

One embodiment of the composition for insect pest control mat of the present invention is a composition containing, per 13.3 parts by mass of natural pyrethrin, 1 to 30 parts by mass, preferably 1 to 20 parts by mass, more preferably 1 to 10 parts by mass of phosphorus-based antioxidant(s), and 0 and 20 parts by mass, 0.01 to 20 parts by mass, preferably 0 to 10 parts by mass, 0.1 to 10 parts by mass, more preferably 0 to 5 parts by mass, 1 to 5 parts by mass of phenolic antioxidant(s) such as BHT or 2,2'-methylene-bis(6-tert-butyl-4-methylphenol).

Another embodiment of the composition for insect pest control mat of the present invention is a composition containing, per 13.3 parts by mass of natural pyrethrin, 1 to 30 parts by mass, preferably 1 to 20 parts by mass, more preferably 1 to 10 parts by mass of triisodecyl phosphite, and 0 to 30 parts by mass, 0.01 to 30 parts by mass, preferably 0 to 10 parts by mass, 0.1 to 10 parts by mass, more preferably 0 to 5 parts by mass, 1 to 5 parts by mass of BHT.

Yet another embodiment of the composition for insect pest control mat of the present invention is a composition containing, per 13.3 parts by mass of natural pyrethrin, 1 to 10 parts by mass of triisodecyl phosphite and 0 to 5 parts by mass of BHT.

Yet another embodiment of the composition for insect pest control mat of the present invention is a composition containing, per 13.3 parts by mass of natural pyrethrin, 1 to 10 parts by mass of triisodecyl phosphite and 1 to 5 parts by mass of BHT.

Yet another embodiment of the composition for insect pest control mat of the present invention is a composition containing, per 13.3 parts by mass of natural pyrethrin, 1 to 30 parts by mass, preferably 1 to 10 parts by mass, more preferably 1 to 5 parts by mass of diphenyl isodecyl phosphite and 0 to 30 parts by mass, preferably 1 to 10 parts by mass, more preferably 1 to 8 parts by mass of 2,2'-methylene-bis(6-tert-butyl-4-methylphenol).

Yet another embodiment of the composition for insect pest control mat of the present invention is a composition containing, per 13.3 parts by mass of natural pyrethrin, 1 to 5 parts by mass of diphenyl isodecyl phosphite and 1 to 8 parts by mass of 2,2'-methylene-bis(6-tert-butyl-4-methylphenol).

Yet another embodiment of the composition for insect pest control mat of the present invention is a composition containing, per 13.3 parts by mass of natural pyrethrin, 1 to 30 parts by mass, preferably 1 to 20 parts by mass, more preferably 7 to 15 parts by mass of 4,4'-butylidenebis(3-methyl-6-tert-butylphenyl ditridecyl phosphite), and 0 to 30 parts by mass, 0.01 to 30 parts by mass, preferably 0 to 10 parts by mass, 0.1 to 10 parts by mass, more preferably 0 to 5 parts by mass, 1 to 5 parts by mass of BHT.

Yet another embodiment of the composition for insect pest control mat of the present invention is a composition containing, per 13.3 parts by mass of natural pyrethrin, 7 to 15 parts by mass of 4,4'-butylidenebis(3-methyl-6-tert-butylphenyl ditridecyl phosphite) and 0 to 5 parts by mass of BHT.

Yet another embodiment of the composition for insect pest control mat of the present invention is a composition containing, per 13.3 parts by mass of natural pyrethrin, 7 to 15 parts by mass of 4,4'-butylidenebis(3-methyl-6-tert-butylphenyl ditridecyl phosphite) and 1 to 5 parts by mass of BHT.

Yet another embodiment of the composition for insect pest control mat of the present invention is a composition containing, per 13.3 parts by mass of natural pyrethrin, 1 to 30 parts by mass, preferably 1 to 20 parts by mass, more preferably 1 to 10 parts by mass of tetra(C12-15 alkyl)-4,4'-isopropylidenediphenyldiphosphite and 0 to 30 parts by mass, 0.01 to 30 parts by mass, preferably 0 to 10 parts by mass, 0.1 to 10 parts by mass, more preferably 0 to 5 parts by mass, 1 to 5 parts by mass of BHT.

Yet another embodiment of the composition for insect pest control mat of the present invention is a composition containing, per 13.3 parts by mass of natural pyrethrin, 1 to 10 parts by mass of tetra (C12-15 alkyl)-4,4'-isopropylidenediphenyldiphosphite and 0 to 5 parts by mass of BHT.

Yet another embodiment of the composition for insect pest control mat of the present invention is a composition containing, per 13.3 parts by mass of natural pyrethrin, 1 to 10 parts by mass of tetra (C12-15 alkyl)-4,4'-isopropylidenediphenyldiphosphite and 1 to 5 parts by mass of BHT.

In one embodiment of the formulation for insect pest control mat of the present invention, aspects of the compositions containing natural pyrethrin, a phenolic antioxidant, and a phosphorus-based antioxidant (also referred to as the composition for insect pest control mat) include the following compositions.

[Aspect MATB1] A composition containing natural pyrethrin, a phenolic antioxidant, and diphenyl isodecyl phosphite.

[Aspect MATB2] A composition containing natural pyrethrin, BHT, and diphenyl isodecyl phosphite.

[Aspect MATB3] A composition containing natural pyrethrin, a phenolic antioxidant, and 4,4'-butylidenebis(3-methyl-6-tert-butylphenyl ditridecyl phosphite).

[Aspect MATB4] A composition containing natural pyrethrin, BHT, and 4,4'-butylidenebis(3-methyl-6-tert-butylphenyl ditridecyl phosphite).

[Aspect MATB5] A composition containing 28.0 parts by mass of natural pyrethrin (content: 47.5%; 13.3 parts by mass of natural pyrethrin active ingredient), 5 parts by mass of BHT, and 10 parts by mass of 4,4'-butylidenebis(3-methyl-6-tert-butylphenyl ditridecyl phosphite).

[Aspect MATB6] A composition containing natural pyrethrin, a phenolic antioxidant, and tetra(C12-15 alkyl)-4,4'-isopropylidenediphenyldiphosphite.

[Aspect MATB7] A composition containing natural pyrethrin, BHT, and tetra(C12-15 alkyl)-4,4'-isopropylidenediphenyldiphosphite.

One embodiment of the formulation for insect pest control mat of the present invention is such that, based on the volume of the formulation for insect pest control mat, the mass-to-volume concentration of natural pyrethrin is 1 to 40 w/v%, preferably 5 to 20 w/v%, more preferably 10 to 15 w/v%; the mass-to-volume concentration of phosphorus-based antioxidant(s) is 1 to 30 w/v%, preferably 1 to 20 w/v%, more preferably 2 to 10 w/v%; the mass-to-volume concentration of phenolic antioxidant (s) such as BHT is 0 to 20 w/v%, preferably 0 to 10 w/v%, more preferably 0 to 5 w/v%; and the content of solvent(s) such as paraffinic solvents is an amount adjusted to achieve the above-mentioned concentrations. Here, the sum of the mass-to-volume concentrations of natural pyrethrin, the phosphorus-based antioxidant(s), and the phenolic antioxidant(s) such as BHT does not exceed 100 w/v%.

Another embodiment of the formulation for insect pest control mat of the present invention is such that, based on the volume of the formulation for insect pest control mat, the mass-to-volume concentration of natural pyrethrin is 1 to 40 w/v%, preferably 5 to 20 w/v%, more preferably 10 to 15 w/v%; the mass-to-volume concentration of triisodecyl phosphite is 1 to 30 w/v%, preferably 1 to 20 w/v%, more preferably 1 to 10 w/v%; the mass-to-volume concentration of BHT is 0 to 30 w/v%, 0.01 to 30 w/v%, preferably 0 to 10 w/v%, 0.1 to 10 w/v%, more preferably 0 to 5 w/v%, 1 to 5 w/v%; and the content of paraffinic solvent(s) is an amount adjusted to achieve the above-mentioned concentrations.

Yet another embodiment of the formulation for insect pest control mat of the present invention is such that, based on the volume of the formulation for insect pest control mat, the mass-to-volume concentration of natural pyrethrin is 10 to 15 w/v%, the mass-to-volume concentration of triisodecyl phosphite is 1 to 10 w/v%, the mass-to-volume concentration of BHT is 0 to 5 w/v%, and the content of paraffinic solvent(s) is an amount adjusted to achieve the above-mentioned concentrations.

Yet another embodiment of the formulation for insect pest control mat of the present invention is such that, based on the volume of the formulation for insect pest control mat, the mass-to-volume concentration of natural pyrethrin is 10 to 15 w/v%, the mass-to-volume concentration of triisodecyl phosphite is 1 to 10 w/v%, the mass-to-volume concentration of BHT is 1 to 5 w/v%, and the content of paraffinic solvent (s) is an amount adjusted to achieve the above-mentioned concentrations.

Yet another embodiment of the formulation for insect pest control mat of the present invention is such that, based on the volume of the formulation for insect pest control mat, the mass-to-volume concentration of natural pyrethrin is 1 to 40 w/v%, preferably 5 to 20 w/v%, more preferably 10 to 15 w/v%; the mass-to-volume concentration of diphenyl isodecyl phosphite is 1 to 30 w/v%, preferably 1 to 10 w/v%, more preferably 1 to 5 w/v%; the mass-to-volume concentration of 2,2'-methylene-bis(6-tert-butyl-4-methylphenol) is 1 to 30 w/v%, preferably 1 to 10 w/v%, more preferably 1 to 8 w/v%; and the content of paraffinic solvent(s) is an amount adjusted to achieve the above-mentioned concentrations.

Yet another embodiment of the formulation for insect pest control mat of the present invention is such that, based on the volume of the formulation for insect pest control mat, the mass-to-volume concentration of natural pyrethrin is 10 to 15 w/v%, the mass-to-volume concentration of diphenyl isodecyl phosphite is 1 to 5 w/v%, the mass-to-volume concentration of 2,2'-methylene-bis(6-tert-butyl-4-methylphenol) is 1 to 8 w/v%, and the content of paraffinic solvent(s) is an amount adjusted to achieve the above-mentioned concentrations.

Another embodiment of the formulation for insect pest control mat of the present invention is such that, based on the volume of the formulation for insect pest control mat, the mass-to-volume concentration of natural pyrethrin is 1 to 40 w/v%, preferably 5 to 20 w/v%, more preferably 10 to 15 w/v%; the mass-to-volume concentration of 4,4'-butylidenebis(3-methyl-6-tert-butylphenyl ditridecyl phosphite) is 1 to 30 w/v%, preferably 1 to 20 w/v%, more preferably 7 to 15 w/v%; the mass-to-volume concentration of BHT is 0 to 30 w/v%, 0.01 to 30 w/v%, preferably 0 to 10 w/v%, 0.1 to 10 w/v%, more preferably 0 to 5 w/v%, 1 to 5 w/v%; and the content of paraffinic solvent(s) is an amount adjusted to achieve the above-mentioned concentrations.

Yet another embodiment of the formulation for insect pest control mat of the present invention is such that, based on the volume of the formulation for insect pest control mat, the mass-to-volume concentration of natural pyrethrin is 10 to 15 w/v%, the mass-to-volume concentration of 4,4'-butylidenebis(3-methyl-6-tert-butylphenyl ditridecyl phosphite) is 7 to

15 w/v%, the mass-to-volume concentration of BHT is 0 to 5 w/v%, and the content of paraffinic solvent (s) is an amount adjusted to achieve the above-mentioned concentrations.

Yet another embodiment of the formulation for insect pest control mat of the present invention is such that, based on the volume of the formulation for insect pest control mat, the mass-to-volume concentration of natural pyrethrin is 10 to 15 w/v%, the mass-to-volume concentration of 4,4'-butylidenebis(3-methyl-6-tert-butylphenyl ditridecyl phosphite) is 7 to 15 w/v%, the mass-to-volume concentration of BHT is 1 to 5 w/v%, and the content of paraffinic solvent (s) is an amount adjusted to achieve the above-mentioned concentrations.

Another embodiment of the formulation for insect pest control mat of the present invention is such that, based on the volume of the formulation for insect pest control mat, the mass-to-volume concentration of natural pyrethrin is 1 to 40 w/v%, preferably 5 to 20 w/v%, more preferably 10 to 15 w/v%; the mass-to-volume concentration of tetra(C12-15 alkyl)-4,4'-isopropylidenediphenyldiphosphite is 1 to 30 w/v%, preferably 1 to 20 w/v%, more preferably 1 to 10 w/v%; the mass-to-volume concentration of BHT is 0 to 30 w/v%, 0.01 to 30 w/v%, preferably 0 to 10 w/v%, 0.1 to 10 w/v%, more preferably 0 to 5 w/v%, 1 to 5 w/v%; and the content of paraffinic solvent(s) is an amount adjusted to achieve the above-mentioned concentrations.

Yet another embodiment of the formulation for insect pest control mat of the present invention is sich that, based on the volume of the formulation for insect pest control mat, the mass-to-volume concentration of natural pyrethrin is 10 to 15 w/v%, the mass-to-volume concentration of tetra(C12-15 alkyl)-4,4'-isopropylidenediphenyldiphosphite is 1 to 10 w/v%, the mass-to-volume concentration of BHT is 0 to 5 w/v%, and the content of paraffinic solvent(s) is an amount adjusted to achieve the above-mentioned concentrations.

Yet another embodiment of the formulation for insect pest control mat of the present invention is such that, based on the volume of the formulation for insect pest control mat, the mass-to-volume concentration of natural pyrethrin is 10 to 15 w/v%, the mass-to-volume concentration of tetra(C12-15 alkyl)-4,4'-isopropylidenediphenyldiphosphite is 1 to 10 w/v%, the mass-to-volume concentration of BHT is 1 to 5 w/v%, and the content of paraffinic solvent(s) is an amount adjusted to achieve the above-mentioned concentrations.

In one embodiment of the formulation for insect pest control mat of the present invention, aspects of the formulations for insect pest control mat containing natural pyrethrin, a phenolic antioxidant, and a phosphorus-based antioxidant includes the following compositions.

[Aspect MATBF1] A formulation for insect pest control mat containing natural pyrethrin, a phenolic antioxidant, diphenyl isodecyl phosphite, and a paraffinic solvent.

[Aspect MATBF2] A formulation for insect pest control mat containing natural pyrethrin, BHT, diphenyl isodecyl phosphite, and a paraffinic solvent.

[Aspect MATBF3] A formulation for insect pest control mat containing natural pyrethrin, a phenolic antioxidant, 4,4'-butylidenebis(3-methyl-6-tert-butylphenyl ditridecyl phosphite), and a paraffinic solvent.

[Aspect MATBF4] A formulation for insect pest control mat containing natural pyrethrin, BHT, 4,4'-butylidenebis(3-methyl-6-tert-butylphenyl ditridecyl phosphite), and a paraffinic solvent.

[Aspect MATBF5] A formulation for insect pest control mat containing, based on the volume of the formulation for insect pest control mat, 28.0 w/v% in the mass-to-volume concentration of natural pyrethrin (content: 47.5%; 13.3 w/v% as natural pyrethrin active ingredient), 5 w/v% of BHT , 10 w/v% of 4,4'-butylidenebis(3-methyl-6-tert-butylphenyl ditridecyl phosphite), and paraffinic solvent(s) in an amount adjusted to achieve the above-mentioned concentrations.

[Aspect MATBF6] A formulation for insect pest control mat containing, based on the volume of the formulation for insect pest control mat, 28.0 w/v% in the mass-to-volume concentration of natural pyrethrin (content: 47.5%; 13.3 w/v% as natural pyrethrin active ingredient), 5 w/v% of BHT, 10 w/v% of 4,4'-butylidenebis(3-methyl-6-tert-butylphenyl ditridecyl phosphite), and Isopar M in an amount adjusted to achieve the above-mentioned concentrations.

[Aspect MATBF7] A formulation for insect pest control mat containing natural pyrethrin, a phenolic antioxidant, tetra(C12-15 alkyl)-4,4'-isopropylidenediphenyldiphosphite, and a paraffinic solvent.

[Aspect MATBF8] A formulation for insect pest control mat containing natural pyrethrin, BHT, tetra(C12-15 alkyl)-4,4'-isopropylidenediphenyldiphosphite, and a paraffinic solvent.

One embodiment of the insect pest control mat of the present invention is usually produced by retaining the formulation for insect pest control mat according to one embodiment of the present invention in a fibrous carrier or a porous carrier by impregnation or the like.

Examples of fibrous carriers include natural fibers such as pulp, cellulose, and cotton; synthetic fibers such as polyester and acrylic; and inorganic fibers such as glass fiber and asbestos, and examples of porous carriers include porous inorganic materials such as diatomaceous earth, porous ceramic materials such as unglazed ceramic, and porous resins such as foamed urethane and foamed polypropylene.

The size of the fibrous carrier or porous carrier used in the present invention, in terms of apparent volume before

retaining the formulation for insect pest control mat, is usually in the range of 2.0 to 4.0 $cm^3$ (for example, about 2.2 cm × 3.5 cm × 0.28 cm (approximately 2.2 $cm^3$), about 3.8 cm × 4.8 cm × 0.20 cm (approximately 3.5 $cm^3$)), and in one embodiment of the insect pest control mat of the present invention, 20 to 1600 mg of the formulation for insect pest control mat is usually retained per 2.2 $cm^3$ of a fibrous carrier or a porous carrier.

One embodiment of the formulation for insect pest control mat of the present invention may appropriately contain other insect pest control active compounds, repellents, or the like, thereby further improvement in efficacy can be expected.

As target insect pests to be effectively controlled by the formulation for insect pest control mat according to one embodiment of the present invention, the same insect pests as the above-described target insect pest to which the insect pest controlling formulation for heat-transpiration is applied can be mentioned. It also may be same that in particular, Culicidae such as Culex, Aedes, and Anopheles are mentioned as target insect pests to be controlled.

One embodiment of the present invention is a method for controlling target insect pests, including heating an insect pest control mat retaining a formulation for insect pest control mat to transpire an effective amount of a composition for insect pest control mat into the atmosphere.

Another embodiment of the present invention is a method for controlling target insect pests, wherein the heating of the insect pest control mat is achieved by placing the insect pest control mat on a hot plate, followed by heating the insect pest control mat with the heated hot plate.

Yet another embodiment of the present invention is a method for controlling target insect pests, wherein the heating by the hot plate is achieved by heating the hot plate to a temperature of about 140 to 200 °C by electric heating.

Yet another embodiment of the present invention is a method for controlling target insect pests, wherein the heating by the hot plate is achieved by heating the hot plate to a temperature of about 120 to 200°C by combustion of fuel.

Yet another embodiment of the present invention is, such that the method for controlling target insect pests is a method for controlling mosquitoes.

<Resin Formulation>

One embodiment of the present invention is a resin formulation containing natural pyrethrin and an antioxidant.

The resin formulation according to one embodiment of the present invention is, for example, a formulation that can be contained and used in an insect repellent device 300 as shown in Figure 3. In this description, a composition containing natural pyrethrin and an antioxidant, which is suitably used for a resin formulation, may be referred to as a composition for resin formulation. In the insect repellent device 300 shown in Figure 3, a resin formulation 25, which is molded into a net shape by knitting resin yarn spun from a resin composition containing a thermoplastic resin, natural pyrethrin, and an antioxidant, is housed in a case 20 having openings 23 and 24. The insect repellent device 300 is usually placed in an environment at room temperature (for example, 5 to 35 °C), thereby volatilizing a composition for resin formulation contained in the resin formulation 25 into the atmosphere to make it possible to control insect pests. The case 20 may be composed of an inner member 21 and an outer member 22, and the inner member 21 and the outer member 22 may be capable of relative movement, and they may be aranged so that when the inner member 21 and the outer member 22 are in a specific position, the openings provided in the inner member 21 and the outer member 22 are separated from each other to seal the interior of the case 20. In addition, the case 20 may be provided with a hook 26 so that the insect repellent device can be installed by hanging it using the hook 26.

Alternatively, as another mode, it is possible to control insect pests which contacted with the resin formulation. The mode and usage of the resin formulation according to one embodiment of the present invention are not limited to the above disclosure, and by applying those of conventionally known resin formulations, excellent effects can exhibit each in all cases.

Another embodiment of the present invention is a resin composition for producing the resin formulation.

The resin formulations to which the present invention can be applied will be described in detail below.

One embodiment of the resin formulation of the present invention can be formed by melt-molding a resin composition containing a thermoplastic resin, natural pyrethrin, and an antioxidant. The resin formulation may be produced by knitting or weaving resin yarn spun from the resin composition by melt spinning so as to form a large number of meshes, into a net shape.

In one embodiment of the present invention, a thermoplastic resin is used as a carrier for retaining natural pyrethrin and an antioxidant. Examples of thermoplastic resins include polyolefin resins, polyvinyl alcohol, polyvinyl acetate, polycarbonate, polyesters, polyamides, polystyrene, polymethyl methacrylate, acrylonitrile-butadiene-styrene copolymers, or polyvinyl chloride.

Polyolefin resins are preferable as thermoplastic resins, and the following compounds are preferable as polyolefin resins.

(1) Homopolymers of $\alpha$-olefins: for example, polyethylene, polypropylene, etc.

(2) Ethylene-$\alpha$-olefin copolymers: for example, ethylenepropylene copolymer, ethylene-butene-1 copolymer, ethylene-4-methyl-1-pentene copolymer, or ethylene-hexene copolymer, etc.
(3) Copolymers of ethylene with organic carboxylic acid derivatives having an ethylenic unsaturated bond: for example, ethylene-methyl methacrylate copolymer, ethylene-vinyl acetate copolymer, ethylene-acrylic acid copolymer, or ethylene-vinyl acetate-methyl methacrylate copolymer, etc.

Another embodiment of the present invention is a resin formulation formed by knitting or weaving resin yarn, obtained by melt spinning a thermoplastic resin that does not contain a composition for resin formulation containing natural pyrethrin and an antioxidant, so as to form a large number of meshes, to shape into a net shape, followed by coating the net-shaped molded body with the composition for resin formulation containing natural pyrethrin and an antioxidant.

Yet another embodiment of the present invention is a resin formulation formed by knitting or weaving resin yarn, obtained by melt spinning a thermoplastic resin composition containing a thermoplastic resin and either natural pyrethrin or an antioxidant, so as to form a large number of meshes, to shape into a net shape, followed by coating the net-shaped molded body with either natural pyrethrin or an antioxidant not contained in the net-shaped molded body.

Yet another embodiment of the present invention is a resin formulation formed by knitting or weaving resin yarn, obtained by melt spinning a thermoplastic resin composition containing a thermoplastic resin and a part of the total amount of a composition for resin formulation containing natural pyrethrin and an antioxidant contained in the final product, so as to form a large number of meshes, to shape into a net shape, followed by coating the net-shaped molded body with the remaining composition for resin formulation to be contained in the final product.

As yet another embodiment of the present invention, resin formulations are not limited to net-shaped molded bodies, and may be formed into, for example, plate shape, film shape, sheet shape (single layer or multi-layer), tape shape, yarn shape, mesh shape, fabric shape, ring shape, tube shape, pipe shape, string shape, mat shape, or block shape, etc.

As yet another embodiment of the present invention, specific product forms of the resin formulation may be duvet covers, pillow covers, protective covers, product packaging, curtains, mattresses, sofa members, animal collars, animal ear tags, clothing, protective hats, arm/leg covers, lure strings, horticultural stakes, crop protection films, agricultural mulch, greenhouse films, screen doors, mosquito nets, garbage bags, garbage storage nets, drainage nets, waste members, trash cans, drainage members, cushioning materials, foamed materials, heat insulating materials, various tubes, drain pipes, or gaskets, etc.

Regardless of the shape or product form, the resin formulation can exhibit excellent insect pest controlling effects either by volatilization of the composition for resin formulation from the resin formulation or by contact with the resin formulation.

One embodiment of the resin formulation of the present invention can be produced as follows:

(1) A thermoplastic resin, natural pyrethrin, antioxidant(s), and optional additives are mixed and stirred, and the obtained mixture is melt-kneaded.
(2) A thermoplastic resin, at least one component selected from natural pyrethrin and antioxidant(s), and optional additives are mixed and stirred, the obtained mixture is melt-kneaded to obtain a resin molded body, and the component that has not been selected is coated on the surface of the resin molded body.
(3) A thermoplastic resin and optional additives are mixed and stirred, and the obtained mixture is melt-kneaded to obtain a resin molded body. Then, natural pyrethrin and antioxidant(s) are coated on the surface of the resin molded body.
(4) A thermoplastic resin, a part of the total amount of natural pyrethrin and antioxidant(s), and optional additives are mixed and stirred, and the obtained mixture is melt-kneaded to obtain a resin molded body. Then, the remaining natural pyrethrin and the antioxidant(s) are coated on the surface of the resin molded body.

Alternatively, one or more components selected from natural pyrethrin and antioxidant(s) may also be supported on a carrier, and then melt-kneaded with a thermoplastic resin to produce the resin composition of the present invention. Examples of carriers include silica-based compounds, zeolites, clay minerals, metal oxides, micas, hydrotalcites, and organic carriers. As silica-based compounds, there are amorphous silica and crystalline silica, and examples thereof include powdered silicate, fine powder silicate, acid clay, diatomaceous earth, quartz, and white carbon. Examples of zeolites include A-type zeolite and mordenite; eamples of clay minerals include montmorillonite, saponite, beidellite, bentonite, kaolinite, halloysite, nacrite, dickite, anauxite, illite, and sericite; examples of metal oxides include zinc oxide, magnesium oxide, aluminum oxide, iron oxide, copper oxide, and titanium oxide; examples of micas include mica and vermiculite; examples of hydrotalcites include hydrotalcite and smectite; and examples of organic carriers include carbons (such as charcoal, peat, and grass peat), polymer beads (such as microcrystalline cellulose, polystyrene beads, acrylic ester beads, methacrylic ester beads, and polyvinyl alcohol beads), and their crosslinked polymer beads. Other examples include perlite, gypsum, ceramics, and volcanic rock. As the carrier, amorphous inorganic carriers are preferable, and amorphous silica is more preferable.

In one embodiment of the resin formulation of the present invention, in addition to producing by melt spinning a resin composition containing a thermoplastic resin, natural pyrethrin, and an antioxidant, methods generally used for resin molding processing can be applied, and for example, extrusion molding, injection molding, blow molding, compression molding, powder molding, or press molding can produce the target molded body. When coating a part of the raw materials onto the molded body, for example, a dipping method or a spraying method can be applied.

In one embodiment of the resin formulation of the present invention, relative to the total amount of the resin formulation, the content of thermoplastic resin(s) may be 30 to 99% by mass, preferably 50 to 99% by mass, and the content of the composition for resin formulation containing natural pyrethrin and antioxidant(s) may be 1 to 70% by mass, preferably 1 to 50% by mass. Here, the sum of the contents of the thermoplastic resin (s) and the composition for resin formulation does not exceed 100% by mass.

One embodiment of the composition for resin formulation of the present invention is a composition containing 0.01 to 100 parts by mass, preferably 0.05 to 10 parts by mass, more preferably 0.1 to 5 parts by mass of a phosphorus-based antioxidant per 1 part by mass of natural pyrethrin.

One embodiment of the composition for resin formulation of the present invention is a composition containing, per 1 part by mass of natural pyrethrin, 0.01 to 100 parts by mass, preferably 0.05 to 50 parts by mass, more preferably 0.1 to 10 parts by mass of a compound represented by formula (1)

[Chemical 3]

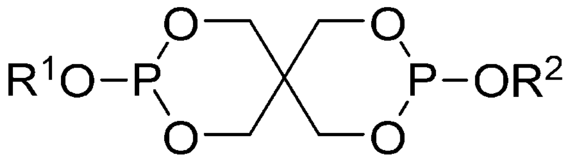

(1)

[wherein $R^1$ and $R^2$ have the meanings defined above).

Another embodiment of the composition for resin formulation of the present invention is a composition containing, per 1 part by mass of natural pyrethrin, 0.01 to 100 parts by mass, preferably 0.05 to 50 parts by mass, more preferably 0.1 to 10 parts by mass of 3,9-bis(isodecyloxy)-2,4,8,10-tetraoxa-3,9-diphosphaspiro[5.5]undecane.

Another embodiment of the composition for resin formulation of the present invention is a composition containing, per 1 part by mass of natural pyrethrin, 0.01 to 100 parts by mass, preferably 0.05 to 50 parts by mass, more preferably 0.1 to 10 parts by mass, of 3,9-bis(isotridecyloxy)-2,4,8,10-tetraoxa-3,9-diphosphaspiro[5.5]undecane.

In one embodiment of the composition for resin formulation of the present invention, examples of aspects of compositions containing natural pyrethrin and a phosphorus-based antioxidant (also referred to as compositions for resin formulation) include the following compositions.

[Aspect R1] A composition containing natural pyrethrin and a compound represented by formula (1).

[Aspect R2] A composition containing natural pyrethrin and 3,9-bis(isodecyloxy)-2,4,8,10-tetraoxa-3,9-diphosphaspiro[5.5]undecane.

[Aspect R3] A composition containing 10 parts by mass of natural pyrethrin and 1 part by mass of 3,9-bis(isodecyloxy)-2,4,8,10-tetraoxa-3,9-diphosphaspiro[5.5]undecane.

[Aspect R4] A composition containing natural pyrethrin and 3,9-bis(isotridecyloxy)-2,4,8,10-tetraoxa-3,9-diphosphaspiro[5.5]undecane.

[Aspect R5] A composition containing 10 parts by mass of natural pyrethrin and 1 part by mass of 3,9-bis(isotridecyloxy)-2,4,8,10-tetraoxa-3,9-diphosphaspiro[5.5]undecane.

Examples of target insect pests effectively controlled by the resin formulation according to one embodiment of the present invention include the same insect pests as above-mentioned target insect pests to which the insect pest controlling formulation for heat-transpiration is applied. It also may be same that in particular, Culicidae such as Culex, Aedes, and Anopheles are mentioned as target insect pests to be controlled.

One embodiment of the present invention is a method for controlling target insect pests, which includes placing a resin formulation at room temperature and volatilizing an effective amount of a composition for resin formulation into the atmosphere, or allowing target insect pests to contact with the resin formulation.

Another embodiment of the present invention is, such that the method for controlling target insect pests is a method for controlling mosquitoes.

<Manufacturing Use Product>

One embodiment of the present invention is a manufacturing use product for producing industrial products such as insect control agents. In this description, the manufacturing use product may be referred to as "Manufacturing Use Product" (hereinafter sometimes abbreviated as MUP). For MUP, suppression of oxidation and polymerization during storage, as well as excellent storage stability, are required.

The MUP may be a composition containing natural pyrethrin and one or more phosphorus-based antioxidants selected from Group $P^U$, or one or more sulfur-based antioxidants selected from Group S.

Group $P^U$ is a group consisting of 3,9-bis(isodecyloxy)-2,4,8,10-tetraoxa-3,9-diphosphaspiro[5.5]undecane, 3,9-bis(2,4-di-tert-butylphenoxy)-2,4,8,10-tetraoxa-3,9-diphosphaspiro[5.5]undecane, tris(nonylphenyl) phosphite, triphenyl phosphite, tetrakis(2,4-di-tert-butylphenyl) 4,4'-biphenylenediphosphinate, and tridodecyl trithiophosphite.

Group S is a group consisting of pentaerythritol tetrakis[3-(dodecylthio)propionate], 2-mercaptobenzimidazole, 2,4-bis[(dodecylthio)methyl]-6-methylphenol, and didodecyl 3,3'-thiodipropionate.

In one embodiment, the MUP may be a composition containing natural pyrethrin and a sulfur-based antioxidant such as pentaerythritol tetrakis[3-(dodecylthio)propionate], 2-mercaptobenzimidazole, or 2,4-bis[(dodecylthio)methyl]-6-methylphenol.

In another embodiment, the MUP may further contain a phenolic antioxidant such as BHT.

In yet another embodiment, the MUP may further contain citric acid.

In one embodiment, the content of phosphorus-based antioxidant(s) or sulfur-based antioxidant(s) in the MUP is 0.5 to 12% by mass, 0.5 to 10% by mass, 0.5 to 5% by mass, or 0.5 to 1.5% by mass, preferably 0.8 to 5% by mass, more preferably 0.8 to 1.5% by mass, relative to the total amount of the MUP, and the sum of the contents of phosphorus-based antioxidant(s) or sulfur-based antioxidant(s) and natural pyrethrin may be 100% by mass.

In another embodiment, when the MUP contains phenolic antioxidant(s) such as BHT, the content of BHT is 1 to 10% by mass, preferably 2 to 8% by mass, more preferably 4 to 6% by mass, relative to the total amount of the MUP, and the sum of the contents of phosphorus-based antioxidant(s) or sulfur-based antioxidant (s) and natural pyrethrin may be 100% by mass. That is, in the MUP of this embodiment, the content of phosphorus-based antioxidant(s) or sulfur-based antioxidant(s) is 0.5 to 10% by mass, preferably 0.8 to 5% by mass, more preferably 0.8 to 1.5% by mass, and the content of phenolic antioxidant(s) such as BHT is 1 to 10% by mass, preferably 2 to 8% by mass, more preferably 4 to 6% by mass, and the sum of the contents of phosphorus-based antioxidant(s) or sulfur-based antioxidant(s), phenolic antioxidant(s) such as BHT, and natural pyrethrin may be 100% by mass.

In yet another embodiment, where the MUP contains citric acid, the content of citric acid is 0.5 to 10% by mass, preferably 0.8 to 5% by mass, more preferably 0.8 to 1.5% by mass, relative to the total amount of the MUP, and the sum of the contents of phosphorus-based antioxidant(s) or sulfur-based antioxidant(s), phenolic antioxidant(s) such as BHT, and natural pyrethrin may be 100% by mass.

One embodiment of the MUP of the present invention is such that, relative to the total amount of the MUP, the content of natural pyrethrin is 20 to 90% by mass, preferably 30 to 80% by mass, 50 to 80% by mass, more preferably 50 to 75% by mass, the content of phenolic antioxidant(s) such as BHT is 0 to 10% by mass, 1 to 10% by mass, preferably 2 to 8% by mass, more preferably 4 to 6% by mass, the content of one or more antioxidants selected from the group consisting of 3,9-bis(isodecyloxy)-2,4,8,10-tetraoxa-3,9-diphosphaspiro[5.5]undecane, 3,9-bis(2,4-di-tert-butylphenoxy)-2,4,8,10-tetraoxa-3,9-diphosphaspiro[5.5]undecane, tris(nonylphenyl) phosphite, triphenyl phosphite, tetrakis(2,4-di-tert-butylphenyl) 4,4'-biphenylenediphosphinate, tridodecyl trithiophosphite, didodecyl 3,3'-thiodipropionate, pentaerythritol tetrakis[3-(dodecylthio)propionate], 2-mercaptobenzimidazole, and 2,4-bis[(dodecylthio)methyl]-6-methylphenol is 0.5 to 10% by mass, preferably 0.8 to 5% by mass, more preferably 0.8 to 1.5% by mass, the content of citric acid is 0 to 10% by mass, 0.5 to 10% by mass, preferably 0.8 to 5% by mass, more preferably 0.8 to 1.5% by mass, and the sum of the contents of natural pyrethrin, the phenolic antioxidant(s) such as BHT, the antioxidants, and citric acid does not exceed 100% by mass.

Another embodiment of the MUP of the present invention is such that, relative to the total amount of the MUP, the content of natural pyrethrin is 20 to 90% by mass, preferably 30 to 80% by mass, 50 to 80% by mass, more preferably 50 to 75% by mass, the content of BHT is 0 to 10% by mass, 1 to 10% by mass, preferably 2 to 8% by mass, more preferably 4 to 6% by mass, the content of 3,9-bis(isodecyloxy)-2,4,8,10-tetraoxa-3,9-diphosphaspiro[5.5]undecane is 0.5 to 10% by mass, preferably 0.8 to 5% by mass, more preferably 0.8 to 1.5% by mass, the content of citric acid is 0 to 10% by mass, 0.8 to 10% by mass, preferably 0.8 to 5% by mass, more preferably 0.8 to 1.5% by mass, and the sum of the contents of natural pyrethrin, BHT, 3,9-bis(isodecyloxy)-2,4,8,10-tetraoxa-3,9-diphosphaspiro[5.5]undecane, and citric acid does not exceed 100% by mass.

Yet another embodiment of the MUP of the present invention is such that, relative to the total amount of the MUP, the content of natural pyrethrin is 20 to 90% by mass, the content of BHT is 0 to 10% by mass, the content of 3,9-bis(isodecyloxy)-2,4,8,10-tetraoxa-3,9-diphosphaspiro[5.5]undecane is 0.5 to 10% by mass, and the content of citric acid is 0 to 10% by mass, and the sum of the contents of natural pyrethrin, BHT, 3,9-bis(isodecyloxy)-2,4,8,10-tetraoxa-3,9-diphosphaspiro[5.5]undecane, and citric acid does not exceed 100% by mass.

Yet another embodiment of the MUP of the present invention is such that, relative to the total amount of the MUP, the content of natural pyrethrin is 20 to 90% by mass, the content of BHT is 1 to 10% by mass, the content of 3,9-bis(isodecyloxy)-2,4,8,10-tetraoxa-3,9-diphosphaspiro[5.5]undecane is 0.5 to 10% by mass, and the content of citric acid is 0.8 to 10% by mass, and the sum of the contents of natural pyrethrin, BHT, 3,9-bis(isodecyloxy)-2,4,8,10-tetraoxa-3,9-diphosphaspiro[5.5]undecane, and citric acid does not exceed 100% by mass.

Yet another embodiment of the MUP of the present invention is such that, relative to the total amount of the MUP, the content of natural pyrethrin is 20 to 90% by mass, preferably 30 to 80% by mass, 50 to 80% by mass, more preferably 50 to 75% by mass, the content of BHT is 0 to 10% by mass, 1 to 10% by mass, preferably 2 to 8% by mass, more preferably 4 to 6% by mass, the content of 3,9-bis(2,4-di-tert-butylphenoxy)-2,4,8,10-tetraoxa-3,9-diphosphaspiro[5.5]undecane is 0.5 to 10% by mass, preferably 0.8 to 5% by mass, more preferably 0.8 to 1.5% by mass, and the content of citric acid is 0 to 10% by mass, 0.8 to 10% by mass, preferably 0.8 to 5% by mass, more preferably 0.8 to 1.5% by mass, and the sum of the contents of natural pyrethrin, BHT, 3,3,9-bis(2,4-di-tert-butylphenoxy)-2,4,8,10-tetraoxa-3,9-diphosphaspiro[5.5]undecane, and citric acid does not exceed 100% by mass.

Yet another embodiment of the MUP of the present invention is such that, relative to the total amount of the MUP, the content of natural pyrethrin is 20 to 90% by mass, the content of BHT is 0 to 10% by mass, the content of 3,9-bis(2,4-di-tert-butylphenoxy)-2,4,8,10-tetraoxa-3,9-diphosphaspiro[5.5]undecane is 0.5 to 10% by mass, and the content of citric acid is 0 to 10% by mass, and the sum of the contents of natural pyrethrin, BHT, 3,3,9-bis(2,4-di-tert-butylphenoxy)-2,4,8,10-tetraoxa-3,9-diphosphaspiro[5.5]undecane, and citric acid does not exceed 100% by mass.

Yet another embodiment of the MUP of the present invention is such that, relative to the total amount of the MUP, the content of natural pyrethrin is 20 to 90% by mass, the content of BHT is 1 to 10% by mass, the content of 3,9-bis(2,4-di-tert-butylphenoxy)-2,4,8,10-tetraoxa-3,9-diphosphaspiro[5.5]undecane is 0.5 to 10% by mass, and the content of citric acid is 0.8 to 10% by mass, and the sum of the contents of natural pyrethrin, BHT, 3,9-bis(2,4-di-tert-butylphenoxy)-2,4,8,10-tetraoxa-3,9-diphosphaspiro[5.5]undecane, and citric acid does not exceed 100% by mass.

Yet another embodiment of the MUP of the present invention is such that, relative to the total amount of the MUP, the content of natural pyrethrin is 20 to 90% by mass, preferably 30 to 80% by mass, 50 to 80% by mass, more preferably 50 to 75% by mass, the content of BHT is 0 to 10% by mass, 1 to 10% by mass, preferably 2 to 8% by mass, more preferably 4 to 6% by mass, the content of tris(nonylphenyl) phosphite is 0.5 to 10% by mass, preferably 0.8 to 5% by mass, more preferably 0.8 to 1.5% by mass, and the content of citric acid is 0 to 10% by mass, 0.8 to 10% by mass, preferably 0.8 to 5% by mass, more preferably 0.8 to 1.5% by mass, and the sum of the contents of natural pyrethrin, BHT, tris(nonylphenyl) phosphite, and citric acid does not exceed 100% by mass.

Yet another embodiment of the MUP of the present invention is such that, relative to the total amount of the MUP, the content of natural pyrethrin is 20 to 90% by mass, the content of BHT is 0 to 10% by mass, the content of tris(nonylphenyl) phosphite is 0.5 to 10% by mass, and the content of citric acid is 0 to 10% by mass, and the sum of the contents of natural pyrethrin, BHT, tris (nonylphenyl) phosphite, and citric acid does not exceed 100% by mass.

Yet another embodiment of the MUP of the present invention is such that, relative to the total amount of the MUP, the content of natural pyrethrin is 20 to 90% by mass, the content of BHT is 1 to 10% by mass, the content of tris(nonylphenyl) phosphite is 0.5 to 10% by mass, and the content of citric acid is 0.8 to 10% by mass, and the sum of the contents of natural pyrethrin, BHT, tris (nonylphenyl) phosphite, and citric acid does not exceed 100% by mass.

Yet another embodiment of the MUP of the present invention is such that, relative to the total amount of the MUP, the content of natural pyrethrin is 20 to 90% by mass, preferably 30 to 80% by mass, 50 to 80% by mass, more preferably 50 to 75% by mass, the content of BHT is 0 to 10% by mass, 1 to 10% by mass, preferably 2 to 8% by mass, more preferably 4 to 6% by mass, the content of triphenyl phosphite is 0.5 to 10% by mass, preferably 0.8 to 5% by mass, more preferably 0.8 to 1.5% by mass, and the content of citric acid is 0 to 10% by mass, 0.8 to 10% by mass, preferably 0.8 to 5% by mass, more preferably 0.8 to 1.5% by mass, and the sum of the contents of natural pyrethrin, BHT, triphenyl phosphite, and citric acid does not exceed 100% by mass.

Yet another embodiment of the MUP of the present invention is such that, relative to the total amount of the MUP, the content of natural pyrethrin is 20 to 90% by mass, the content of BHT is 0 to 10% by mass, the content of triphenyl phosphite is 0.5 to 10% by mass, and the content of citric acid is 0 to 10% by mass, and the sum of the contents of natural pyrethrin, BHT, triphenyl phosphite, and citric acid does not exceed 100% by mass.

Yet another embodiment of the MUP of the present invention is such that, relative to the total amount of the MUP, the content of natural pyrethrin is 20 to 90% by mass, the content of BHT is 1 to 10% by mass, the content of triphenyl phosphite is 0.5 to 10% by mass, and the content of citric acid is 0.8 to 10% by mass, and the sum of the contents of natural pyrethrin, BHT, triphenyl phosphite, and citric acid does not exceed 100% by mass.

Yet another embodiment of the MUP of the present invention is such that, relative to the total amount of the MUP, the content of natural pyrethrin is 20 to 90% by mass, preferably 30 to 80% by mass, 50 to 80% by mass, more preferably 50 to 75% by mass, the content of BHT is 0 to 10% by mass, 1 to 10% by mass, preferably 2 to 8% by mass, more preferably 4 to 6% by mass, the content of tetrakis(2,4-di-tert-butylphenyl) 4,4'-biphenylenediphosphinate is 0.5 to 10% by mass,

preferably 0.8 to 5% by mass, more preferably 0.8 to 1.5% by mass, and the content of citric acid is 0 to 10% by mass, 0.8 to 10% by mass, preferably 0.8 to 5% by mass, more preferably 0.8 to 1.5% by mass, and the sum of the contents of natural pyrethrin, BHT, tetrakis(2,4-di-tert-butylphenyl) 4,4'-biphenylenediphosphinate, and citric acid does not exceed 100% by mass.

Yet another embodiment of the MUP of the present invention is such that, relative to the total amount of the MUP, the content of natural pyrethrin is 20 to 90% by mass, the content of BHT is 0 to 10% by mass, the content of tetrakis(2,4-di-tert-butylphenyl) 4,4'-biphenylenediphosphinate is 0.5 to 10% by mass, and the content of citric acid is 0 to 10% by mass, and the sum of the contents of natural pyrethrin, BHT, tetrakis(2,4-di-tert-butylphenyl) 4,4'-biphenylenediphosphinate, and citric acid does not exceed 100% by mass.

Yet another embodiment of the MUP of the present invention is such that, relative to the total amount of the MUP, the content of natural pyrethrin is 20 to 90% by mass, the content of BHT is 1 to 10% by mass, the content of tetrakis(2,4-di-tert-butylphenyl) 4,4'-biphenylenediphosphinate is 0.5 to 10% by mass, and the content of citric acid is 0.8 to 10% by mass, and the sum of the contents of natural pyrethrin, BHT, tetrakis(2,4-di-tert-butylphenyl) 4,4'-biphenylenediphosphinate, and citric acid does not exceed 100% by mass.

Yet another embodiment of the MUP of the present invention is such that, relative to the total amount of the MUP, the content of natural pyrethrin is 20 to 90% by mass, preferably 30 to 80% by mass, 50 to 80% by mass, more preferably 50 to 75% by mass, the content of BHT is 0 to 10% by mass, 1 to 10% by mass, preferably 2 to 8% by mass, more preferably 4 to 6% by mass, the content of tridodecyl trithiophosphite is 0.5 to 10% by mass, preferably 0.8 to 5% by mass, more preferably 0.8 to 1.5% by mass, and the content of citric acid is 0 to 10% by mass, 0.8 to 10% by mass, preferably 0.8 to 5% by mass, more preferably 0.8 to 1.5% by mass, and the sum of the contents of natural pyrethrin, BHT, tridodecyl trithiophosphite, and citric acid does not exceed 100% by mass.

Yet another embodiment of the MUP of the present invention is such that, relative to the total amount of the MUP, the content of natural pyrethrin is 20 to 90% by mass, the content of BHT is 0 to 10% by mass, the content of tridodecyl trithiophosphite is 0.5 to 10% by mass, and the content of citric acid is 0 to 10% by mass, and the sum of the contents of natural pyrethrin, BHT, tridodecyl trithiophosphite, and citric acid does not exceed 100% by mass.

Yet another embodiment of the MUP of the present invention is such that, relative to the total amount of the MUP, the content of natural pyrethrin is 20 to 90% by mass, the content of BHT is 1 to 10% by mass, the content of tridodecyl trithiophosphite is 0.5 to 10% by mass, and the content of citric acid is 0.8 to 10% by mass, and the sum of the contents of natural pyrethrin, BHT, tridodecyl trithiophosphite, and citric acid does not exceed 100% by mass.

Yet another embodiment of the MUP of the present invention is such that, relative to the total amount of the MUP, the content of natural pyrethrin is 20 to 90% by mass, preferably 30 to 80% by mass, 50 to 80% by mass, more preferably 50 to 75% by mass, the content of BHT is 0 to 10% by mass, 1 to 10% by mass, preferably 2 to 8% by mass, more preferably 4 to 6% by mass, the content of didodecyl 3,3'-thiodipropionate is 0.5 to 10% by mass, preferably 0.8 to 5% by mass, more preferably 0.8 to 1.5% by mass, and the content of citric acid is 0 to 10% by mass, 0.8 to 10% by mass, preferably 0.8 to 5% by mass, more preferably 0.8 to 1.5% by mass, and the sum of the contents of natural pyrethrin, BHT, didodecyl 3,3'-thiodipropionate, and citric acid does not exceed 100% by mass.

Yet another embodiment of the MUP of the present invention is such that, relative to the total amount of the MUP, the content of natural pyrethrin is 20 to 90% by mass, the content of BHT is 0 to 10% by mass, the content of didodecyl 3,3'-thiodipropionate is 0.5 to 10% by mass, and the content of citric acid is 0 to 10% by mass, and the sum of the contents of natural pyrethrin, BHT, didodecyl 3,3'-thiodipropionate, and citric acid does not exceed 100% by mass.

Yet another embodiment of the MUP of the present invention is such that, relative to the total amount of the MUP, the content of natural pyrethrin is 20 to 90% by mass, the content of BHT is 1 to 10% by mass, the content of didodecyl 3,3'-thiodipropionate is 0.5 to 10% by mass, and the content of citric acid is 0.8 to 10% by mass, and the sum of the contents of natural pyrethrin, BHT, didodecyl 3,3'-thiodipropionate, and citric acid not exceeding 100% by mass.

Yet another embodiment of the MUP of the present invention is such that, relative to the total amount of the MUP, the content of natural pyrethrin is 20 to 90% by mass, preferably 30 to 80% by mass, 50 to 80% by mass, more preferably 50 to 75% by mass, the content of BHT is 0 to 10% by mass, 1 to 10% by mass, preferably 2 to 8% by mass, more preferably 4 to 6% by mass, the content of pentaerythritol tetrakis[3-(dodecylthio)propionate] is 0.5 to 10% by mass, preferably 0.8 to 5% by mass, more preferably 0.8 to 1.5% by mass, and the content of citric acid is 0 to 10% by mass, 0.8 to 10% by mass, preferably 0.8 to 5% by mass, more preferably 0.8 to 1.5% by mass, and the sum of the contents of natural pyrethrin, BHT, pentaerythritol tetrakis[3-(dodecylthio)propionate], and citric acid does not exceed 100% by mass.

Yet another embodiment of the MUP of the present invention is such that, relative to the total amount of the MUP, the content of natural pyrethrin is 20 to 90% by mass, the content of BHT is 0 to 10% by mass, the content of pentaerythritol tetrakis[3-(dodecylthio)propionate] is 0.5 to 10% by mass, and the content of citric acid is 0 to 10% by mass, and the sum of the contents of natural pyrethrin, BHT, pentaerythritol tetrakis[3-(dodecylthio)propionate], and citric acid does not exceed 100% by mass.

Yet another embodiment of the MUP of the present invention is such that, relative to the total amount of the MUP, the content of natural pyrethrin is 20 to 90% by mass, the content of BHT is 1 to 10% by mass, the content of pentaerythritol

tetrakis[3-(dodecylthio)propionate] is 0.5 to 10% by mass, and the content of citric acid is 0.8 to 10% by mass, and the sum of the contents of natural pyrethrin, BHT, pentaerythritol tetrakis[3-(dodecylthio)propionate], and citric acid does not exceed 100% by mass.

Yet another embodiment of the MUP of the present invention is such that, relative to the total amount of the MUP, the content of natural pyrethrin is 20 to 90% by mass, preferably 30 to 80% by mass, 50 to 80% by mass, more preferably 50 to 75% by mass, the content of BHT is 0 to 10% by mass, 1 to 10% by mass, preferably 2 to 8% by mass, more preferably 4 to 6% by mass, the content of 2-mercaptobenzimidazole is 0.5 to 10% by mass, preferably 0.8 to 5% by mass, more preferably 0.8 to 1.5% by mass, and the content of citric acid is 0 to 10% by mass, 0.8 to 10% by mass, preferably 0.8 to 5% by mass, more preferably 0.8 to 1.5% by mass, and the sum of the contents of natural pyrethrin, BHT, 2-mercaptobenzimidazole, and citric acid does not exceed 100% by mass.

Yet another embodiment of the MUP of the present invention is such that, relative to the total amount of the MUP, the content of natural pyrethrin is 20 to 90% by mass, the content of BHT is 0 to 10% by mass, the content of 2-mercaptobenzimidazole is 0.5 to 10% by mass, and the content of citric acid is 0 to 10% by mass, and the sum of the contents of natural pyrethrin, BHT, 2-mercaptobenzimidazole, and citric acid does not exceed 100% by mass.

Yet another embodiment of the MUP of the present invention is such that, relative to the total amount of the MUP, the content of natural pyrethrin is 20 to 90% by mass, the content of BHT is 1 to 10% by mass, the content of 2-mercaptobenzimidazole is 0.5 to 10% by mass, and the content of citric acid is 0.8 to 10% by mass, and the sum of the contents of natural pyrethrin, BHT, 2-mercaptobenzimidazole, and citric acid does not exceed 100% by mass.

Yet another embodiment of the MUP of the present invention is such that, relative to the total amount of the MUP, the content of natural pyrethrin is 20 to 90% by mass, preferably 30 to 80% by mass, 50 to 80% by mass, more preferably 50 to 75% by mass, the content of BHT is 0 to 10% by mass, 1 to 10% by mass, preferably 2 to 8% by mass, more preferably 4 to 6% by mass, the content of 2,4-bis[(dodecylthio)methyl]-6-methylphenol is 0.5 to 10% by mass, preferably 0.8 to 5% by mass, more preferably 0.8 to 1.5% by mass, and the content of citric acid is 0 to 10% by mass, 0.8 to 10% by mass, preferably 0.8 to 5% by mass, more preferably 0.8 to 1.5% by mass, and the sum of the contents of natural pyrethrin, BHT, 2,4-bis[(dodecylthio)methyl]-6-methylphenol, and citric acid does not exceed 100% by mass.

Yet another embodiment of the MUP of the present invention is such that, relative to the total amount of the MUP, the content of natural pyrethrin is 20 to 90% by mass, the content of BHT is 0 to 10% by mass, the content of 2,4-bis[(dodecylthio)methyl]-6-methylphenol is 0.5 to 10% by mass, and the content of citric acid is 0 to 10% by mass, and the sum of the contents of natural pyrethrin, BHT, 2,4-bis[(dodecylthio)methyl]-6-methylphenol, and citric acid does not exceed 100% by mass.

Yet another embodiment of the MUP of the present invention is such that, relative to the total amount of the MUP, the content of natural pyrethrin is 20 to 90% by mass, the content of BHT is 1 to 10% by mass, the content of 2,4-bis[(dodecylthio)methyl]-6-methylphenol is 0.5 to 10% by mass, and the content of citric acid is 0.8 to 10% by mass, and the sum of the contents of natural pyrethrin, BHT, 2,4-bis[(dodecylthio)methyl]-6-methylphenol, and citric acid does not exceed 100% by mass.

The composition of the present invention can also be applied in the agricultural field.

The composition of the present invention may be mixed with or used in combination with one or more ingredients selected from the group consisting of the following Group (a), Group (b), Group (c), and Group (d) (hereinafter referred to as "Present ingredient").

The term "mixed or used in combination" means that the composition of the present invention and Present ingredient are used simultaneously, separately, or at time intervals.

When the composition of the present invention is used simultaneously with Present ingredient, the composition of the present invention and Present ingredient may be contained in separate formulations or contained in one formulation.

In one embodiment of the present invention, although not particularly limited, one or more components selected from the group consisting of Group (a), Group (b), Group (c), and Group (d) below are mixed or used together so that the amount is 0.001 to 1000 parts by mass, preferably 0.002 to 500 parts by mass, and more preferably 0.01 to 100 parts by mass, relative to 1 part by mass of natural pyrethrin.

One aspect of the present invention is, such that one or more ingredients selected from the group consisting of Group (a), Group (b), Group (c), and Group (d), and the composition of the present invention are contained (hereinafter referred to as "Composition A"). One embodiment of Composition A, although not particularly limited, is a composition containing one or more ingredients selected from the group consisting of Group (a), Group (b), Group (c), and Group (d) in an amount of 0.001 to 1000 parts by mass, preferably 0.002 to 500 parts by mass, and more preferably 0.01 to 100 parts by mass, relative to 1 part by mass of natural pyrethrin.

Group (a) is a group consisting of acetylcholinesterase inhibitors (for example, carbamate insecticides and organophosphate insecticides), GABA-gated chloride channel blockers (for example, phenylpyrazole insecticides), sodium channel modulators (for example, pyrethroid insecticides), nicotinic acetylcholine receptor competitive modulators (for example, neonicotinoid insecticides), nicotinic acetylcholine receptor allosteric modulators, glutamate-gated chloride channel allosteric modulators (for example, macrolide insecticides), juvenile hormone mimics, multisite inhibitors,

chordotonal organ TRPV channel modulators, mite growth inhibitors, microbial disruptors of insect midgut membranes, inhibitors of mitochondrial ATP synthase, uncouplers of oxidative phosphorylation, nicotinic acetylcholine receptor channel blockers (for example, nereistoxin insecticides), inhibitors of chitin biosynthesis, moulting disruptors, ecdysone receptor agonists, octopamine receptor agonists, mitochondrial complexes I, II, III, and IV electron transport inhibitors, voltage-dependent sodium channel blockers, inhibitors of acetyl CoA carboxylase, ryanodine receptor modulators (for example, diamide insecticides), chordotonal organ modulators, and microbial insecticides, and other insecticidal active ingredients, miticidal active ingredients, and nematicidal active ingredients. They are described in the classification on the basis of action mechanism by IRAC.

Group (b) is a group consisting of nucleic acids synthesis inhibitors (for example, phenylamide fungicides and acylamino acid fungicides), cell division and cytoskeleton inhibitors (for example, MBC fungicides), respiration inhibitors (for example, QoI fungicides, and QiI fungicides), amino acids synthesis and protein synthesis inhibitors (for example, anilino-pyridine fungicides), signal transduction inhibitors, lipid synthesis and membrane synthesis inhibitors, sterol biosynthesis inhibitors (for example, DMI fungicides such as triazole fungicides), cell wall biosynthesis inhibitors, melanin synthesis inhibitors, plant defense inducers, fungicides with multi-site contact activity, microbial fungicides, and other fungicidal active ingredients. They are described in the classification on the basis of action mechanism by FRAC.

Group (c) is a group of plant growth regulatory ingredients (including mycorrhizal fungi and root nodule bacteria).

Group (d) is a group of repellent ingredients.

The composition of the present invention is effective against harmful arthropods such as insect pests and harmful mites, harmful nematodes, and harmful mollusks. Examples of harmful arthropods, harmful nematodes, and harmful mollusks include the following.

Hemiptera:

from the family Delphacidae, for example, small brown planthopper (Laodelphax striatellus), brown planthopper (Nilaparvata lugens), white-backed planthopper (Sogatella furcifera), corn planthopper (Peregrinus maidis), cereal leafhopper ( Javesella pellucida), sugarcane leafhopper (Perkinsiella saccharicida), Tagosodes orizicolus and Stenocranus pacificus;

from the family Cicadellidae, for example,

green rice leafhopper (Nephotettix cincticeps), green paddy leafhopper (Nephotettix virescens), rice leafhopper (Nephotettix nigropictus), zigzag-striped leafhopper (Recilia dorsalis), tea green leafhopper (Empoasca onukii), potato leafhopper (Empoasca fabae), corn leafhopper (Dalbulus maidis), rice leafhopper (Cofana spectra), and Amrasca biguttula biguttula;

from the family Aphrophoridae, for example, European spittlebug (Philaenus spumarius);

from the family Cercopidae, for example, Mahanarva posticata and Mahanarva fimbriolata;

from the family Aphididae, for example,

bean aphid (Aphis fabae), soybean aphid (Aphis glycines), cotton aphid (Aphis gossypii), green apple aphid (Aphis pomi), apple aphid (Aphis spiraecola), green peach aphid (Myzus persicae), leaf-curling plum aphid (Brachycaudus helichrysi), cabbage aphid (Brevicoryne brassicae), rosy apple aphid(Dysaphis plantaginea), false cabbage aphid (Lipaphis erysimi), potato aphid (Macrosiphum euphorbiae), foxglove aphid (Aulacorthum solani), lettuce aphid (Nasonovia ribisnigri), grain aphid (Rhopalosiphum padi), corn aphid (Rhopalosiphum maidis), brown citrus aphid (Toxoptera citricida), mealy plum aphid (Hyalopterus pruni), cane aphid (Melanaphis sacchari), black rice root aphid (Tetraneura nigriabdominalis), sugarcane cottony aphid (Ceratovacuna lanigera), apple woolly aphid (Eriosoma lanigerum), and English grain aphid (Sitobion avenae);

from the family Phylloxeridae, for example,

grapevine phylloxera (Daktulosphaira vitifoliae), Pecan phylloxera (Phylloxera devastatrix), Pecan leaf phylloxera (Phylloxera notabilis), and Southern pecan leaf phylloxera (Phylloxera russelae);

from the family Adelgidae, for example, hemlock woolly aphid (Adelges tsugae), balsam woolly aphid (Adelges piceae), and Aphrastasia pectinatae;

from the family Pentatomidae, for example, black rice bug (Scotinophara lurida), black paddy bug (Scotinophara coarctata), common green stink bug (Nezara antennata), white-spotted spined bug (Eysarcoris aeneus), lewis spined bug (Eysarcoris lewisi), white-spotted bug (Eysarcoris ventralis), Eysarcoris annamita, brown marmorated stink bug (Halyomorpha halys), green plant bug (Nezara viridula), brown stink bug(Euschistus heros), red banded stink bug(Piezodorus guildinii), Oebalus pugnax, Dichelops melacanthus and legume stink bug (Piezodorus hybneri);

from the family Cydnidae, for example, Scaptocoris castanea; from the family Alydidae, for example, bean bug (Riptortus clavatus), corbett rice bug (Leptocorisa chinensis), and rice bug (Leptocorisa acuta);

from the family Coreidae, for example, Cletus punctiger and Australian leaf-footed bug (Leptoglossus australis);

from the family Lygaeidae, for example, oriental chinch bug (Cavelerius saccharivorus), seed bug (Togo hemipterus), and chinch bug (Blissus leucopterus);

from the family Miridae, for example, rice leaf bug (Trigonotylus caelestialium), sorghum plant bug (Stenotus

rubrovittatus), wheat leaf bug (Stenodema calcarata), and American tarnished plant bug (Lygus lineolaris);

from the family Aleyrodidae, for example, greenhouse whitefly (Trialeurodes vaporariorum), tobacco whitefly (Bemisia tabaci), citrus whitefly (Dialeurodes citri), citrus spiny whitefly (Aleurocanthus spiniferus), tea spiny whitefly (Aleurocanthus camelliae), and Pealius euryae;

from the family Diaspididae, for example, Abgrallaspis cyanophylli, red scale (Aonidiella aurantii), San José scale (Diaspidiotus perniciosus), white peach scale (Pseudaulacaspis pentagona), arrowhead scale (Unaspis yanonensis), and citrus snow scale (Unaspis citri);

from the family Coccidae, for example, pink wax scale (Ceroplastes rubens);

from the family Margarodidae, for example, fluted scale (Icerya purchasi) and seychelles fluted scale (Icerya seychellarum) ;

from the family Pseudococcidae, for example, solanum mealybug (Phenacoccus solani), cotton mealybug (Phenacoccus solenopsis), Japanese mealybug (Planococcus kraunhiae), white peach scale (Pseudococcus comstocki), citrus mealybug (Planococcus citri), currant mealybug (Pseudococcus calceolariae), long-tailed mealybug (Pseudococcus longispinus), and tuttle mealybug (Brevennia rehi);

from the family Psyllidae, for example, citrus psylla (Diaphorina citri), two-spotted citrus psyllid (Trioza erytreae), pear sucker (Cacopsylla pyrisuga), Cacopsylla chinensis, potato psyllid (Bactericera cockerelli), and Pear psylla (Cacopsylla pyricola);

from the family Tingidae, for example, sycamore lace bug (Corythucha ciliata), aster tingid (Corythucha marmorata), Japanese pear lace bug (Stephanitis nashi), and azalea lace bug (Stephanitis pyrioides);

from the family Cimicidae, for example, common bed bug (Cimex lectularius) and tropical bed bug (Cimex hemipterus);

from the family Cicadidae, for example, Quesada gigas;

from the family Reduviidae, for example, Triatoma infestans, large kissing bug (Triatoma rubrofasciata), Triatoma dimidiata, and Rhodonius prolixus;

and the others.

Lepidoptera:

from the family Crambidae, for example, rice stem borer (Chilo suppressalis), Dark-headed stem borer (Chilo polychrysus), white stem borer (Scirpophaga innotata), yellow paddy borer (Scirpophaga incertulas), Rupela albina, rice leaf roller (Cnaphalocrocis medinalis), Marasmia patnalis, rice leaf roller (Marasmia exigua), cotton leaf roller (Notarcha derogata), corn borer (Ostrinia furnacalis), European corn borer (Ostrinia nubilalis), cabbage webworm (Hellula undalis), grape leafroller (Herpetogramma luctuosale), bluegrass webworm (Parapediasia teterrellus), rice case-worm (Nymphula depunctalis), Sugarcane borer (Diatraea saccharalis), and eggplant fruit borer (Leucinodes orbonalis);

from the family Pyralidae, for example, lesser cornstalk borer (Elasmopalpus lignosellus), mealworm moth (Plodia interpunctella), persimmon bark borer (Euzophera batangensis), and fig moth (Cadra cautella);

from the family Noctuidae, for example, cotton worm (Spodoptera litura), beet armyworm (Spodoptera exigua), rice armyworm (Mythimna separata), cabbage moth (Mamestra brassicae), pink borer (Sesamia inferens), grass armyworm (Spodoptera mauritia), green rice caterpillar (Naranga aenescens), Spodoptera frugiperda, true armyworm (Spodoptera exempta), Spodoptera cosmioides, semitropical armyworm (Spodoptera eridania), black cutworm (Agrotis ipsilon), turnip moth (Agrotis segetum), beet worm (Autographa nigrisigna), rice looper (Plusia festucae), Soybean looper (Chrysodeixis includens), Trichoplusia spp., Heliothis spp.(such as tobacco budworm (Heliothis virescens)), Helicoverpa spp. (such as tobacco budworm (Helicoverpa armigera), corn earworm (Helicoverpa zea)), velvet-bean caterpillar (Anticarsia gemmatalis), cotton leafworm (Alabama argillacea), and hop vine borer (Hydraecia immanis);

from the family Pieridae, for example, common cabbage worm (Pieris rapae);

from the family Tortricidae, for example, oriental fruit moth (Grapholita molesta), Grapholita dimorpha, soybean moth (Leguminivora glycinivorella), Matsumuraeses azukivora, summer fruit tortrix (Adoxophyes orana fasciata), smaller tea tortrix (Adoxophyes honmai), Japanese tea tortrix (Homona magnanima), apple tortrix (Archips fuscocupreanus), codling moth (Cydia pomonella), sugarcane shoot borer (Tetramoera schistaceana), bean shoot borer (Epinotia aporema), citrus fruit borer (Citripestis sagittiferella), and European grapevine moth (Lobesia botrana);

from the family Gracillariidae, for example, tea leaf roller (Caloptilia theivora) and Asiatic apple leaf miner (Phyllonorycter ringoniella);

from the family Carposinidae, for example, peach fruit moth (Carposina sasakii);

from the family Lyonetiidae, for example, coffee leaf miner (Leucoptera coffeella), peach leaf miner (Lyonetia clerkella), and Lyonetia prunifoliella;

from the family Lymantriidae, for example, Lymantria spp. (such as gypsy moth (Lymantria dispar)) and Euproctis spp.

(such as tea lymantriid (Euproctis pseudoconspersa));
from the family Plutellidae, for example, diamondback moth (Plutella xylostella);
from the family Gelechiidae, for example, peach worm (Anarsia lineatella), sweetpotato leaf folder (Helcystogramma triannulella), pink bollworm (Pectinophora gossypiella), potato moth (Phthorimaea operculella), and tomato leafminer (Tuta absoluta);
from the family Arctiidae, for example, American white moth (Hyphantria cunea);
from the family Castniidae, for example, giant sugarcane borer (Telchin licus);
from the family Cossidae, for example, Cossus insularis;
from the family Geometridae, for example, Ascotis selenaria;
from the family Limacodidae, for example, blue-striped nettle grub (Parasa lepida);
from the family Stathmopodidae, for example, persimmon fruit moth (Stathmopoda masinissa);
from the family Sphingidae, for example, tobacco hornworm (Acherontia lachesis);
from the family Sesiidae, for example, Nokona feralis, cherry borer (Synanthedon hector), and Synanthedon tenuis:

from the family Hesperiidae, for example, rice skipper (Parnara guttata);
from the family Tineidae, for example, casemaking clothes moth (Tinea translucens), common clothes moth (Tineola bisselliella) ;
and the others.

Thysanoptera:

from the family Thripidae, for example, western flower thrips (Frankliniella occidentalis), oriental thrips (Thrips palmi), yellow tea thrips (Scirtothrips dorsalis), onion thrips (Thrips tabaci), eastern flower thrips (Frankliniella intonsa), rice thrips (Stenchaetothrips biformis), Echinothrips americanus, and avocado thrips (Scirtothrips perseae);
from the family Phlaeothripidae, for example, aculeated rice thrips (Haplothrips aculeatus);
and the others.

Diptera:

from the family Anthomyiidae, for example, seedcorn maggot (Delia platura), onion maggot (Delia antiqua), and beet leaf miner (Pegomya cunicularia);
from the family Ulidiidae, for example, sugarbeet root maggot (Tetanops myopaeformis);
from the family Agromyzidae, for example, rice leaf miner (Agromyza oryzae), tomato leaf miner (Liriomyza sativae), chrysanthemum leaf miner (Liriomyza trifolii), and pea leafminer (Chromatomyia horticola);
from the family Chloropidae, for example, rice stem maggot (Chlorops oryzae);
from the family Tephritidae, for example, melon fly (Bactrocera cucurbitae), oriental fruit fly (Bactrocera dorsalis), Malaysian fruit fly (Bactrocera latifrons), olive fruit fly (Bactrocera oleae), Queensland fruit fly (Bactrocera tryoni), Mediterranean fruit fly (Ceratitis capitata), apple maggot (Rhagoletis pomonella), and Japanese cherry fruit fly (Rhacochlaena japonica);
from the family Ephydridae, for example, smaller rice leaf miner (Hydrellia griseola), whorl maggot (Hydrellia philippina), and paddy stem maggot (Hydrellia sasakii);
from the family Drosophilidae, for example, cherry drosophila (Drosophila suzukii), and common fruit fly (Drosophila melanogaster) ;
from the family Phoridae, for example, Megaselia spiracularis; from the family Psychodidae, for example, Clogmia albipunctata;
from the family Sciaridae, for example, Bradysia difformis and Bradysia odoriphaga;
from the family Cecidomyiidae, for example, hessian fly (Mayetiola destructor) and paddy gall fly (Orseolia oryzae);
from the family Diopsidae, for example, Diopsis macrophthalma; from the family Glossinidae, for example, Glossina palpalis and Glossina morsitans;
from the family Simuliidae, for example, Simulium japonicum and Simulium damnosum;
from the subfamily Phlebotominae;
from the family Tipulidae, for example, rice crane fly (Tipula aino), common cranefly (Tipula oleracea), and European cranefly (Tipula paludosa);
from the family Culicidae, for example, common house mosquito (Culex pipiens pallens), Culex tritaeniorhynchus ,Culex pipiens f. molestus, southern house mosquito (Culex quinquefasciatus), northern house mosquito (Culex pipiens pipiens), Culex vishnui, Asian tiger mosquito (Aedes albopictus), dengue mosquito (Aedes aegypti), Chinese malaria mosquito (Anopheles sinensis), Anopheles gambiae, Anopheles stephensi, Anopheles coluzzii, Anopheles albimanus, Anopheles sundaicus, Anopheles arabiensis, Anopheles funestus, Anopheles darlingi, Anopheles farauti, and

Anopheles minimus;
from the family Simulidae, for example, Prosimulium yezoensis and Simulium ornatum;
from the family Tabanidae, for example, Tabanus trigonus;
from the family Muscidae, for example, housefly (Musca domestica), false stable fly (Muscina stabulans), biting house fly (Stomoxys calcitrans), and buffalo fly (Haematobia irritans) ;
from the family Calliphoridae;
from the family Sarcophagidae;
from the family Chironomidae, for example, Chironomus plumosus, Chironomus yoshimatsui, and Glyptotendipes tokunagai;
from the family Fannidae;
and the others.

Coleoptera:

from the family Chrysomelidae, for example, Diabrotica spp. (such as western corn rootworm (Diabrotica virgifera virgifera), southern corn rootworm (Diabrotica undecimpunctata howardi), northern corn rootworm (Diabrotica barberi), Mexican corn rootworm (Diabrotica virgifera zeae), banded cucumber beetle (Diabrotica balteata), cucurbit beetle(Diabrotica speciosa)), bean leaf beetle (Cerotoma trifurcata), barley leaf beetle (Oulema melanopus), cucurbit leaf beetle (Aulacophora femoralis), striped flea beetle (Phyllotreta striolata), cabbage flea beetle (Phyllotreta cruciferae), western black flea beetle (Phyllotreta pusilla), cabbage stem flea beetle (Psylliodes chrysocephala), hop flea beetle (Psylliodes punctulata), Colorado potato beetle (Leptinotarsa decemlineata), rice leaf beetle (Oulema oryzae), grape colaspis (Colaspis brunnea), corn flea beetle (Chaetocnema pulicaria), sweet-potato flea beetle (Chaetocnema confinis), potato flea beetle (Epitrix cucumeris), rice leaf beetle (Dicladispa armigera), southern corn leaf beetle (Myochrous denticollis), Laccoptera quadrimaculata, tobacco flea beetle (Epitrix hirtipennis), daikon leaf beetle (Phaedon brassicae) and two-striped leaf beetle (Medythia nigrobilineata);
from the family Carabidae, for example, Seedcorn beetle (Stenolophus lecontei) and slender seed-corn ground beetle (Clivina impressifrons);
from the family Scarabaeidae, for example, cupreus chafer (Anomala cuprea), soybean beetle (Anomala rufocuprea), Anomala albopilosa, Japanese beetle (Popillia japonica), yellowish elongate chafer (Heptophylla picea), European Chafer (Rhizotrogus majalis), Tomarus gibbosus, Holotrichia spp., Phyllophaga spp. (such as June beetle (Phyllophaga crinita)), and Diloboderus spp. (such as Diloboderus abderus);
from the family Anthriibidae, for example, coffee bean weevil (Araecerus coffeae);
from the family Aponidae, for example, sweet-potato weevil (Cylas formicarius);
from the family Bruchidae, for example, Mexican bean weevil (Zabrotes subfasciatus);
from the family Scolytidae, for example, pine beetle (Tomicus piniperda) and coffee berry borer (Hypothenemus hampei);
from the family Curculionidae, for example, West Indian sweet-potato weevil (Euscepes postfasciatus), alfalfa weevil (H ypera postica), maize wevil (Sitophilus zeamais), rice weevil (Sitophilus oryzae), grain weevil (Sitophilus granarius), rice plant weevil (Echinocnemus squameus), rice water weevil (Lissorhoptrus oryzophilus), Rhabdoscelus lineaticollis, boll weevil (Anthonomus grandis), nunting billbug (Sphenophorus venatus), southern corn billbug (Sphenophorus callosus), soybean stalk weevil (Sternechus subsignatus), sugarcane weevil (Sphenophorus levis), rusty gourd-shaped weevil (Scepticus griseus), brown gourd-shaped weevil (Scepticus uniformis), Aracanthus spp. (such as Aracanthus mourei), and cotton root borer (Eutinobothrus brasiliensis);
from the family Tenebrionidae, for example, red meal beetle (Tribolium castaneum), mason beetle (Tribolium confusum), and lesser mealworm (Alphitobius diaperinus);
from the family Coccinellidae, for example, twenty-eight-spotted ladybird (Epilachna vigintioctopunctata);
from the family Bostrychidae, for example, common powder-post beetle (Lyctus brunneus), and lesser grain borer (Rhizopertha dominica) ;
from the family Ptinidae;
from the family Cerambycidae, for example, citrus long-horned beetle (Anoplophora malasiaca), Migdolus fryanus, and peach borer (Aromia bungii);
from the family Elateridae, for example, Melanotus okinawensis, barley wireworm (Agriotes fuscicollis), Melanotus legatus, Anchastus spp., Conoderus spp., Ctenicera spp., Limonius spp., and Aeolus spp.;
from the family Staphylinidae, for example, Paederus fuscipes; from the family Dermestidae, for example, varied carpet beetle (Anthrenus verbasci), hide beetle (Dermestes maculates), and khapra beetle (Trogoderma granarium);
from the family Anobiidae, for example, tobacco beetle (Lasioderma serricorne), and biscuit beetle (Stegobium paniceum) ;
from the family Laemophloeidae, for example, flat grain beetle (Cryptolestes ferrugineus);

from the family Silvanidae, for example, saw-toothed grain beetle (Oryzaephilus surinamensis);
from the family Nitidulidae, for example, blossom beetle (Brassicogethes aeneus);
and the others.

Orthoptera:

from the family Acrididae, for example, oriental migratory locust (Locusta migratoria), Moroccan locust (Dociostaurus maroccanus), Australian plague locust (Chortoicetes terminifera), red locust (Nomadacris septemfasciata), brown locust(Locustana pardalina), tree locust (Anacridium melanorhodon), Italian locust (Calliptamus italicus), differential grasshopper (Melanoplus differentialis), two-striped grasshopper (Melanoplus bivittatus), migratory grasshopper (Melanoplus sanguinipes), red-legged grasshopper (Melanoplus femurrubrum), clear-winged grasshopper (Camnula pellucida), desert locust (Schistocerca gregaria), Yellow-winged locust(Gastrimargus musicus), spur-throated locust (Austracris guttulosa), Japanese grasshopper (Oxya yezoensis), rice grasshopper (Oxya japonica), and Bombay locust (Patanga succincta) ;
from the family Gryllotalpidae, for example, oriental mole cricket (Gryllotalpa orientalis);
from the family Gryllidae, for example, house cricket (Acheta domestica), and emma field cricket (Teleogryllus emma);
from the family Tettigoniidae, for example, mormon cricket (Anabrus simplex);
and the others.

Hymenoptera :

from the family Tenthredinidae, for example, beet sawfly (Athalia rosae) and nippon cabbage sawfly (Athalia japonica);
from the family Formicidae, for example, Solenopsis spp. (such as red imported fire ant (Solenopsis invicta), tropical fire ant (Solenopsis geminata)), Atta spp. (such as brown leaf-cutting ant (Atta capiguara), Acromyrmex spp., Paraponera clavata, black house ant (Ochetellus glaber), little red ant (Monomorium pharaonis), Argentine ant (Linepithema humile), Formica japonica, Pristomyrmex punctutus, Pheidole noda, big-headed ant (Pheidole megacephala), Camponotus spp. (such as Camponotus japonicus, Camponotus obscuripes), Pogonomyrmex spp. (such as western harvester ant (Pogonomyrmex occidentalis)), Wasmania spp. (such as Wasmania auropunctata), and long-legged ant (Anoplolepis gracilipes);
from the family Vespidae, for example, Asian giant hornet (Vespa mandarinia, Vespa simillima, Vespa analis, Asian hornet (Vespa velutina), and Polistes jokahamae;
from the family Siricidae, for example, pine wood wasp (Urocerus gigas);
from the family Bethylidae;
and the others.

Blattodea :

from the family Ectobiidae, for example, German cockroach (Blattella germanica);
from the family Blattidae, for example, smoky-brown cockroach (Periplaneta fuliginosa), American cockroach (Periplaneta americana), Australian cockroach (Periplaneta australasiae), brown cockroach (Periplaneta brunnea), and black cockroach (Blatta orientalis);
from the family Termitidae, for example, Japanese termite (Reticulitermes speratus), Formosan termite (Coptotermes formosanus), western drywood termite (Incisitermes minor), Cryptotermes domesticus, Odontotermes formosanus, Neotermes koshunensis, Glyptotermes satsumensis, Glyptotermes nakajimai, Glyptotermes fuscus, Hodotermopsis sjostedti, Coptotermes guangzhouensis, Reticulitermes amamianus, Reticulitermes miyatakei, Reticulitermes kanmonensis, Nasutitermes takasagoensis, Pericapritermes nitobei, Sinocapritermes mushae, and Cornitermes cumulans;
and the others.

Siphonaptera:

from the family Pulicidae, for example, human flea (Pulex irritans), cat flea (Ctenocephalides felis), dog flea (Ctenocephalides canis), oriental rat flea (Xenopsylla cheopis), and chicken flea (Echidnophaga gallinacea);
from the family Hectopsyllidae, for example, chigoe flea (Tunga penetrans);
from the family Ceratophyllidae, for example, European rat flea (Nosopsyllus fasciatus); and the others.

Psocodae:

from the family Pediculidae, for example, head louse (Pediculus humanus capitis);
from the family Pthiridae, for example, crab louse (Pthirus pubis) ;
from the family Haematopinidae, for example, short-nosed cattle louse (Haematopinus eurysternus) and pig louse (Haematopinus suis);
from the family Linognathidae, for example, blue cattle louse (Linognathus vituli), sheep face louse (Linognathus ovillus), and capillate louse (Solenopotes capillatus);
from the family Bovicoliidae, for example, cattle biting louse (Bovicola bovis), sheep biting louse (Bovicola ovis), Bovicola breviceps, Damalinia forficula, and Werneckiella spp.;
from the family Trichodectidae, for example, dog biting louse (Trichodectes canis) and cat louse (Felicola subrostratus);
from the family Menoponidae, for example, common chicken louse (Menopon gallinae), chicken body louse (Menacanthus stramineus), and Trinoton spp;
from the family Trimenoponidae, for example, Cummingsia spp.;
from the family Trogiidae, for example, death watch (Trogium pulsatorium);
from the family Liposcelidae or Liposcelididae, for example, book louse (Liposcelis corrodens), Liposcelis bostrychophila, Liposcelis pearmani and Liposcelis entomophila;
and the other.

Thysanura:

from the family Lepismatidae, for example, oriental silverfish (Ctenolepisma villosa) andmoth fish (Lepisma saccharina);
and the others.

Acari:

from the family Tetranychidae, for example, common red spider mite (Tetranychus urticae), kanzawa spider mite (Tetranychus kanzawai), red spider mite (Tetranychus evansi), citrus red mite (Panonychus citri), fruit-tree red spider mite (Panonychus ulmi), and Oligonychus spp.;
from the family Eriophyidae, for example, Japanese citrus rust mite (Aculops pelekassi), Phyllocoptruta citri, tomato mite (Aculops lycopersici), purple mite (Calacarus carinatus), tea rust mite (Acaphylla theavagrans), Eriophyes chibaensis, apple bud mite (Aculus schlechtendali), Aceria diospyri, Aceria tosichella, and Shevtchenkella sp.;
from the family Tarsonemidae, for example, broad mite (Polyphagotarsonemus latus);
from the family Tenuipalpidae, for example, Brevipalpus phoenicis;
from the family Tuckerellidae;
from the family Ixodidae, for example, Asian longhorned tick (Haemaphysalis longicornis), Haemaphysalis flava, Haemaphysalis japonica, Haemaphysalis campanulata, American dog tick (Dermacentor variabilis), Dermacentor taiwanensis, Rocky Mountain wood tick (Dermacentor andersoni), netted tick (Dermacentor reticulatus), Ixodes ovatus, Ixodes persulcatus, black-legged tick (Ixodes scapularis), Ixodes pacificus, Ixodes holocyclus, Ixodes ricinus, lone star tick (Amblyomma americanum), gulf coast tick (Amblyomma maculatum), Rhipicephalus microplus, cattle tick (Rhipicephalus annulatus), brown dog tick (Rhipicephalus sanguineus), Rhipicephalus appendiculatus, and Rhipicephalus decoloratus;
from the family Argasidae, for example, fowl tick (Argas persicus), Ornithodoros hermsi, and Ornithodoros turicata;
from the family Acaridae, for example, cereal mite (Tyrophagus putrescentiae) and grassland mite (Tyrophagus similis);
from the family Pyroglyphidae, for example, American house dust mite (Dermatophagoides farinae) and European house dust mite (Dermatophagoides pteronyssinus);
from the family Cheyletidae, for example, Cheyletus eruditus, Cheyletus malaccensis, Chelacaropsis moorei, and Cheyletiella yasguri;
from the family Psoroptidae, for example, sheep scab mite (Psoroptes ovis), horse psoroptic mange mite (Psoroptes equi), Knemidocoptes mutans, ear mange mite (Otodectes cynotis), and Chorioptes spp.;
from the family Sarcoptidae, for example, Notoedres cati, Notoedres muris, and itch mite (Sarcoptes scabiei);
from the family Listrophoridae, for example, Listrophorus gibbus;
from the family Dermanyssidae, for example,bird mite (Dermanyssus gallinae);
from the family Macronyssidae, for example, feather mite (Ornithonyssus sylviarum) and tropical rat mite (Ornithonyssus bacoti);
from the family Varroidae, for example, Varroa jacobsoni; from the family Demodicidae, for example, dog follicle mite (Demodex canis) and cat follicle mite (Demodex cati);

from the family Trombiculidae, for example, Leptotrombidium akamushi, Leptotrombidium pallidum, and Leptotrombidium scutellare;
and the others.

Araneae:

from the family Eutichuridae, for example, Cheiracanthium japonicum;
from the family Theridiidae, for example, red-back spider (Latrodectus hasseltii);
and the others

Polydesmida:

from the family Paradoxosomatidae, for example, flat-backed millipede (Oxidus gracilis) and Nedyopus tambanus;
and the others.

Isopoda:

from the family Armadillidiidae, common pill bug (Armadillidium vulgare);
and the others.

Chilopoda:

from the family Scutigeridae, for example, Thereuonema hilgendorfi;
from the family Scolopendridae, giant tropical centipede (Scolopendra subspinipes);
from the family Ethopolyidae, Bothropolys rugosus;
and the others.

Gastropoda:

from the family Limacidae, for example, tree slug (Limax marginatus) and garden tawny slug (Limax flavus);
from the family Philomycidae, for example, Meghimatium bilineatum;
from the family Ampullariidae, for example, golden apple snail (Pomacea canaliculata);
from the family Lymnaeidae, for example, Austropeplea ollula; and the others.

Nematoda:

from the family Aphelenchoididae, for example, rice white-tip nematode (Aphelenchoides besseyi);
from the family Pratylenchidae, for example, root lesion nematode (Pratylenchus coffeae), Pratylenchus brachyurus, California meadow nematode (Pratylenchus neglectus), and Radopholus similis;
from the family Heteroderidae, for example, javanese root-knot nematode (Meloidogyne javanica), southern root-knot nematode (Meloidogyne incognita), guava root-knot nematodes (Meloidogyne enterolobii), northern root-knot nematode (Meloidogyne hapla), soybean cyst nematode (Heterodera glycines), potato cyst nematode (Globodera rostochiensis), white potato cyst nematode (Globodera pallida), and Columbia root-knot nematode (Meloidogyne chitwoodi);
from the family Hoplolaimidae, for example, Rotylenchulus reniformis;
from the family Anguinidae, for example, strawberry bud nematode (Nothotylenchus acris), and stem nematode (Ditylenchus dipsaci);
from the family Tylenchulidae, for example, citrus nematode (Tylenchulus semipenetrans);
from the family Longidoridae, for example, dagger nematode (Xiphinema index);
from the family Trichodoridae;
from the family Parasitaphelenchidae, for example, pine wilt disease (Bursaphelenchus xylophilus);
and the others.

Harmful arthropods such as insect pests and harmful mites, harmful mollusks, and harmful nematodes may be harmful arthropods such as insect pests and harmful mites, harmful mollusks, and harmful nematodes that have reduced susceptibility to or developed resistance to chemicals such as insecticides, miticides, molluscicides, or nematicides.
The method for controlling harmful arthropods of the present invention is carried out by applying an effective amount of the composition of the present invention or Composition A directly to the harmful arthropods and/or to their

habitats (such as plants, soil, houses, animals, etc.). Examples of the methods for controlling harmful arthropods of the present invention include foliage treatment, soil treatment, root treatment, shower treatment, fumigation treatment, water surface treatment, and seed treatment.

The composition of the present invention or Composition A is usually used by mixing it with inert carrier(s) such as solid carrier(s), liquid carrier(s) or gaseous carrier(s), surfactant (s), and the like, and as needed, adding thereto auxiliary agent(s) for formulation such as binder(s), dispersant(s), and stabilizer(s) to be formulated into an aqueous suspension formulation, an oil-based suspension formulation, an oil solution, an emulsifiable concentrate, an emulsion formulation, a microemulsion formulation, a microcapsule formulation, a wettable powder, a water dispersible granule, a dustable powder, a granule, a tablet, an aerosol formulation, a resin formulation or the like. In addition to these formulations, they may be used by formulating into formulation types described in Manual on development and use of FAO and WHO Specifications for pesticides, FAO Plant Production and Protection Papers- 271-276, prepared by the FAO/WHO Joint Meeting on Pesticide Specifications, 2016, ISSN:0259-2517.

These formulations usually contain 0.0001 to 99% of the composition of the present invention or Composition A by weight ratio.

Examples of solid carriers include fine powders and granules of clays (for example, pyrophyllite clay and kaolin clay), talc, calcium carbonate, diatomaceous earth, zeolite, bentonite, acid white clay, attapulgite, white carbon, ammonium sulfate, vermiculite, perlite, pumice, silica sand, chemical fertilizers (for example, ammonium sulfate, ammonium phosphate, ammonium nitrate, urea, and ammonium chloride), and the others; as well as resins (for example, polyethylene, polypropylene, polyesters, polyurethanes, polyamides, and polyvinyl chloride).

Examples of liquid carriers include water, alcohols (for example, ethanol, cyclohexanol, benzyl alcohol, propylene glycol, and polyethylene glycol), ketones (for example, acetone and cyclohexanone), aromatic hydrocarbons (for example, xylene, phenyl xylyl ethane, and methylnaphthalene), aliphatic hydrocarbons (for example, hexane and cyclohexane), esters (for example, ethyl acetate, methyl oleate, and propylene carbonate), nitriles (for example, acetonitrile), ethers (for example, ethylene glycol dimethyl ether), amides (for example, N,N-dimethylformamide and N,N-dimethyloctanamide), sulfoxides (for example, dimethyl sulfoxide), lactams (for example, N-methylpyrrolidone and N-octylpyrrolidone), fatty acids (for example, oleic acid), and vegetable oils (for example, soybean oil).

Examples of gaseous carriers include, fluorocarbons, butane gas, LPG (liquefied petroleum gas), dimethyl ether, nitrogen, and carbon dioxide.

Examples of surfactants include nonionic surfactants (for example, polyoxyethylene alkyl ethers, polyoxyethylene alkyl aryl ethers, and polyethylene glycol fatty acid esters), and anionic surfactants (for example, alkyl sulfonates, alkyl aryl sulfonates, and alkyl sulfates).

Examples of other auxiliary agents for formulation include binders, dispersants, colorants, and stabilizers, and the specific examples thereof include polysaccharides (for example, starch, gum arabic, cellulose derivatives, and alginic acid), lignin derivatives, water-soluble synthetic polymers (for example, polyvinyl alcohol, polyvinyl pyrrolidone, and polyacrylic acids), acidic isopropyl phosphate, and dibutylhydroxytoluene.

An adjuvant can be used as a component to enhance or supplement the efficacy of the active ingredient. Specific examples thereof include Nimbus (registered trademark), Assist (registered trademark), Aureo (registered trademark), Iharol (registered trademark), Silwet L-77 (registered trademark), BreakThru (registered trademark), SundanceII (registered trademark), Induce (registered trademark), Penetrator (registered trademark), AgriDex (registered trademark), Lutensol A8 (registered trademark), NP-7 (registered trademark), Triton (registered trademark), Nufilm (registered trademark), Emulgator NP7 (registered trademark), Emulad (registered trademark), TRITON X 45 (registered trademark), AGRAL 90 (registered trademark), AGROTIN (registered trademark), ARPON (registered trademark), EnSpray N (registered trademark), and BANOLE (registered trademark).

In the present invention, examples of plants include the whole plant, stems and leaves, flowers, ears, fruits, tree stems, branches, crowns, seeds, vegetative reproductive organs, and seedlings.

Vegetative reproduction organs mean those among roots, stems, leaves, and the like of plants that have the ability to grow even when said part is separated from the plant body and placed into soil. Examples of vegetative reproduction organs include tuberous roots, creeping roots, bulbs, corms or solid bulbs, tubers, rhizomes, stolons, rhizophores, cane cuttings, propagules, and vine cuttings. A stolon is also referred to as a "runner", and a propagule is also referred to as a "propagulum" and categorized into a broad bud and a bulbil. A vine cutting means a shoot (collective term for leaf and stem) of sweet potato, glutinous yam, or the like. Bulbs, corms or solid bulbs, tubers, rhizomes, cane cuttings, rhizophores, and tuberous roots are also collectively referred to as "bulbs". Cultivation of potatos starts with planting a tuber into soil, and the tuber used is generally referred to as a "seed potato".

Examples of the methods for controlling harmful arthropods by applying an effective amount of the composition of the present invention or Composition A to soils include methods of applying an effective amount of the composition of the present invention or Composition A to soils before planting plants or after planting plants. Specific examples thereof include planting hole treatment (spraying into planting holes, soil mixing after planting hole treatment), plant foot treatment (plant foot spraying, soil mixing after plant foot treatment, irrigation at plant foot, plant foot treatment at a later seeding

raising stage), planting furrow treatment (planting furrow spraying, soil mixing after planting furrow treatment), planting row treatment (planting row spraying, soil mixing after planting row treatment, planting row spraying at a growing stage), planting row treatment at the time of sowing (planting row spraying at the time of sowing, soil mixing after planting row treatment at the time of sowing), broadcast treatment (overall soil surface spraying, soil mixing after broadcast treatment), side-article treatment, treatment of water surface (application to water surface, application to water surface after flooding), other soil spraying treatment (spraying of a granular formulation on leaves at a growing stage, spraying under a canopy or around a tree stem, spraying on the soil surface, mixing with surface soil, spraying into seed holes, spraying on the ground surfaces of furrows, spraying between plants), other irrigation treatment (soil irrigation, irrigation at a seedling raising stage, chemical liquid injection treatment, irrigation of a plant part just above the ground, chemical liquid drip irrigation, chemigation), seedling raising box treatment (spraying into a seedling raising box, irrigation of a seedling raising box, flooding into a seedling raising box with chemical liquid), seedling raising tray treatment (spraying on a seedling raising tray, irrigation of a seedling raising tray, flooding into a seedling raising tray with chemical liquid), seedbed treatment (spraying on a seedbed, irrigation of a seedbed, spraying on a lowland rice nursery, immersion of seedlings), seedbed soil incorporation treatment (mixing with seedbed soil, mixing with seedbed soil before sowing, spraying at sowing before covering with soils, spraying at sowing after covering with soils, mixing with covering with soils), and other treatment (mixing with culture soil, plowing under, mixing with surface soil, mixing with soil at the place where raindrops fall from a canopy, treatment at a planting position, spraying of a granule formulation on flower clusters, mixing with a paste fertilizer).

Examples of seed treatments include applications of the composition of the present invention or Composition A to seeds or vegetative reproductive organs, and detailed examples thereof include spraying treatment in which a suspension of the composition of the present invention or Composition A is sprayed onto the seed surface or vegetative reproductive organ surface in the form of mist; smearing treatment in which the composition of the present invention or Composition A is coated on the surface of seeds or vegetative reproductive organ; soaking treatment in which seeds or vegetative reproductive organs are soaked into a chemical liquid of the composition of the present invention or Composition A for a certain time period; and a method for coating seeds or vegetative reproductive organs with a carrier containing the composition of the present invention or Composition A (film coating treatment, pellet coating treatment etc.). Examples of the above-described vegetative reproductive organs include particularly seed potatos.

When treating seeds or vegetative reproductive organs with Composition A, Composition A may be applied to the seeds or vegetative reproductive organs as a single formulation, or may be applied to the seeds or vegetative reproductive organs multiple times as several different formulations. Examples of methods for applying Composition A multiple times as different formulations include: a method in which a formulation containing only the composition of the present invention as the active ingredient is applied, and after air-drying the seeds or vegetative reproductive organs, a formulation containing Present ingredient(s) is applied; and a method in which a formulation containing both the composition of the present invention and Present ingredient(s) as active ingredients is applied, and after air-drying the seeds or vegetative reproductive organs, a formulation containing Present ingredient(s) other than the already applied Present ingredient(s) is applied.

In the present invention, seeds or vegetative reproductive organs holding the composition of the present invention or Composition A mean those in the state where the composition of the present invention or Composition A is adhered to the surface of the seeds or vegetative reproductive organs. The above-described seeds or vegetative reproductive organs holding the composition of the present invention or Composition A may be adhered by any other materials that are different from the composition of the present invention or Composition A before or after being adhered the composition of the present invention or Composition A to the seeds or vegetative reproductive organs.

Also, when Composition A is adhered in a form of layer(s) to the surface of seeds or vegetative reproductive organs, the layer(s) is/are composed of one layer or a multiple layers. Also, when composed of multiple layers, each of the layers may be layer (s) containing one or more active ingredients, or a combination of layer(s) containing one or more active ingredients and layer(s) containing no active ingredient.

Seeds or vegetative reproductive organs holding the composition of the present invention or Composition A can be obtained, for example, by applying the formulations containing the composition of the present invention or Composition A to seeds or vegetative reproductive organs by methods of the above-described seed treatments.

When the composition of the present invention or Composition A is used for controlling harmful arthropods in the agricultural field, the application amount is usually 1 to 10,000 g per 10,000 $m^2$ in terms of the amount of the composition of the present invention. When treating seeds or vegetative reproductive organs, it is applied at the amount of the composition of the present invention ranging from 0.001 to 100 g relative to 1 kg of seeds or vegetative reproductive organs. If the composition of the present invention or Composition A is formulated as an emulsifiable concentrate, a wettable powder, a flowable formulation, or the like, it is usually diluted with water so that the active ingredient concentration is 0.01 to 10,000 ppm to apply, and a granule, a dustable powder, or the like are usually applied as they are.

Furthermore, the composition of the present invention or Composition A can also be processed into resin formulations in the form of sheets or strings and applied by wrapping around crops, stretching near crops, or laying on the

soil at the plant foot.

When the composition of the present invention or Composition A is used for controlling harmful arthropods inhabiting inside houses, the application amount, when applied to surfaces, is usually 0.01 to 1,000 mg per 1 $m^2$ of treated area in terms of the amount of the composition of the present invention, and when applied to space, it is usually 0.01 to 500 mg per 1 $m^3$ of treated space in terms of the amount of the composition of the present invention. If the composition of the present invention or Composition A is formulated as an emulsifiable concentrate, a wettable powder, a flowable formulation, or the like, it is usually diluted with water so that the active ingredient concentration is 0.1 to 10,000 ppm to apply, while oil formulations, aerosol formulations, fumigants, poisonous baits, and the like are generally applied as they are.

When the composition of the present invention or Composition A is used for controlling external parasites of livestock such as cattle, horses, pigs, sheep, goats, chickens, or small animals such as dogs, cats, rats, and mice, it can be administered to animals by methods known in veterinary medicine. Specific examples of usage methods include administration in the form of a tablet, incorporation-into-feed, a suppository, or an injection (intramuscular, subcutaneous, intravenous, intraperitoneal, etc.) for systemic control, and spraying, pour-on treatment or spot-on treatment with an oil formulation or an aqueous liquid formulation, washing with a shampoo formulation, or attaching a resin formulation as a collar or an ear tag for non-systemic control. The amount of the composition of the present invention or Composition A administered to animals is usually in the range of 0.1 to 1,000 mg per 1 kg of the animal body weight.

The composition of the present invention or Composition A may be used as an agent for controlling harmful arthropods in agricultural lands such as fields, paddy fields, turfs, and orchards. Examples of plants include the followings.

Corn (dent corn, flint corn, flour corn, popcorn, waxy corn, sweet corn, and field corn), rice (long grain rice, short grain rice, medium grain rice, japonica rice, tropical japonica rice, indica rice, javanica rice, paddy rice, upland rice, floating rice, direct-seeded rice, transplanted rice, and glutinous rice), wheat (bread wheat (hard wheat, soft wheat, medium wheat, red wheat, and white wheat), durum wheat, spelt wheat, and club wheat, winter wheat and spring wheat of them), barley (two-rowed barley (= barley for brewery), six-rowed barley, hull-less barley, and pearl barley, winter barley and spring barley of them), rye (winter rye and spring rye), triticale (winter triticale and spring triticale), oat (winter oat and spring oat), sorghum, cotton (upland cotton and Pima cotton), soybean (ripe seed harvest soybean, green soybeans, and early harvest soybeans, indeterminate type, determinate type, and semi-determinate type of them), peanut, buckwheat, beet (beets for sugar production, beets for feed, beets for root vegetable, beets for leaf vegetable, and beets for fuel), rapeseed (winter rapeseed and spring rapeseed), canola (winter canola and spring canola), sunflower (sunflowers for oil extraction, edible sunflowers, and sunflowers for ornamental purpose), sugar cane, tobacco, tea, mulberry, solanaceous vegetables (for example, eggplant, tomato, green pepper, pepper, and potato), cucurbitaceous vegetables (for example, cucumber, pumpkin, zucchini, water melon, and melon), cruciferous vegetables (for example, Japanese radish, white turnip, horseradish, kohlrabi, Chinese cabbage, cabbage, leaf mustard, broccoli, and cauliflower), asteraceous vegetables (for example, burdock, crown daisy, artichoke, and lettuce), liliaceous vegetables (for example, welsh onion, onion, garlic, and asparagus), ammiaceous vegetables (for example, carrot, parsley, celery, and parsnip), chenopodiaceous vegetables (for example, spinach and Swiss chard), lamiaceous vegetables (for example, perilla, mint, and basil), strawberry, sweet potato, glutinous yam, eddoe, pomaceous fruits (for example, apple, pear, Japanese pear, Chinese white pear, Chinese quince, and quince), stone fleshy fruits (for example, peach, plum, nectarine, Japanese apricot (Prunus mume), cherry fruit, apricot, and prune), citrus fruits (for example, Citrus unshiu, orange, lemon, lime, and grapefruit), nuts (for example, chestnuts, walnuts, hazelnuts, almond, pistachio, cashew nuts, and macadamia nuts), berry fruits (for example, blueberry, cranberry, blackberry, and raspberry), grapes, Japanese persimmon, fig, olive, Japanese plum, banana, coffee, date palm, coconuts, ornamental plants, forest plants, turfs, and grasses.

The above plants are not specifically limited as long as they are generally cultivated cultivars. The above plants also include plants which may be produced by natural breeding, plants which may be generated by mutation, F1 hybrid plants, and genetically modified crops. Examples of genetically modified crops include plants to which tolerance to herbicides, such as HPPD (4-hydroxyphenylpyruvate dioxygenase enzyme) inhibitors such as isoxaflutole, ALS (acetolactate synthase) inhibitors such as imazethapyr and thifensulfuron-methyl, EPSP (5-enolpyruvylshikimate-3-phosphate synthase) inhibitors, glutamine synthetase inhibitors, PPO (protoporphyrinogen oxidase) inhibitors, bromoxynil or dicamba, has been imparted; plants which become able to synthesize a selective toxin known in Bacillus spp. such as Bacillus thuringiensis or the like; and plants which can synthesize a gene fragment or the like which is partially identical to an endogenous gene derived from a harmful insect, thereby inducing a gene silencing (RNAi; RNA interference) in the target harmful insect body to impart a specific insecticidal activity.

[Examples]

Hereinafter, the present invention will be explained in further detail by presenting examples, comparative examples, and test examples, however, the present invention is not limited to these examples.

In the examples and comparative examples, the following antioxidants were used:

Antioxidant 1: 4,4'-Butylidenebis(3-methyl-6-tert-butylphenyl ditridecyl phosphite) (JPH-1200, manufactured by Johoku Chemical Co., Ltd.);
Antioxidant 2: Diphenyl isodecyl phosphite (ADEKASTAB 135A, manufactured by ADEKA Corporation);
Antioxidant 3: 3,9-Bis(isotridecyloxy)-2,4,8,10-tetraoxa-3,9-diphosphaspiro[5.5]undecane (JPE-13R, manufactured by Johoku Chemical Co., Ltd.);
Antioxidant 4: 3,9-Bis(isodecyloxy)-2,4,8,10-tetraoxa-3,9-diphosphaspiro[5.5]undecane (JPE-10, manufactured by Johoku Chemical Co., Ltd.);
Antioxidant 5: Bis(2,4-dicumylphenyl) pentaerythritol diphosphite (Revonox 608, manufactured by Chitec Technology Co., Ltd.);
Antioxidant 6: 3,9-Bis(2,4-di-tert-butylphenoxy)-2,4,8,10-tetraoxa-3, 9-diphosphaspiro [5.5] undecane (ADEKASTAB PEP24, manufactured by ADEKA Corporation);
Antioxidant 7: Tris(nonylphenyl) phosphite (JP-351, manufactured by Johoku Chemical Co., Ltd.);
Antioxidant 8: Triphenyl phosphite (Triphenyl phosphite, manufactured by Tokyo Chemical Industry Co., Ltd.);
Antioxidant 9: Tetrakis(2,4-di-tert-butylphenyl) 4,4'-biphenylenediphosphinate (HOSTANOX (trademark) P-EPQ (trademark), manufactured by Clariant Plastics & Coatings (JAPAN) K.K.));
Antioxidant 10: Tridodecyl trithiophosphite (JPS-312, manufactured by Johoku Chemical Co., Ltd.);
Antioxidant 11: Didodecyl 3,3'-thiodipropionate (manufactured by Tokyo Chemical Industry Co., Ltd.);
Antioxidant 12: Pentaerythritol tetrakis[3-(dodecylthio)propionate] (Sumilizer (trademark) TP-D, manufactured by Sumitomo Chemical Co., Ltd.);
Antioxidant 13: 2-Mercaptobenzimidazole (manufactured by Tokyo Chemical Industry Co., Ltd.);
Antioxidant 14: 2,4-Bis[(dodecylthio)methyl]-6-methylphenol (Irganox (trademark) 1726, manufactured by BASF Japan Ltd.); Antioxidant 15: Triisodecyl phosphite (ADEKASTAB 3010, manufactured by ADEKA Corporation);
Antioxidant 16: Tetra(C12-15 alkyl)-4,4'-isopropylidenediphenyldiphosphite (ADEKASTAB 1500, manufactured by ADEKA Corporation);

Example 1 (Insect Pest Controlling Formulation for Heat-transpiration 1)

Insect pest controlling formulation for heat-transpiration 1 was obtained by mixing 1.26 parts by mass of natural pyrethrin (content: 47.5%, 0.6 parts by mass as natural pyrethrin active ingredient), 5 parts by mass of BHT, and 2 parts by mass of triisodecyl phosphite with 91.74 parts by mass of Isopar G (manufactured by Exxon Mobil Corporation) to achieve 100 parts by mass.

Example 1-2 (Insect Pest Controlling Formulation for Heat-transpiration 2)

Insect pest controlling formulation for heat-transpiration 2 was obtained by mixing 1.26 parts by mass of natural pyrethrin (content: 47.5%, 0.6 parts by mass as natural pyrethrin active ingredient), 5 parts by mass of BHT, and 0.5 parts by mass of triisodecyl phosphite with 93.24 parts by mass of a mixed solvent of Isopar M and Isopar L in a weight ratio of 4:6 (Isopar M (trade name) and Isopar L (trade name) are both manufactured by Exxon Mobil Corporation) to achieve 100 parts by mass.

Comparative Example 9 (Comparative Insect Pest Controlling Formulation for Heat-transpiration)

A comparative insect pest controlling formulation for heat-transpiration was obtained by mixing 1.26 parts by mass of natural pyrethrin (content: 47.5%, 0.6 parts by mass as natural pyrethrin active ingredient) with 98.74 parts by mass of Isopar G (manufactured by Exxon Mobil Corporation) to achieve 100 parts by mass.

Examples 2 and 3, Comparative Examples 1 and 2 (Production of Formulations for Insect Pest Control Mat and Insect Pest Control Mats)

Formulations for insect pest control mats were produced by mixing each component so that the compositions were those shown in Table 1. The produced formulation for insect pest control mat was spread on a blank mat material (made of pulp and cotton linter, thickness 0.21 cm, long side 3.5 cm, short side 2.2 cm) at 0.75 mL per mat to obtain an insect pest control mat retaining 100 mg of natural pyrethrin active ingredient per mat. (In Comparative Example 1, an insect pest control mat retaining 200 mg of natural pyrethrin active ingredient per mat was obtained.)

[Table 1]

| Table 1 Compositions of formulations for insect pest control mat (%w/v) | | | | |
|---|---|---|---|---|
| Component name | Example 2 | Example 3 | Comparative Example 1 | Comparative Example 2 |
| Natural pyrethrin (as amount of active ingredient) | 13.3 | 13.3 | 26.6 | 13.3 |
| Phenolic antioxidant 1 | 5 | - | - | 5 |
| Phenolic antioxidant 2 | - | 2.5 | - | - |
| Antioxidant 1 | 10 | - | - | - |
| Antioxidant 2 | - | 5 | - | - |
| Auxiliary solvent | - | 20 | - | - |
| Solvent | Balance | Balance | Balance | Balance |

In the table, as Phenolic antioxidant 1, BHT;

as Phenolic antioxidant 2, 2,2'-methylenebis(6-tert-butyl-4-methylphenol) (Sumilizer (trademark) MDP-S, manufactured by Sumitomo Chemical Co., Ltd.);

as Auxiliary solvent, isopropyl myristate; and

as Solvent, isoparaffin solvent (Isopar M, product name, manufactured by Exxon Mobil Corporation) were used.

Examples 4 and 5, Comparative Example 3 (Production of Compositions for Resin Formulation)

Compositions for resin formulation were produced by mixing each component so that the compositions were those shown in Table 2.

[Table 2]

| Table 2 Compositions of compositions for resin formulation | | | |
|---|---|---|---|
| Component name | Example 4 | Example 5 | Comparative Example 3 |
| Natural pyrethrin (mg) | 0.3 | 0.3 | 0.3 |
| Antioxidant 3 (mg) | 0.03 | - | - |
| Antioxidant 4 (mg) | - | 0.03 | - |
| Antioxidant 5 (mg) | - | - | 0.03 |

Examples 6 to 25, Comparative Examples 4 and 5 (Production of MUP)

MUPs of Examples 6 to 15 were produced by mixing 500 mg of natural pyrethrin (content 75%, 375 mg as natural pyrethrin active ingredient, containing 5% of BHT [25 mg]), 5 mg of the antioxidant shown in Table 3, and 5 mg of citric acid so that the compositions were those shown in Table 3.
MUPs of Examples 16 to 25 were produced by mixing 500 mg of natural pyrethrin (content 75%, 375 mg as natural pyrethrin active ingredient, containing 5% of BHT [25 mg]), and 5 mg of the antioxidant shown in Table 3 so that the compositions were those shown in Table 3.
In addition, an MUP of Comparative Example 4 was produced by mixing 500 mg of natural pyrethrin (content 75%, 375 mg as natural pyrethrin active ingredient, containing 5% of BHT [25 mg]) and 5 mg of citric acid.
Comparative Example 5 is 500 mg of natural pyrethrin (content 75%, 375 mg as natural pyrethrin active ingredient, containing 5% of BHT [25 mg]) used in the Examples.

[Table 3]

| Table 3 Compositions of MUPs | | | | | |
|---|---|---|---|---|---|
| | Natural pyrethrin (as amount of active ingredient) (mg) | BHT (mg) | Antioxidant (mg) | | Citric acid (mg) |
| Example 6 | 375 | 25 | Antioxidant 4 | 5 | 5 |
| Example 7 | 375 | 25 | Antioxidant 6 | 5 | 5 |
| Example 8 | 375 | 25 | Antioxidant 7 | 5 | 5 |
| Example 9 | 375 | 25 | Antioxidant 8 | 5 | 5 |
| Example 10 | 375 | 25 | Antioxidant 9 | 5 | 5 |
| Example 11 | 375 | 25 | Antioxidant 10 | 5 | 5 |
| Example 12 | 375 | 25 | Antioxidant 11 | 5 | 5 |
| Example 13 | 375 | 25 | Antioxidant 12 | 5 | 5 |
| Example 14 | 375 | 25 | Antioxidant 13 | 5 | 5 |
| Example 15 | 375 | 25 | Antioxidant 14 | 5 | 5 |
| Example 16 | 375 | 25 | Antioxidant 4 | 5 | - |
| Example 17 | 375 | 25 | Antioxidant 6 | 5 | - |
| Example 18 | 375 | 25 | Antioxidant 7 | 5 | - |
| Example 19 | 375 | 25 | Antioxidant 8 | 5 | - |
| Example 20 | 375 | 25 | Antioxidant 9 | 5 | - |
| Example 21 | 375 | 25 | Antioxidant 10 | 5 | - |
| Example 22 | 375 | 25 | Antioxidant 11 | 5 | - |
| Example 23 | 375 | 25 | Antioxidant 12 | 5 | - |
| Example 24 | 375 | 25 | Antioxidant 13 | 5 | - |
| Example 25 | 375 | 25 | Antioxidant 14 | 5 | - |
| Comparative Example 4 | 375 | 25 | - | - | 5 |
| Comparative Example 5 | 375 | 25 | - | - | - |

Examples 26 to 29 (Production of Insect Pest Controlling Formulations for Heat-transpiration)

Insect pest controlling formulations for heat-transpiration of Examples 26 to 29 were produced by mixing natural pyrethrin (content: 47.5%, 0.6% by mass as natural pyrethrin active ingredient), 5.0% by mass of BHT, 0.5% by mass or 0.25% by mass of the antioxidant shown in Table 4, and 15% by mass of diisopropyl adipate, followed by mixing with a mixed solvent of Isopar M and Isopar L in a weight ratio of 4:6 so that the compositions were those shown in Table 4.

[Table 4]

| Table 4 Compositions of Insect pest controlling formulations for heat-transpiration (%w/w) | | | | |
|---|---|---|---|---|
| | Example 26 | Example 27 | Example 28 | Example 29 |
| Natural pyrethrin (as amount of active ingredient) | 0.6 | 0.6 | 0.6 | 0.6 |
| BHT | 5.0 | 5.0 | 5.0 | 5.0 |
| Antioxidant 2 | 0.5 | | | |
| Antioxidant 3 | | 0.5 | | |
| Antioxidant 8 | | | 0.5 | |
| Antioxidant 6 | | | | 0.25 |
| Auxiliary solvent 2 | 15 | 15 | 15 | 15 |

(continued)

| Table 4 Compositions of Insect pest controlling formulations for heat-transpiration (%w/w) | | | | |
|---|---|---|---|---|
| | Example 26 | Example 27 | Example 28 | Example 29 |
| Solvent | Balance | Balance | Balance | Balance |

In the table, as Auxiliary solvent 2, diisopropyl adipate; and with regard to Solvent, as isoparaffin solvent, the mixed solvent of Isopar M and Isopar L in a weight ratio of 4:6 (Isopar M (trade name) and Isopar L (trade name) are both manufactured by Exxon Mobil Corporation) were used.

Reference Example 1 (Production of Insect Pest Controlling Formulation for Heat-transpiration)

An insect pest controlling formulation for heat-transpiration of Reference Example 1 was produced by mixing natural pyrethrin (content: 47.5%, 0.6% by mass as natural pyrethrin active ingredient) with 5.0% by mass of BHT, followed by mixing with a mixed solvent of Isopar M and Isopar L in a weight ratio of 4:6.

Reference Example 2 (Production of Insect Pest Controlling Formulation for Heat-transpiration)

An insect pest controlling formulation for heat-transpiration of Reference Example 2 was produced by mixing natural pyrethrin (content: 47.5%, 0.6% by mass as natural pyrethrin active ingredient) with 0.5% by mass of BHT, followed by mixing with a mixed solvent of Isopar M and Isopar L in a weight ratio of 4:6.

Examples 30 to 35, Comparative Example 6 (Production of Insect Pest Controlling Formulations for Heat-transpiration)

Insect pest controlling formulations for heat-transpiration of Examples 30 to 35 and Comparative Example 6 were produced by mixing natural pyrethrin (content: 47.5%, 0.6% by mass as natural pyrethrin active ingredient), 0.5% by mass of BHT (however, in Comparative Example 6, 1.0% by mass), and 0.5% by mass of the antioxidant shown in Table 5, followed by mixing with a mixed solvent of Isopar M and Isopar L in a weight ratio of 4:6 so that the compositions were those shown in Table 5.

[Table 5]

| Table 5 Compositions of Insect pest controlling formulations for heat-transpiration (%w/w) | | | | | | | |
|---|---|---|---|---|---|---|---|
| | Ex.30 | Ex.31 | Ex.32 | Ex.33 | Ex.34 | Ex.35 | Comparative Ex.6 |
| Natural pyrethrin (as amount of active ingredient) | 0.6 | 0.6 | 0.6 | 0.6 | 0.6 | 0.6 | 0.6 |
| BHT | 0.5 | 0.5 | 0.5 | 0.5 | 0.5 | 0.5 | 1.0 |
| Antioxidant 2 | 0.5 | | | | | | |
| Antioxidant 6 | | 0.5 | | | | | |
| Antioxidant 7 | | | 0.5 | | | | |
| Antioxidant 8 | | | | 0.5 | | | |
| Antioxidant 15 | | | | | 0.5 | | |
| Antioxidant 16 | | | | | | 0.5 | |
| Solvent | Bal. | Bal. | Bal. | Bal. | Bal. | Bal. | Bal. |

In the table, with regard to Solvent, as isoparaffin solvent, the mixed solvent of Isopar M and Isopar L in a weight ratio of 4:6 (Isopar M (trade name) and Isopar L (trade name) are both manufactured by Exxon Mobil Corporation) was used.

Examples 36 to 45 (Production of Compositions Containing Natural Pyrethrin)

Natural pyrethrin-containing compositions of Examples 36 to 45 were produced by mixing Natural pyrethrin

(content: 47.5%, 200 mg as natural pyrethrin active ingredient) and 150 mg of the antioxidant shown in Table 6 on an aluminum dish (diameter: 3.8 cm).

[Table 6]

| Table 6 Antioxidants contained in the natural pyrethrin-containing compositions | |
|---|---|
| Example No. | Antioxidant |
| Example 36 | Antioxidant 1 |
| Example 37 | Antioxidant 2 |
| Example 38 | Antioxidant 3 |
| Example 39 | Antioxidant 4 |
| Example 40 | Antioxidant 6 |
| Example 41 | Antioxidant 7 |
| Example 42 | Antioxidant 10 |
| Example 43 | Antioxidant 14 |
| Example 44 | Antioxidant 15 |
| Example 45 | Antioxidant 16 |

Comparative Example 7 (Production of Composition Containing Natural Pyrethrin)

A composition of Comparative Example 7 was produced by placing natural pyrethrin (content: 47.5%, 200 mg as natural pyrethrin active ingredient) on an aluminum dish (diameter: 3.8 cm).

Comparative Example 8 (Production of Composition Containing Natural Pyrethrin)

A composition of Comparative Example 8 was produced by mixing natural pyrethrin (content: 47.5%, 200 mg as natural pyrethrin active ingredient) and 150 mg of BHT on an aluminum dish (diameter: 3.8 cm).

Test Example 1 (Evaluation of Insect Pest Controlling Formulations for Heat-transpiration [Clay Wick])

Thirty-four grams (34 g) of Insect pest controlling formulation for heat-transpiration 1 obtained in Example 1 or 34 g of Insect pest controlling formulation for heat-transpiration 2 obtained in Example 1-2 were filled into a plastic container with a capacity of 45 mL, followed by inserting a porous liquid-absorbing wick (diameter: 7 mm, length: 73 mm, that obtained by firing silica, calcite, etc.

[clay]) that allows the upper part to be heated by a heater, through an inner stopper to obtain a bottle containing Insect pest controlling formulation for heat-transpiration 1 with liquid-absorbing wick or a bottle containing Insect pest controlling formulation for heat-transpiration 2 with liquid-absorbing wick.

The bottle was set in the heat-transpiring insecticidal device shown in Figure 1 and heated at a heater temperature of 140 °C. The heating method involved continuous heating for 8 hours, followed by stopping the heating for 16 hours, constituting one cycle (one day), and this cycle was repeated. In specific cycles up to 58 cycles (58 days) from the start of heating, the volatilization amount of natural pyrethrin during one hour, from 4 to 5 hours after the start of heating in the cycle, was measured. The test was conducted twice, and the volatilization amount of natural pyrethrin was taken as the average value of the two tests.

The volatilization amount of natural pyrethrin was determined by capturing the volatilized natural pyrethrin over time using a glass column filled with polyurethane sponge as an adsorbent, then extracting the polyurethane sponge with acetone, and quantitatively analyzing the amount of natural pyrethrin by high-performance liquid chromatography (absolute calibration curve method).

The results are shown in Table 7.

[Table 7]

| | Volatilization amount of natural pyrethrin per hour (μg) | | | | | | | | |
|---|---|---|---|---|---|---|---|---|---|
| | Day 1 | Day 3 | Day 7 | Day 14 | Day 21 | Day 29 | Day 35 | Day 45 | Day 58 |
| Insect pest controlling formulation for heat-transpiration 1 | 113 | 128 | 113 | 85 | 68 | 61 | 48 | 56 | 49 |
| Insect pest controlling formulation for heat-transpiration 2 | 131 | N.D. | 163 | 92 | 82 | 56 | 39 | 20 | 25 |

In the table, N.D. means not measured.

The insect pest controlling formulations for heat-transpiration of Examples 1 and 1-2, by containing a specific amount of a specific antioxidant, exhibit excellent volatilization amount of natural pyrethrin per hour and can maintain it for a long period.

The quantitative analysis of natural pyrethrin by high-performance liquid chromatography can be carried out under the analytical conditions described, for example, in "Separation and quantitative analysis of natural pyrethrins by high-performance liquid chromatography," Chromatographia, 1999, Vol. 50, pp. 607-610.

Test Example 2 (Evaluation of Formulations for Insect Pest Control Mat)

Two insect pest control mats produced in any of Examples 2, 3, Comparative Examples 1, and 2 (total amount of natural pyrethrin active ingredient: 200 mg per treatment area) were heated on a ceramic heater at 180°C, and the volatilization amount of natural pyrethrin during one hour between 3 and 4 hours after the start of heating was analyzed. The results are shown in Table 8.

[Table 8]

| Table 8 Volatilization amount of natural pyrethrin (mg/h) | | | |
|---|---|---|---|
| Volatilization amount (mg/h) | | | |
| Example 2 | Example 3 | Comparative Example 1 | Comparative Example 2 |
| 9.6 | 10.4 | 0.75 | 1.1 |

The formulations for insect pest control mat of Examples 2 and 3, by containing a specific amount of a specific antioxidant, are superior in volatilization amount of natural pyrethrin during one hour between 3 and 4 hours after the start of heating compared to Comparative Examples 1 and 2.

Test Example 3 (Evaluation of Compositions for Resin Formulation)

Natural pyrethrin and each antioxidant used in Examples 6, 7, and Comparative Example 3 were dissolved in appropriate amounts of acetone, followed by dropping onto a petri dish with a diameter of 4.5 cm so that the natural pyrethrin was 0.3 mg and the each antioxidant used in Examples 6, 7, and Comparative Example 3 was 0.03 mg, spreading uniformly, and then drying for 5 days to obtain the composition of the present invention.

The petri dish was placed in a plastic cup, covered with a lid, and ten female adult mosquitoes were released, and after the "KD evaluation time" described in Table 6 elapsed, the number of knocked down mosquitoes was counted to calculate knockdown rate. The knockdown rate (hereinafter referred to as KD rate) can be calculated by the following formula:

$$\text{KD rate (\%)} = (\text{number of knocked down insects} / \text{number of insects used for test}) \times 100$$

The results are shown in Table 9.

[Table 9]

| Table 9 Knockdown rate by compositions for resin formulation | | |
|---|---|---|
| | KD evaluation time | KD rate [%] |
| Example 4 | 90 minutes | 90% |
| Example 5 | 90 minutes | 90% |
| Comparative Example 3 | 90 minutes | 10% |

The compositions for resin formulation of Examples 4 and 5, by containing a specific amount of a specific antioxidant, are superior in knockdown rate of insect pests after a predetermined period of time compared to Comparative Example 3.

Test Example 4 (Evaluation of MUPs)

Solutions of MUPs of Examples 6 to 25 and Comparative Examples 4 and 5 were put in glass containers with a capacity of 2 mL, and the glass containers were set in a block heater heated to 90 °C. The block heater was covered with aluminum foil to shield the glass containers from light, followed by heating at 90°C for 14 days to obtain the samples.

The obtained samples were taken out from the glass containers and dissolved in tetrahydrofuran (THF), followed by measuring the amount of polymer component in the samples under the following analytical conditions. The Munsell values of the samples were also determined according to the appearance observation method described below.

Analytical Conditions

High-performance liquid chromatography (GPC)
Pump: LC-20A, manufactured by Shimadzu Corporation
Detector: refractive index detector RID-20A, manufactured by Shimadzu Corporation
Column: TSKgel G5000HHR (7.8 × 300 mm), manufactured by Tosoh Corporation × 2 (in series)
Guard column: TSKgel G5000HHR (6.0 × 40 mm), manufactured by Tosoh Corporation
Column temperature: 40°C
Eluent: Tetrahydrofuran
Flow rate: 1 mL/min

Appearance Observation Method

The samples heated at 90°C for 14 days were transferred to glass containers with a diameter of 1 cm without adding THF, visually observed from the side against a white background, and compared with the Munsell standard color chart.

The results are shown in Table 10.

[Table 10]

| Table 10 Appearance and increase in polymer component content of MUPs after storage | | |
|---|---|---|
| | Evaluation item | |
| | Munsell value (Hue Value/Chroma) (HV/C) | Increase in polymer component content (%) |
| Example 6 | 2.5YR 3/4 | 2.9 |
| Example 7 | 2.5YR 5/10 | 5.0 |
| Example 8 | 7.5YR 7/14 | 7.2 |
| Example 9 | 2.5YR 5/12 | 4.5 |
| Example 10 | 10R 4/10 | 1.9 |
| Example 11 | 5YR 7/12 | 5.9 |

(continued)

| Table 10 Appearance and increase in polymer component content of MUPs after storage | | |
|---|---|---|
| | Evaluation item | |
| | Munsell value (Hue Value/Chroma) (HV/C) | Increase in polymer component content (%) |
| Example 12 | 2.5YR 3/4 | 1.8 |
| Example 13 | 2.5YR 5/10 | 0.0 |
| Example 14 | 2.5YR 5/10 | 2.5 |
| Example 15 | 5YR 7/12 | 1.3 |
| Example 16 | 10R 4/10 | 6.2 |
| Example 17 | 10R 5/8 | 8.7 |
| Example 18 | 7.5YR 7/12 | 10.5 |
| Example 19 | 5YR 6/10 | 13.0 |
| Example 20 | 10R 5/10 | 10.7 |
| Example 21 | 10YR 8/12 | 14.5 |
| Example 22 | 10R 4/8 | 9.9 |
| Example 23 | 7.5YR 7/12 | 2.4 |
| Example 24 | 2.5YR 6/12 | 4.3 |
| Example 25 | 10YR 8/10 | 3.7 |
| Comparative Example 4 | 7.5YR 7/12 | 12.2 |
| Comparative Example 5 | 7.5YR 7/12 | 16.9 |

For the MUPs of Examples 6 to 25, by containing a specific amount of a specific antioxidant, increase in the polymer component content after being stored while heated at 90°C for 14 days was suppressed, compared to Comparative Examples 4 and 5. In other words, storage stability is improved. Furthermore, it was observed that MUPs containing citric acid tend to be even sperior in the above-mentined effects compared to those not containing citric acid. In addition, some antioxidants, by containing a specific amount of a specific antioxidant, can be confirmed to have the effect of suppressing deterioration in appearance such as coloration.

Test Example 5 (Evaluation of Insect Pest Controlling Formulations for Heat-transpiration [Ceramic Wick])

Thirty-four grams (34 g) of each of the insect pest controlling formulations for heat-transpiration obtained in Examples 26 to 29 were filled into a plastic container with a capacity of 45 mL, followed by inserting a porous liquid-absorbing wick (diameter: 7 mm, length: 73 mm, ceramic) that allows the upper part to be heated by a heater, through an inner stopper to obtain a bottle containing the insect pest controlling formulation for heat-transpiration with liquid-absorbing wick.

The bottle was set in the heat-transpiring insecticidal device shown in Figure 1 and heated at a heater temperature of 140 °C. The heating method involved continuous heating for 8 hours, followed by stopping the heating for 4 hours, constituting one cycle, and this cycle was repeated. In specific cycles up to 44 cycles from the start of heating, the volatilization amount of natural pyrethrin during one hour, from 4 to 5 hours after the start of heating in the cycle, was measured. The test was conducted twice, and the volatilization amount of natural pyrethrin was taken as the average value of the two tests.

The volatilization amount of natural pyrethrin was determined by capturing the volatilized natural pyrethrin over time using a glass column filled with polyurethane sponge as an adsorbent, then extracting the polyurethane sponge with acetone, and quantitatively analyzing the amount of natural pyrethrin by high-performance liquid chromatography (absolute calibration curve method).

The results are shown in Table 11.

[Table 11]

| | Volatilization amount of natural pyrethrin per hour (μg) | | | | | | |
|---|---|---|---|---|---|---|---|
| | Day 0 | Day 6 | Day 14 | Day 20 | Day 28 | Day 34 | Day 44 |
| Example 26 | 33 | 77 | 70 | 67 | 43 | 36 | 24 |
| Example 27 | 32 | 84 | 61 | 49 | 43 | 29 | 22 |
| Example 28 | 32 | 84 | 89 | 77 | 73 | 72 | 43 |
| Example 29 | 34 | 87 | 88 | 77 | 70 | 56 | 30 |

Test Example 6 (Evaluation of Insect Pest Controlling Formulations for Heat-transpiration [Ceramic Wick] 2)

Thirty-four grams (34 g) of each of the insect pest controlling formulations for heat-transpiration obtained in Examples 30 to 35 and Comparative Example 6 were filled into a plastic container with a capacity of 45 mL, followed by inserting a porous liquid-absorbing wick (diameter: 7 mm, length: 73 mm, ceramic) that allows the upper part to be heated by a heater, through an inner stopper to obtain a bottle containing the insect pest controlling formulation for heat-transpiration with liquid-absorbing wick.

The bottle was set in the heat-transpiring insecticidal device shown in Figure 1 and heated at a heater temperature of 140 °C. The heating method involved continuous heating for 8 hours, followed by stopping the heating for 4 hours, constituting one cycle, and this cycle was repeated. After conducting 20 cycles from the start of heating (total heating time: 160 hours), the molecular weight (polystyrene equivalent) of the polymer generated on the heated portion of the porous liquid-absorbing wick was measured by high-performance liquid chromatography (GPC) in accordance with a method described in Polymer Analysis Conditions.

[Polymer Analysis Conditions 1]

High-performance liquid chromatography (GPC)
Pump: LC-20AD, manufactured by Shimadzu Corporation
Detector: Photodiode array detector SPD-M20A, manufactured by Shimadzu Corporation
Detection wavelength: 254 nm
Column: Shim-pack GPC-803 (8.0 mm ID × 300 mm), manufactured by Shimadzu Corporation, Shim-pack GPC-804 (8.0 mm ID × 300 mm), manufactured by Shimadzu Corporation (in series)
Guard column: GPC-800P (4.6 × 10 mm), manufactured by Shimadzu Corporation
Column temperature: 40°C
Eluent: Tetrahydrofuran
Flow rate: 1 mL/min

The results are shown in Table 12.

[Table 12]

| | Molecular weight (polystyrene equivalent) |
|---|---|
| Example 30 | 1502 |
| Example 31 | 1378 |
| Example 32 | 6109 |
| Example 33 | 1449 |
| Example 34 | 2387 |
| Example 35 | 8598 |
| Comparative Example 6 | 9015 |

Test Example 7 (Evaluation of Natural Pyrethrin-containing Compositions)

The aluminum dishes, on which the natural pyrethrin-containing compositions had been placed, obtained in Examples 36 to 45 and Comparative Examples 7 and 8 were heated on a ceramic heater at 180°C for one hour. The molecular weights (polystyrene equivalent) of the polymers generated on the aluminum dishes were measured by high-performance liquid chromatography (GPC) in accordance with the method described in Polymer Analysis Conditions.
The results are shown in Table 13.

[Table 13]

| Example No. | Molecular weight (polystyrene equivalent) |
|---|---|
| Example 36 | 2418 |
| Example 37 | 2806 |
| Example 38 | 2201 |
| Example 39 | 2599 |
| Example 40 | 1891 |
| Example 41 | 1812 |
| Example 42 | 1796 |
| Example 43 | 1931 |
| Example 44 | 4224 |
| Example 45 | 2583 |
| Comparative Example 7 | 8867 |
| Comparative Example 8 | 5489 |

Test Example 8 (Evaluation of Insect Pest Controlling Formulations for Heat-transpiration)

Forty-five milliliters (45 mL) of Insect pest controlling formulation for heat-transpiration 1 obtained in Example 1 was filled into a plastic container with a capacity of 45 mL, followed by inserting a porous liquid-absorbing wick (diameter: 7 mm, length: 73 mm, that obtained by firing silica, calcite, etc. [clay]) that allows the upper part to be heated by a heater, through an inner stopper to obtain a bottle containing Insect pest controlling formulation for heat-transpiration 1 with liquid-absorbing wick.
The bottle was set in the heat-transpiring insecticidal device shown in Figure 1 and heated at a heater temperature of 140 °C. The heating method involved continuous heating for 8 hours, followed by stopping the heating for 16 hours, constituting one cycle (one day), and this cycle was repeated. In specific cycles up to 60 cycles (60 days) from the start of heating, the KD rate for that cycle (after the elapsed cumulative days of use) was determined by the following method.
Twenty female adult common house mosquitoes (Culex pipiens pallens) were released in a glass tube with a diameter of 4.5 cm and a height of 12 cm, and 16-mesh nylon nets were fixed on the top and bottom open ends of the glass tube using rubber bands to keep them inside. A metal cylinder with a diameter of 22 cm and a height of 83 cm was set upright, and two of the aforementioned glass tubes containing common house mosquitoes were fixed upright to the top opening.
The bottle was set in the heat-transpiring insecticidal device shown in Figure 1 and placed at the bottom opening of the metal cylinder, then heated at a heater temperature of 140°C. Thirty minutes later, the number of knocked down common house mosquitoes was recorded, and the knockdown rate (hereinafter referred to as KD rate) was calculated. The KD rate can be calculated by the following formula:

KD rate (%) = (number of knocked down insects / number of insects used for test) $\times$ 100

The test was conducted twice, and the KD rate was taken as the average value of the two tests.
The results are shown in Table 14.

[Table 14]

| Cumulative days of use (days) | Cumulative hours of use (hours) | KD rate (%) | |
|---|---|---|---|
| | | Example 1 | Comparative Example 9 |
| 0 | 0 | 100 | 100 |
| 22 | 176 | 100 | 60.0 |
| 45 | 360 | 100 | 22.5 |
| 60 | 480 | 100 | 27.5 |

[Industrial Applicability]

According to the present invention, it is possible to provide a novel composition containing natural pyrethrin, which has excellent maintenance of insect pest controlling effects or storage stability.

[Explanation of References]

1: Solution containing composition for heat-transpiration
2: Heating element
3: liquid-absorbing wick
4: Chemical liquid bottle
10: Hot plate
11: Insect pest control mat
12: Power switch
13: Case
20: Case
21: Inner member
22: Outer member
23, 24: Opening
25: Resin formulation
26: Hook

## Claims

**1.** A composition comprising natural pyrethrin and one or more phosphorus-based antioxidants selected from Group P or one or more sulfur-based antioxidant selected from Group S:

Group P is a group consisting of a compound represented by Formula (1)

[Chemical 1]

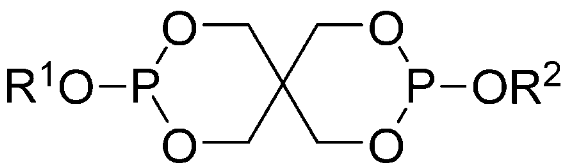

(1)

[In the formula, $R^1$ and $R^2$ are identical to or different from each other, and each represents a C9-C14 alkyl group.], 3,9-bis(2,4-di-tert-butylphenoxy)-2,4,8,10-tetraoxa-3,9-diphosphaspiro[5.5]undecane, tris(nonylphenyl) phosphite, triphenyl phosphite, tetrakis(2,4-di-tert-butylphenyl) 4,4'-biphenylenediphosphinate, tridodecyl trithiophosphite, triisodecyl phosphite, diphenyl isodecyl phosphite, 4,4'-butylidenebis(3-methyl-6-tert-butylphenyl ditridecyl phosphite), and tetra(C12-15 alkyl)-4,4'-isopropylidenediphenyldiphosphite;
Group S is a group consisting of pentaerythritol tetrakis[3-(dodecylthio)propionate], 2-mercaptobenzimidazole,

2, 4-bis(dodecylthio)methyl]-6-methylphenol, and didodecyl 3,3'-thiodipropionate.

2. The composition according to claim 1, wherein Group P is a group consisting of 3,9-bis(isodecyloxy)-2,4,8,10-tetraoxa-3,9-diphosphaspiro[5.5]undecane, 3,9-bis(isotridecyloxy)-2,4,8,10-tetraoxa-3,9-diphosphaspiro[5.5]undecane, 3,9-bis(2,4-di-tert-butylphenoxy)-2,4,8,10-tetraoxa-3,9-diphosphaspiro[5.5]undecane, tris(nonylphenyl) phosphite, triphenyl phosphite, tetrakis(2,4-di-tert-butylphenyl) 4,4'-biphenylenediphosphinate, tridodecyl trithiophosphite, triisodecyl phosphite, diphenyl isodecyl phosphite, 4,4'-butylidenebis(3-methyl-6-tert-butylphenyl ditridecyl phosphite), and tetra(C12-15 alkyl)-4,4'-isopropylidenediphenyldiphosphite.

3. The composition according to claim 1 or 2, comprising a phenolic antioxidant.

4. The composition according to claim 1, wherein the one or more phosphorus-based antioxidants selected from Group P or the one or more sulfur-based antioxidants selected from Group S are one or more phosphorus-based antioxidants selected from Group $P^L$:
Group $P^L$ is a group consisting of triisodecyl phosphite, diphenyl isodecyl phosphite, and 4,4'-butylidenebis(3-methyl-6-tert-butylphenyl ditridecyl phosphite).

5. The composition according to claim 4, comprising a phenolic antioxidant.

6. An insect pest controlling formulation for heat-transpiration, comprising the composition according to claim 4 and a paraffinic solvent.

7. A method for controlling mosquitoes, using the composition according to claim 4 or 5 or the insect pest controlling formulation for heat-transpiration according to claim 6.

8. The composition according to claim 1, wherein the one or more phosphorus-based antioxidants selected from Group P or the one or more sulfur-based antioxidants selected from Group S are one or more phosphorus-based antioxidants selected from Group $P^M$:
Group $P^M$ is a group consisting of triisodecyl phosphite, diphenyl isodecyl phosphite, 4,4'-butylidenebis(3-methyl-6-tert-butylphenyl ditridecyl phosphite), and tetra(C12-15 alkyl)-4,4'-isopropylidenediphenyldiphosphite.

9. The composition according to claim 8, comprising a phenolic antioxidant.

10. The composition according to claim 1, wherein the one or more phosphorus-based antioxidants selected from Group P or the one or more sulfur-based antioxidants selected from Group S are the compound represented by Formula (1).

11. The composition according to claim 1, wherein the one or more phosphorus-based antioxidants selected from Group P or the one or more sulfur-based antioxidants selected from Group S are 3,9-bis(isodecyloxy)-2,4,8,10-tetraoxa-3,9-diphosphaspiro[5.5]undecane or 3,9-bis(isotridecyloxy)-2,4,8,10-tetraoxa-3,9-diphosphaspiro[5.5]undecane.

12. The composition according to claim 1, wherein the one or more phosphorus-based antioxidants selected from Group P or the one or more sulfur-based antioxidants selected from Group S are one or more phosphorus-based antioxidants selected from Group $P^U$ or one or more sulfur-based antioxidants selected from Group S:
Group $P^U$ is a group consisting of 3,9-bis(isodecyloxy)-2,4,8,10-tetraoxa-3,9-diphosphaspiro[5.5]undecane, 3,9-bis(2,4-di-tert-butylphenoxy)-2,4,8,10-tetraoxa-3,9-diphosphaspiro[5.5]undecane, tris(nonylphenyl) phosphite, triphenyl phosphite, tetrakis(2,4-di-tert-butylphenyl) 4,4'-biphenylenediphosphinate, and tridodecyl trithiophosphite.

13. The composition according to claim 12, wherein the one or more phosphorus-based antioxidants selected from Group P or the one or more sulfur-based antioxidants selected from Group S are one or more phosphorus-based antioxidants selected from Group $P^U$.

14. The composition according to claim 12, wherein the one or more phosphorus-based antioxidants selected from Group P or the one or more sulfur-based antioxidants selected from Group S are one or more sulfur-based antioxidants selected from Group S.

15. The composition according to claim 14, wherein the one or more sulfur-based antioxidants selected from Group S are pentaerythritol tetrakis[3-(dodecylthio)propionate], 2-mercaptobenzimidazole, or 2,4-bis[(dodecylthio)methyl]-6-methylphenol.

**16.** The composition according to any one of claims 12 to 15, comprising a phenolic antioxidant.

**17.** The composition according to any one of claims 12 to 15, comprising citric acid.

**18.** The composition according to claim 16, comprising citric acid.

[Figure 1]

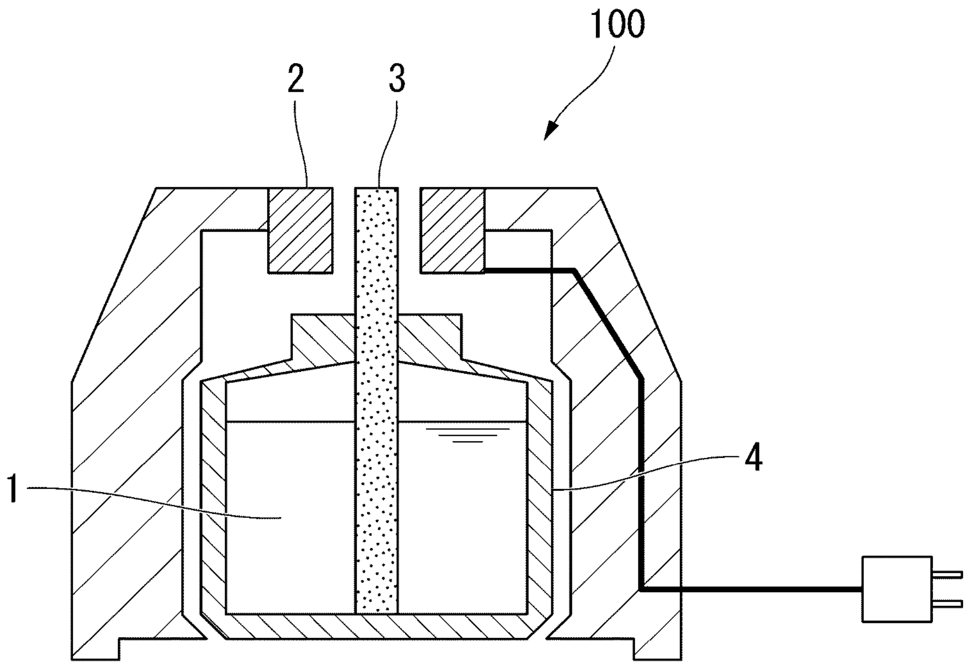


[Figure 2]

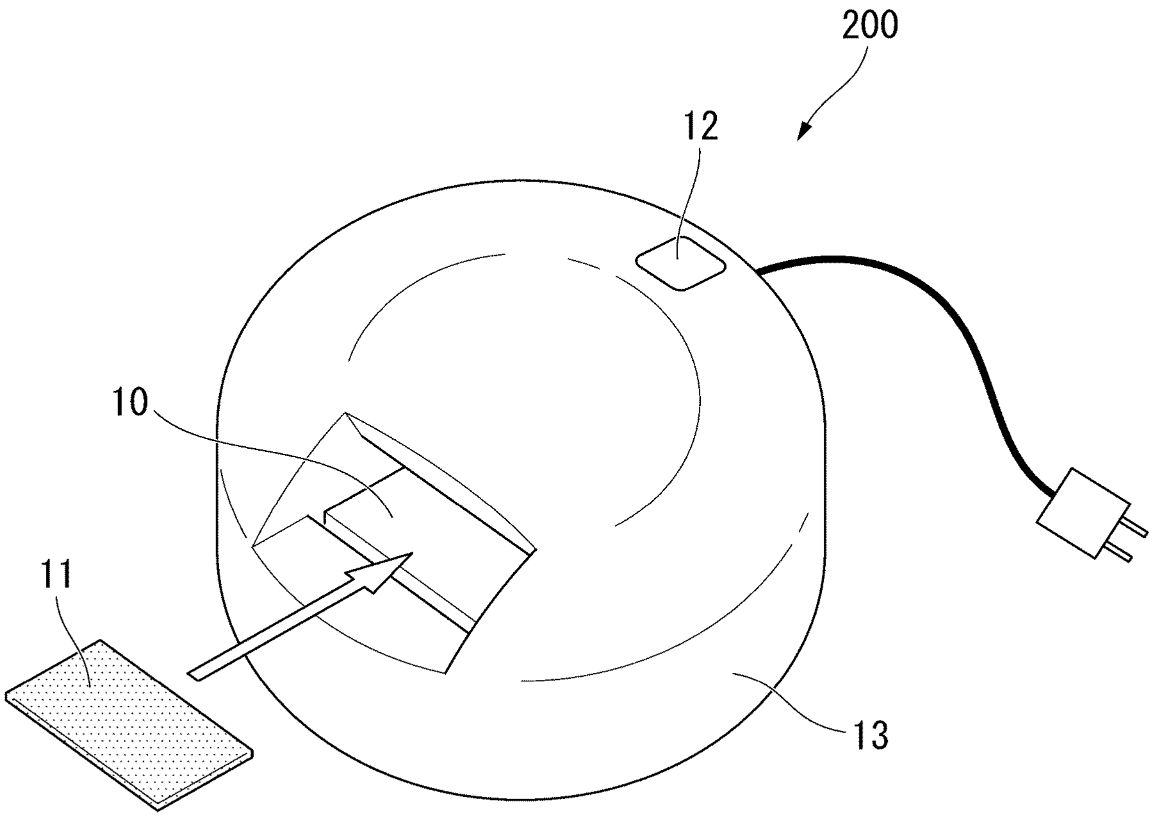

[Figure 3]

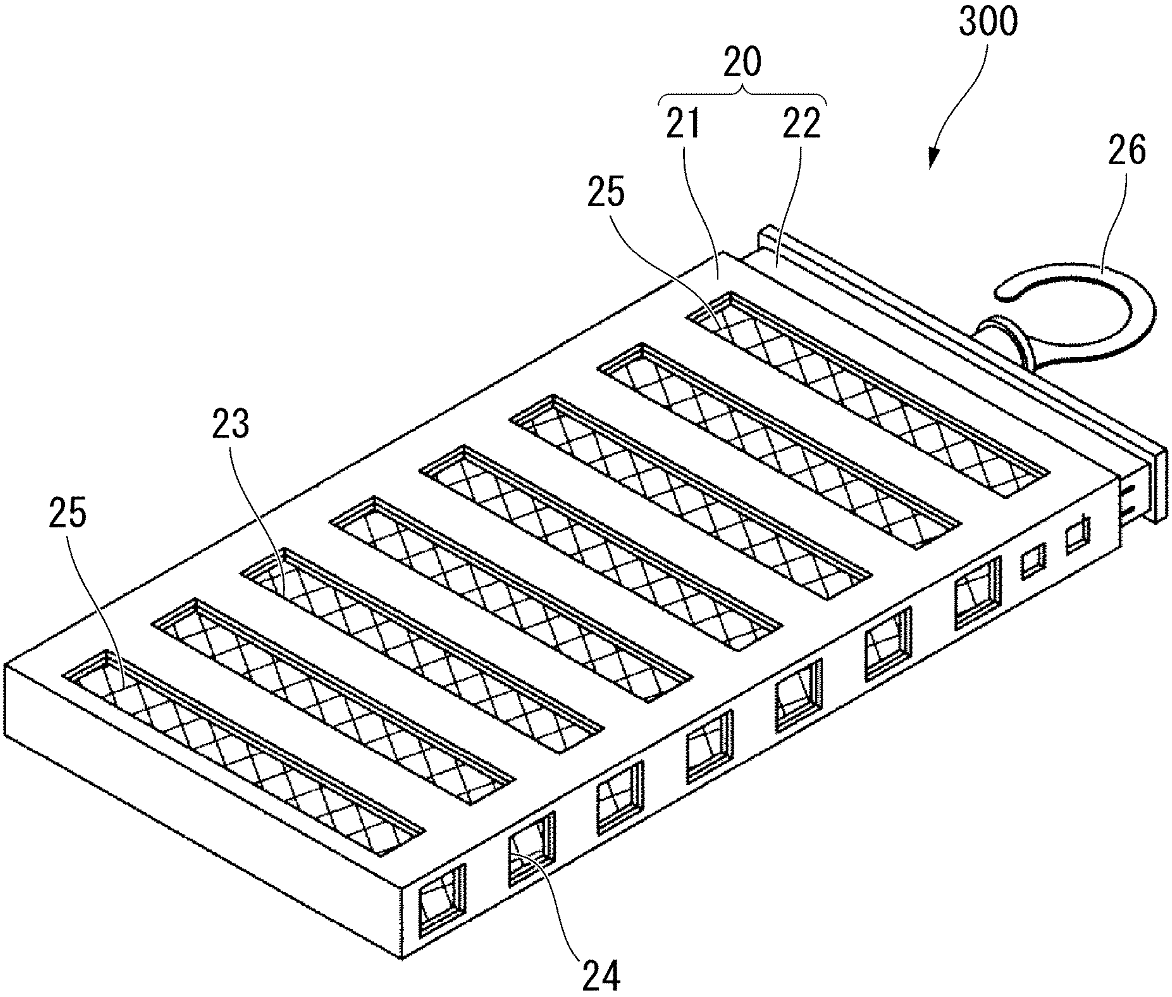

## INTERNATIONAL SEARCH REPORT

International application No.
**PCT/JP2024/023373**

**A. CLASSIFICATION OF SUBJECT MATTER**

***A01N 53/10***(2006.01)i; ***A01M 1/20***(2006.01)i; ***A01N 25/18***(2006.01)i; ***A01N 25/22***(2006.01)i; ***A01P 7/04***(2006.01)i; ***C07C 69/747***(2006.01)i
FI: A01N53/10 210; A01P7/04; A01N25/18 103A; A01M1/20 P; A01N25/22; A01N25/18 103; C07C69/747 K

According to International Patent Classification (IPC) or to both national classification and IPC

**B. FIELDS SEARCHED**

Minimum documentation searched (classification system followed by classification symbols)

A01N53/10; A01M1/20; A01N25/18; A01N25/22; A01P7/04; C07C69/747

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br><br>A | US 2013/0324604 A1 (LONG, Lina) 05 December 2013 (2013-12-05)<br>claims, paragraphs [0003]-[0007], [0014], [0026], FIG. 1-3 | 1-3, 14, 16<br><br>4-13, 15, 17-18 |
| X<br><br>A | US 2013/0323292 A1 (LONG, Lina) 05 December 2013 (2013-12-05)<br>claims, paragraphs [0004]-[0007], [0029]-[0035], fig. 1-7 | 1-3, 14, 16<br><br>4-13, 15, 17-18 |
| A | JP 2021-102661 A (SUMITOMO CHEMICAL COMPANY, LIMITED) 15 July 2021 (2021-07-15)<br>entire text, all drawings, particularly, claim 1, paragraph [0049] | 1-18 |
| A | CN 109090130 A (JI, Jian) 28 December 2018 (2018-12-28)<br>entire text, all drawings, particularly, claims, paragraphs [0010]-[0011] | 1-18 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 August 2024** | **10 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

**INTERNATIONAL SEARCH REPORT**

International application No.
**PCT/JP2024/023373**

**C. DOCUMENTS CONSIDERED TO BE RELEVANT**

| Category* | Citation of document, with indication, where appropriate, of the relevant passages | Relevant to claim No. |
|---|---|---|
| A | JP 11-323008 A (NIPPON CARBIDE KOGYO KABUSHIKI KAISHA) 26 November 1999 (1999-11-26)<br>entire text, all drawings | 1-18 |

Form PCT/ISA/210 (second sheet) (July 2022)

**INTERNATIONAL SEARCH REPORT**
**Information on patent family members**

International application No.
**PCT/JP2024/023373**

| Patent document cited in search report | Publication date (day/month/year) | Patent family member(s) | Publication date (day/month/year) |
|---|---|---|---|
| US 2013/0324604 A1 | 05 December 2013 | (Family: none) | |
| US 2013/0323292 A1 | 05 December 2013 | (Family: none) | |
| JP 2021-102661 A | 15 July 2021 | (Family: none) | |
| CN 109090130 A | 28 December 2018 | (Family: none) | |
| JP 11-323008 A | 26 November 1999 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023109574 A
- JP 2023143206 A
- WO 2022220294 A
- JP 52012106 B
- JP SHO5845670 U
- JP 2012176947 A


### Non-patent literature cited in the description


- **ADNANE. H. ALAIN, C** ; **CHANTAL, B**. The Production of Pyrethrins by Plant Cell and Tissue Cultures of Chrysanthemum cinerariaefolium and Tagetes Species. *Critical Reviews in Plant Sciences*, 2000, vol. 19 (1), 69-89
- Insecticidal phytochemicals. **KUDAKASSERIL, G. J.** ; **STABA, E. J**. Cell Culture and Somatic Cell Genetics of Plants. Academic Press, 1988, 537-552
- **JOHN E. CASIDA** ; **GARY B. QUISTAD.** PYRETHRUM FLOWERS, Production, Chemistry, Toxicology, and Uses. Oxford University Press, 1995, 123-125
- Separation and quantitative analysis of natural pyrethrins by high-performance liquid chromatography. *Chromatographia*, 1999, vol. 50, 607-610